# EUROPEAN PATENT APPLICATION

(11) **EP 4 733 131 A1**
(43) Date of publication of application: **29.04.2026**
(21) Application number: 24831971.7
(22) Date of filing: 26.06.2024
(51) Int. Cl.: B60N 2/01, B60N 2/02, B60N 2/08, B60N 2/12, B60N 2/14, B60N 2/30, B60N 2/36

(54) **VEHICLE SEAT**

(30) Priority: 26.06.2023 US 202363510174 P; 31.07.2023 US 202363516558 P; 01.02.2024 US 202463548642 P; 21.02.2024 US 202463555983 P; 29.02.2024 US 202463559564 P; 21.06.2024 JP 2024100635; 21.06.2024 JP 2024100636; 21.06.2024 JP 2024100637; 21.06.2024 JP 2024100638; 21.06.2024 JP 2024100639
(71) Applicant: TS Tech Co., Ltd., Asaka-shi, Saitama 351-0012 (JP)
(72) Inventor: KURIMOTO, Tomoyuki, Shioya-gun, Tochigi 329-1217 (JP); MIYOSHI, Akira, Shioya-gun, Tochigi 329-1217 (JP)
(74) Representative: Weickmann & Weickmann PartmbB
(86) International application number: PCT/JP2024/023109
(87) International publication number: WO 2025/005111

(57) **Abstract**

A vehicle seat includes a first seat having a first seat cushion and a first seat back, and a second seat having a second seat cushion and a second seat back, and arranged diagonally behind the first seat. A rear end portion of the first seat cushion is positioned behind a front end portion of the second seat cushion, the first seat cushion and the second seat cushion each has a pair of left and right side end portions, an end face of a first side end portion on one side in a left-right direction, the first side end portion being on a side of the second seat and being one of the pair of left and right side end portions of the first seat cushion, is positioned on the one side in the left-right direction relative to an end face of a second side end portion on the other side in the left-right direction, the second side end portion being on a side of the first seat and being one of the pair of left and right side end portions of the second seat cushion, and at least one of a rear end portion of the first side end portion and a front end portion of the second side end portion includes a relief portion so as to prevent an interference between the first side end portion and the second side portion.

## Description

### TECHNICAL FIELD

The present invention relates to a vehicle seat.

### BACKGROUND ART

Conventionally, there is a known seat in which a recess is formed in a front central part of a seat cushion of a seat arranged behind a driver's seat and extends rearward (see, for example, Patent Literature 1). In the seat described in Patent Literature 1, a pair of left and right seat cushion parts are provided on both sides of the recess in the lateral direction of the seat cushion, allowing a passenger to sit thereon.

### CITATION LIST

### PATENT LITERATURE

Patent Literature 1: Japanese Unexamined Patent Publication No. 2008-149823

### DISCLOSURE OF INVENTION

### PROBLEMS TO BE SOLVED BY THE INVENTION

Incidentally, there is a need to construct a compact vehicle by ensuring sufficient seating space for passengers on both sides while minimizing the lateral dimensions, especially in case where there is a high frequency of single occupancy in the driver's seat but the possibility of a passenger in the front passenger seat also exists. However, the seat configuring described in Patent Literature 1 cannot satisfy such a need.

### MEANS FOR SOLVING THE PROBLEMS

An aspect of the present invention is a vehicle seat having a seat cushion and a seat back and mounted on a vehicle, the vehicle seat including a first seat having a first seat cushion and a first seat back, and a second seat having a second seat cushion and a second seat back, and arranged diagonally behind the first seat. A rear end portion of the first seat cushion is positioned behind a front end portion of the second seat cushion, the first seat cushion and the second seat cushion each has a pair of left and right side end portions, an end face of a first side end portion on one side in a left-right direction, the first side end portion being on a side of the second seat and being one of the pair of left and right side end portions of the first seat cushion, is positioned on the one side in the left-right direction relative to an end face of a second side end portion on the other side in the left-right direction, the second side end portion being on a side of the first seat and being one of the pair of left and right side end portions of the second seat cushion, and at least one of a rear end portion of the first side end portion and a front end portion of the second side end portion includes a relief portion so as to prevent an interference between the first side end portion and the second side portion.

### EFFECT OF THE INVENTION

According to the present invention, it is possible to configure a vehicle in a compact size by reducing a dimension in left-right direction while ensuring sufficient seating space for left and right occupants.

### BRIEF DESCRIPTION OF THE DRAWINGS

[FIG. 1A] FIG. 1A is a plan view showing the schematic configuration of a compact vehicle equipped with a vehicle seat according to an embodiment of the present invention.
[FIG. 1B] FIG. 1B is a side view showing a schematic configuration of a compact vehicle equipped with a vehicle seat according to an embodiment of the present invention.
[FIG. 2] FIG. 2 is a perspective view of the passenger seat in FIG. 1, as seen from the left front diagonal.
[FIG. 3] FIG. 3 is a plan view showing the schematic configuration of the compact vehicle with the auxiliary seat stowed.
[FIG. 4A] FIG. 4A is a plan view showing a schematic configuration of a compact vehicle, which is a modified example of FIG. 1A.
[FIG. 4B] FIG. 4B is a diagram showing another modified example of FIG. 1A.
[FIG. 5] FIG. 5 is a block diagram showing the control configuration for the sliding operation of the vehicle seat according to an embodiment of the present invention.
[FIG. 6A] FIG. 6A is a plan view showing an example of a relief portion provided in a vehicle seat according to an embodiment of the present invention, which differs from the relief portion in FIG. 1A.
[FIG. 6B] FIG. 6B is a cross-sectional view along line VI-VI in FIG. 6A.
[FIG. 7A] FIG. 7A is a side view schematically showing the overall configuration of a rotating seat as a vehicle seat according to an embodiment of the present invention, and a view showing the use posture of the rotating seat.
[FIG. 7B] FIG. 7B is a plan view schematically showing the overall configuration of the rotating seat as a vehicle seat according to an embodiment of the present invention, illustrating the use posture of the rotating seat.
[FIG. 8] FIG. 8 is a cross-sectional view along line VIII-VIII in FIG. 7A.
[FIG. 9A] FIG. 9A is a side view showing the non-use posture of the rotating seat in FIG. 7A.
[FIG. 9B] FIG. 9B is a plan view showing the non-use posture of the rotating seat in FIG. 7B.
[FIG. 10] FIG. 10 is a plan view showing the disposition of seats in the vehicle in which the rotating is mounted.
[FIG. 11] FIG. 11 is a perspective view schematically showing the overall configuration of a vehicle seat with a vibrator according to an embodiment of the present invention.
[FIG. 12] FIG. 12 is a cross-sectional view along line XII-XII in FIG. 11.
[FIG. 13] FIG. 13 is a cross-sectional view along line XIII-XIII in FIG. 12.
[FIG. 14] FIG. 14 is a diagram showing an example of operation of the vibrator-equipped seat of FIG. 11.
[FIG. 15] FIG. 15 is a schematic diagram showing an example of operation when using a magnet mount with impact-hardening properties.
[FIG. 16A] FIG. 16A is a plan view schematically showing the configuration of the passenger transport mode of an air vehicle to which the vehicle seat according to an embodiment of the present invention is applied.
[FIG. 16B] FIG. 16B is a side view schematically showing the configuration of the passenger transport mode of the air vehicle to which the vehicle seat according to an embodiment of the present invention is applied.
[FIG. 17] FIG. 17 is an enlarged schematic diagram showing the main component configuration of the front end portion of the rotating frame in FIG. 16A.
[FIG. 18A] FIG. 18A is a front view showing the flight position of the air vehicle.
[FIG. 18B] FIG. 18B is a front view showing the landing position of the air vehicle.
[FIG. 19A] FIG. 19A is a plan view schematically showing the configuration of the air vehicle in cargo transport mode.
[FIG. 19B] FIG. 19B is a side view schematically showing the configuration of the air vehicle in cargo transport mode.
[FIG. 20] FIG. 20 is a diagram showing the schematic configuration of the management system controlling the air vehicle's flight.
[FIG. 21] FIG. 21 is a block diagram showing the main components of the flight control device included in the management system of FIG. 20.
[FIG. 22A] FIG. 22A is a schematic diagram showing an example of the air vehicle's operation.
[FIG. 22B] FIG. 22Bis a schematic diagram showing another example of the air vehicle's operation.
[FIG. 23] FIG. 23 is a front view showing the schematic configuration of a ventilation-adjustment vehicle seat according to an embodiment of the present invention.
[FIG. 24] FIG. 24 is a cross-sectional view along line A-A in FIG. 23.
[FIG. 25A] FIG. 25A is a front view of the front plate of FIG. 24.
[FIG. 25B] FIG. 25B is a cross-sectional view along line A-A in FIG. 25A.
[FIG. 26A] FIG. 26A is a front view of the rear plate of FIG. 24.
[FIG. 26B] FIG. 26B is a cross-sectional view along line A-A in FIG. 26A.
[FIG. 27A] FIG. 27A is a front view of the rear portion of the seat back of the vehicle seat shown in FIG. 23, comprising the linear member in its non-heated state.
[FIG. 27B] FIG. 27B is a cross-sectional view along line A-A in FIG. 27A.
[FIG. 28A] FIG. 28A is a front view of the rear surface of the seat back in the heated state of the linear member constituting the vehicle seat of FIG. 23.
[FIG. 28B] FIG. 28B is a cross-sectional view along line A-A in FIG. 28A.
[FIG. 29] FIG. 29 is a flowchart showing an example of processing executed by the ECU of FIG. 24.
[FIG. 30] FIG. 30 is a side view showing the schematic configuration of a vehicle seat configured to allow changing the height and inclination angle of the seat cushion.
[FIG. 31] FIG. 31 is a plan view showing the schematic configuration of a vehicle seat configured to allow adjustment of the seat cushion height and tilt angle.
[FIG. 32] FIG. 32 is an enlarged view of the main part of FIG. 31.
[FIG. 33] FIG. 33 is a cross-sectional view along line A-A in FIG. 31.
[FIG. 34] FIG. 34 is a block diagram showing the configuration of a control device that controls the operation of the support portion in FIG. 1.
[FIG. 35] FIG. 35 is a side view showing the hip-up posture of the vehicle seat of FIG. 30.
[FIG. 36] FIG. 36 is a side view showing the relaxing posture of the vehicle seat in FIG. 30.
[FIG. 37] FIG. 37 is a side view showing the dive-down posture of the vehicle seat in FIG. 30.
[FIG. 38] FIG. 38 is a flowchart showing an example of processing by the ECU in FIG. 34.
[FIG. 39] FIG. 39 is a flowchart showing another example of processing by the ECU in FIG. 34.
[FIG. 40] FIG. 40 is a side view showing the general configuration of a vehicle configured to allow easy change of the seat position.
[FIG. 41] FIG. 41 is a plan view schematically showing the front main structure of a vehicle configured to allow easy change of the seat position.
[FIG. 42] FIG. 42 is a side view showing an example of a support part supporting a vehicle seat mounted in the vehicle of FIGS. 40 and 41.
[FIG. 43] FIG. 43 is a side view showing an example of a hip-up posture, which is one type of posture change for the vehicle seat.
[FIG. 44] FIG. 44 is a side view showing a relaxing posture, which is another example of a posture change for the vehicle seat.
[FIG. 45A] FIG. 45A is a plan view of an operation pedal provided in the vehicle of FIG.s 40 and 41.
[FIG. 45B] FIG. 45B is a cross-sectional view along line B-B in FIG. 45A.
[FIG. 46A] FIG. 46A is a plan view schematically showing the configuration related to the running operation of the vehicle of FIGS. 40 and 41.
[FIG. 46B] FIG. 46B is a side view of the right front wheel of the vehicle shown in FIGS. 40 and 41, viewed from the left.
[FIG. 47A] FIG. 47A is a plan view showing an example using an in-wheel motor in place of the travel motor in FIG. 46A.
[FIG. 47B] FIG. 47B is a plan view showing a modified example of FIG. 47A.
[FIG. 48] FIG.48 is a block diagram showing the configuration of a control device that controls the seat mode of the seat mounted on the vehicle of FIGS. 40 and 41.
[FIG. 49] FIG. 49 is a side view of the vehicle showing an intermediate state when the seat posture changes from the normal posture to the immersion posture.
[FIG. 50A] FIG. 50A is a side view of the vehicle showing the immersion posture.
[FIG. 50B] FIG. 50B is a plan view of the vehicle showing the immersion posture.
[FIG. 51] FIG. 51 is a plan view of a vehicle showing a modified example of FIG. 50B.
[FIG. 52A] FIG. 52A is a side view of the vehicle showing the state with the B-pillar added to FIG. 40.
[FIG. 52B] FIG. 52B is a side view of the vehicle showing the state with the B-pillar added to FIG. 49.
[FIG. 52C] FIG. 52C is a side view of a vehicle showing the state with a B-pillar added to FIG. 50A.
[FIG. 53] FIG. 53 is a side view showing the schematic configuration of a vehicle seat capable of changing seat position without using a linkage mechanism.
[FIG. 54] FIG. 54 is a cross-sectional view along line A-A in FIG. 53.
[FIG. 55] FIG. 55 is a perspective view schematically showing the main components of the lower slide mechanism included in the support part of FIG. 53.
[FIG. 56A] FIG. 56A is a side view schematically showing the configuration of the support part in FIG. 53.
[FIG. 56B] FIG. 56B is a diagram showing a modified example of FIG. 56A.
[FIG. 57A] FIG. 57A is a schematic side view showing a configuration where a pair of inclined surfaces of the support member have an upward gradient toward the rear.
[FIG. 57B] FIG. 57B is a schematic side view showing a configuration where a pair of inclined surfaces of the support part have a downward slope toward the rear.
[FIG. 58] FIG. 58 is a block diagram showing the configuration of the seat control device that controls the operation of the vehicle seat shown in FIG. 53.
[FIG. 59A] FIG. 59A is a side view showing an example of the vehicle seat in the raised position.
[FIG. 59B] FIG. 59B is a side view showing an example of the vehicle seat in the lowered position.
[FIG. 59C] FIG. 59C is a side view showing an example of the vehicle seat in the forward position.
[FIG. 60] FIG. 60 is a side view showing an example of a vehicle seat in a relaxing posture.
[FIG. 61A] FIG. 61A is a side view showing an example of a vehicle seats arranged in two rows, front and rear where each seat is in normal posture.
[FIG. 61B] FIG. 61B is a side view showing an example of a vehicle seats arranged in two rows, front and rear where each seat is in relaxing posture.
[FIG. 62] FIG. 62 is a side view schematically showing the main structure of a vehicle equipped with the vehicle seat of FIG. 53.
[FIG. 63] FIG. 63 is a front view showing a schematic representation of the main structure of the vehicle equipped with the vehicle seat of FIG. 53.
[FIG. 64] FIG. 64 is a plan view showing an example of a lid for the opening of the recess in FIG. 62.
[FIG. 65] FIG. 65 is a diagram showing a modified example of FIG. 62.
[FIG. 66] FIG. 66 is a diagram showing a modified example of FIG. 63.
[FIG. 67] FIG. 67 is a diagram showing the state where the thigh bar angle of the vehicle seat in FIGS. 65 and 66 is increased.

### DESCRIPTION OF EMBODIMENT

An embodiment of the present invention is explained with reference to the drawings in the following. The vehicle seat according to an embodiment of the present invention can be applied to various vehicles, but the following describes an example applied to a vehicle, particularly a compact vehicle where miniaturization is required.

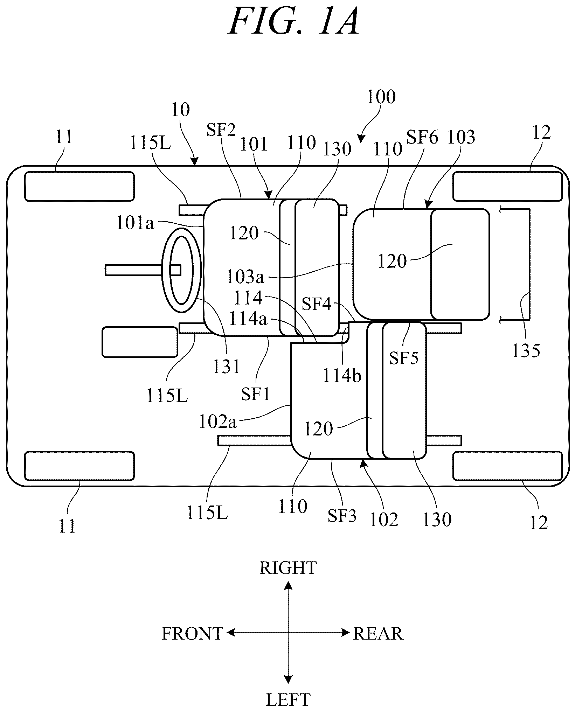

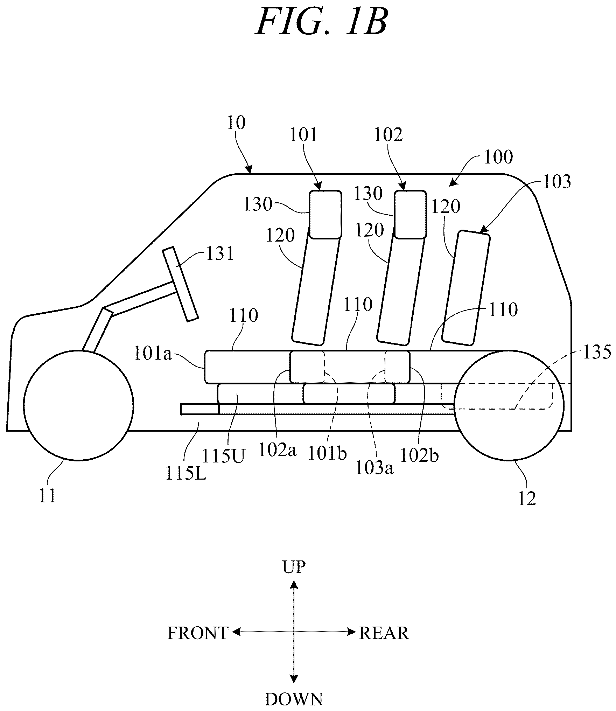

FIG. 1A is a plan view showing a schematic configuration of a compact vehicle 10 equipped with a vehicle seat 100 according to an embodiment of the present invention, and FIG. 1B is a side view. In the following, a front-rear, left-right, and up-down directions are defined as shown in the figures, and the configuration of each part is explained according to this definition. The front-rear, left-right, and up-down directions in the figures correspond to the front-rear (length direction), left-right (width direction), and up-down (height direction) directions of the compact vehicle 10, respectively.

As shown in FIGS. 1A and 1B, the vehicle seat 100 includes a driver's seat 101 arranged on the right side of the vehicle interior, a passenger seat 102 arranged diagonally left behind the driver's seat 101, and an auxiliary seat 103 arranged behind the driver's seat 101 and to the right of the passenger seat 102 (diagonally right behind the passenger seat 102). In FIGS. 1A and 1B, the configuration of the compact vehicle 10 is also shown, including a pair of left and right front wheels 11, a pair of left and right rear wheels 12, and a steering wheel 131 installed facing the driver's seat 101. In the following, the vehicle seat 100 may simply be referred to as seat 100.

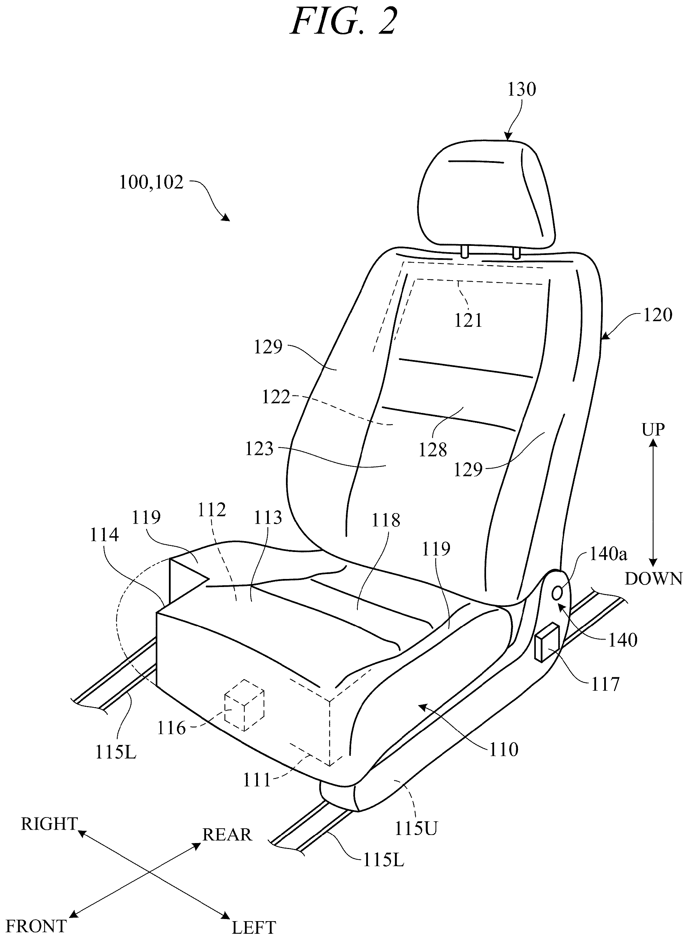

FIG. 2 is a perspective view (viewed from the left front) showing the configuration of the passenger seat 102. The configurations of the driver's seat 101 and the passenger seat 102 are generally the same. Therefore, the configuration of a single seat 100 (driver's seat 101 and passenger seat 102) is explained using FIG. 1. As shown in FIG. 2, the seat 100 includes a seat cushion 110 that supports the occupant's buttocks, a seat back 120 that supports the occupant's back, and a headrest 130 provided at the top of the seat back 120 to support the occupant's head.

The seat cushion 110 has a seat cushion frame 111 (partially shown) that forms the skeleton of the seat cushion 110. Detailed illustration is omitted, but the seat cushion frame 111 includes, for example, a pair of left and right vertical frames extending in the front-rear direction, and a pair of front and rear horizontal frames extending in the left-right direction, connecting the front ends and rear ends of the pair of vertical frames, respectively, forming an approximately rectangular frame shape in plan view. Inside the seat cushion frame 111, a substantially plate-shaped pressure receiving member (not shown) is arranged. Around the seat cushion frame 111, a cushion pad 112 with elasticity, made of, for example, urethane foam material, is provided, and the surface of the cushion pad 112 is covered with a skin 113.

The seat back 120 has a seat back frame 121 (partially shown) that forms the skeleton of the seat back 120. Detailed illustration is omitted, but the seat back frame 121 includes, for example, a pair of left and right vertical frames extending in substantially up-down direction, and a pair of upper and lower horizontal frames extending in the left-right direction, connecting the upper ends and lower ends of the pair of vertical frames, respectively, forming an approximately rectangular frame shape in front view. Inside the seat back frame 121, a substantially plate-shaped pressure receiving member (not shown) is arranged. Around the seat back frame 121, a back pad 122 with elasticity, made of, for example, urethane foam material, is provided, and the surface of the back pad 122 is covered with a skin 123.

The lower end of the seat back 120 is pivotally supported in the front-rear direction at the rear end of the seat cushion frame 111 via a reclining mechanism 140, using a shaft portion 140a extending in the left-right direction as a fulcrum. Detailed illustration is omitted, but the headrest 130 also has, similar to the seat back 120 etc., a headrest frame forming the skeleton of the headrest 130, a headrest pad with elasticity provided around the headrest frame, and a skin covering the surface of the headrest pad.

On the upper surface of the floor inside the cabin of the compact vehicle 10, a pair of left and right lower rails 115L extending in the front-rear direction are installed. At the bottom of the seat cushion frame 111, a pair of left and right upper rails 115U extending in the front-rear direction are provided. The upper rails 115U engage with the lower rails 115L, allowing the seat cushion 110 to slide in the front-rear direction along the lower rails 115L. The upper rails 115U and the lower rails 115L are meshed via gears at their engagement portions.

Detailed illustration is omitted, but a slide motor 116 is arranged below the seat cushion 110. The rotation of the motor 116 is transmitted, for example, via a shaft to a screw shaft extending along the lower rail 115L, and by the rotation of the screw shaft, a nut moves in the front-rear direction along the screw shaft, allowing the seat cushion 110 to move in the front-rear direction together with the nut. On a side of the seat cushion 110, an operation part (e.g., a switch) 117 operated by the occupant is provided. The occupant may also be referred to as the user. The motor 116 is driven in response to a command to move the seat 100 forward or backward, input via the operation part 117. The slide motor 116 and screw shaft, etc., may be omitted, allowing the user to manually move the seat cushion 110 in the front-rear direction.

The upper surface of the seat cushion 110 is provided with a seating portion 118 where the occupant sits, and a pair of left and right bank portions 119 that bulge upward from the seating portion 118 on both sides of the seating portion 118 and extend in the front-rear direction. The buttocks and thighs of an occupant seated on the seat 100 contact the seating portion 118, and the occupant's weight is mainly supported by the seating portion 118. Similarly, the front surface of the seat back 120 is provided with a seating portion 128 where the occupant sits, and a pair of left and right bank portions 129 that bulge forward from the seating portion 128 on both sides of the seating portion 128 and extend in the up-down direction. The seating posture of the occupant is confined by the bank portions 119, 129.

As shown in FIGS. 1A and 1B, the front end surface 102a of the passenger seat 102 is positioned behind the front end surface 101a of the driver's seat 101 and in front of the rear end surface 101b of the driver's seat 101. The rear end surface 102b of the passenger seat 102 is positioned behind the front end surface 103a of the auxiliary seat 103. That is, the passenger seat 102 is positioned behind the driver's seat 101 and in front of the auxiliary seat 103. The auxiliary seat 103 is a simple seat, having a seat cushion 110 and a seat back 120, but the headrest 130 is omitted. A compactly storable headrest, such as a teardrop-shaped headrest with an approximately L-shape, may be provided on the auxiliary seat 103.

In FIG. 1A, the length from the left end surface SF1 to the right end surface SF2 of the seat cushion 110 of the driver's seat 101 is defined as the width of the driver's seat 101. The length from the left end surface SF3 to the right end surface SF4 of the seat cushion 110 of the passenger seat 102 is defined as the width of the passenger seat 102. The length from the left end surface SF5 to the right end surface SF6 of the seat cushion 110 of the auxiliary seat 103 is defined as the width of the auxiliary seat 103. At this time, the width of the passenger seat 102 is equal to the width of the driver's seat 101, and the width of the auxiliary seat 103 is narrower than the width of the driver's seat 101. Specifically, the width of the auxiliary seat 103 is about 0.8 times the width of the driver's seat 101.

The left end surface SF5 of the seat cushion 110 of the auxiliary seat 103 is positioned to the right of the right end surface SF4 of the seat cushion 110 of the passenger seat 102. On the other hand, the left end surface SF1 of the seat cushion 110 of the driver's seat 101 is positioned to the left of the right end surface SF4 of the seat cushion 110 of the passenger seat 102. On the right end surface SF4 of the seat cushion 110 of the passenger seat 110B, a substantially rectangular notch 114 in plan view is provided from the front end surface 11b rearward for a predetermined length. The notch 114 is provided to cut the entire right front corner of the passenger seat 110B (seat cushion frame 111, cushion pad 112, etc.) in the up-down direction. The right end surface SF4 of the seat cushion 110 at the portion where the notch 114 is provided, i.e., the notch surface 114a, is positioned to the left of the left end surface SF1 of the seat cushion 110 of the driver's seat 101. This allows interference between the driver's seat 101 and the passenger seat 102 to be avoided.

As shown in FIG. 2, the notch 114 is provided in the region of the bank portion 119 at the right front corner of the seat cushion 110. In FIG. 2, the shape of the seat cushion 110 without the notch 114 is shown by phantom lines (two-dot chain lines). Since the notch 114 is provided in the front region of the bank portion 119, the seating portion 118 does not become narrow, ensuring sufficient seating space for the occupant of the passenger seat 102.

As shown in FIG. 1A, three lower rails 115L are installed at equal intervals in the left-right direction on the upper surface of the floor. The driver's seat 101 is slidably supported along the right end lower rail 115L and the central lower rail 115L. The passenger seat 102 is slidably supported along the central lower rail 115L and the left end lower rail 115L. That is, the central lower rail 115L is used as the lower rail 115L for both the driver's seat 101 and the passenger seat 102. This allows the number of lower rails 115L to be reduced, thereby saving installation space for the lower rails 115L.

The driver's seat 101 slides forward of the passenger seat 102. Therefore, the front ends of the right end and central lower rails 115L, 115L are positioned forward of the front end of the left end lower rail 115L. The passenger seat 102 slides behind the driver's seat 101. Therefore, the rear ends of the central and left end lower rails 115L, 115L are positioned behind the rear end of the right end lower rail 115L. Thus, there is no need to install a lower rail 115L to the right of the auxiliary seat 103, allowing the auxiliary seat 103 to be easily positioned without interference from the lower rail 115L.

As shown in FIGS. 1A and 1B, the floor is provided with a recess 135 of a predetermined depth, having a substantially rectangular shape in plan view with an open top, behind the auxiliary seat 103. The auxiliary seat 103 can be folded forward until its seat back 120 contacts the upper surface of the seat cushion 110, and the entire folded seat can be moved diagonally toward the rear and lower space (recess 135). Alternatively, the entire folded seat can be tumbled rearward toward the recess 135. The recess 135 has a substantially box shape corresponding to the shape of the folded auxiliary seat 103. This allows the auxiliary seat 103 to be retracted below the floor.

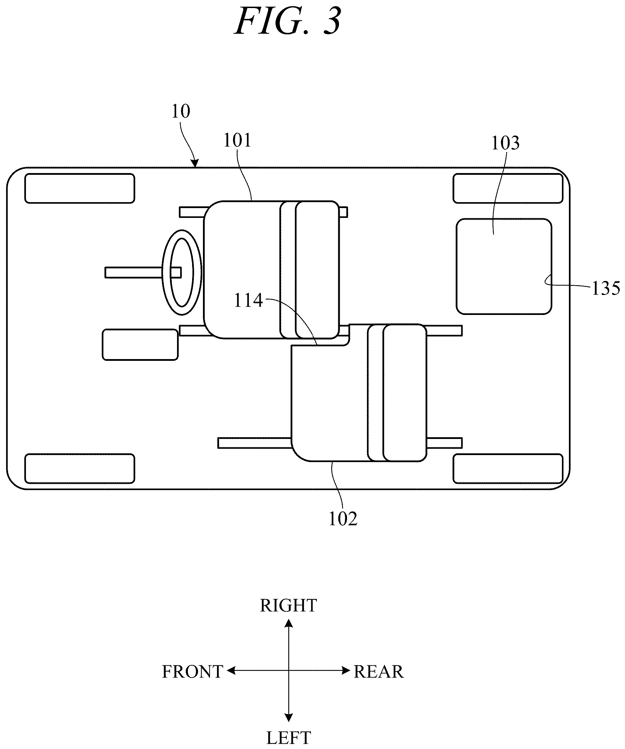

FIG. 3 is a plan view showing a schematic configuration of a compact vehicle 10 with the auxiliary seat 103 retracted in the recess 135. As shown in FIG. 3, when the auxiliary seat 103 is retracted below the floor, a relatively large, substantially box-shaped space is formed above the upper surface of the floor, behind the driver's seat 101 and to the right of the passenger seat 102. This allows large luggage and the like to be easily loaded into the compact vehicle 10.

The compact vehicle 10 with the vehicle seat 100 according to this embodiment is used for relatively short-distance travel such as commuting or shopping. In this type of travel, there are often opportunities to ride alone in the compact vehicle 10, and there is not much luggage. Therefore, it is more desirable to reduce the overall size of the vehicle rather than expanding the space inside the cabin. In this regard, in this embodiment, the passenger seat 102 is positioned diagonally behind the driver's seat 101, and the right end (right end surface SF4) of the passenger seat 102 is positioned to the right of the left end (left end surface SF1) of the driver's seat 101, thereby narrowing the width of the compact vehicle 10. As a result, the space inside the cabin can be minimized, providing a convenient and suitable compact vehicle 10 for occupants who often travel alone.

A notch 114 is provided at the right end of the passenger seat 102 of the compact vehicle 10 to prevent interference with the driver's seat 101. The notch 114 is provided only at the right front corner of the seat cushion 110 of the passenger seat 102, so the constraint on the seating space of the passenger seat 102 is minimal. Therefore, although infrequent, the comfort of the occupant can be sufficiently ensured when an occupant is seated in the passenger seat 102.

Using the auxiliary seat 103, it is possible for three people to be accommodated in the compact vehicle 10. The auxiliary seat 103 is configured more simply and compactly than the other seats 101, 102, but the frequency of use of the auxiliary seat 103 is even lower than that of the passenger seat 102, and since the compact vehicle 10 is often used for short-distance travel, it does not matter. Since the auxiliary seat 103 can be retracted below the floor, when one or two people ride in the compact vehicle 10, the auxiliary seat 103 can be retracted to easily transport larger luggage.

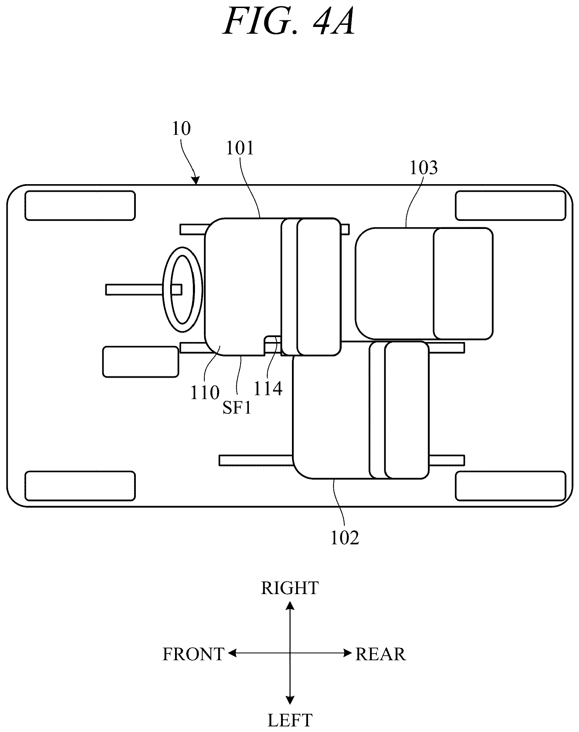

In the above, a notch 114 is provided in the seat cushion 110 of the passenger seat 102, but instead or in addition, a notch may be provided in the seat cushion 110 of the driver's seat 101. FIG. 4A is a plan view showing a schematic configuration of a compact vehicle 10 as an example. As shown in FIG. 4A, a substantially rectangular notch 114 in plan view is provided from the rear end face to the front on the left end surface SF1 of the seat cushion 110 of the driver's seat 101. In other words, a notch 114 is provided at the left rear corner of the seat cushion 110 of the driver's seat 101. This prevents interference between the driver's seat 101 and the passenger seat 102.

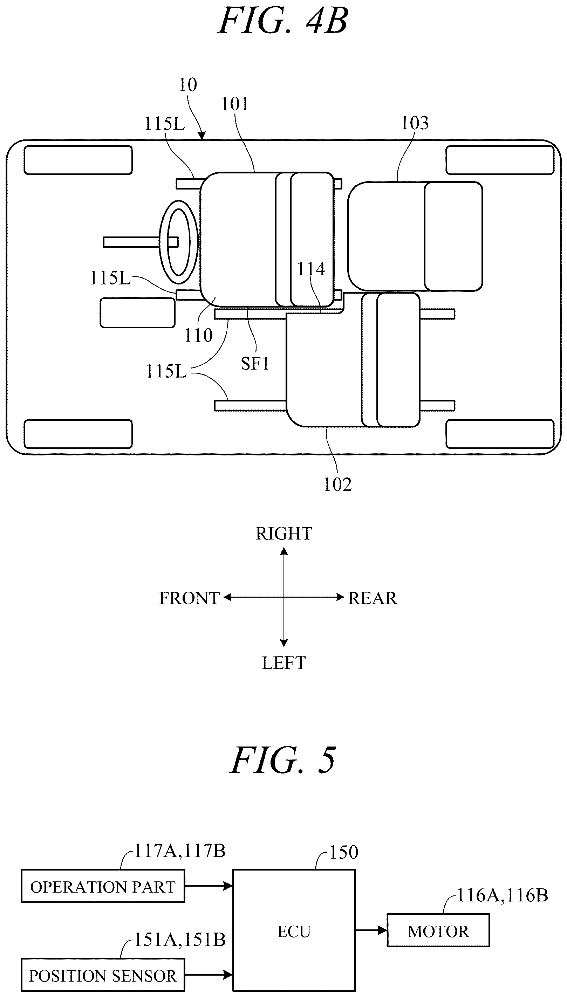

In this embodiment, the operation of the operation parts 117 (FIG. 2) provided on the driver's seat 101 and the passenger seat 102 controls the drive of the motors 116 (FIG. 2) provided on the driver's seat 101 and the passenger seat 102, respectively, thereby sliding each seat 101, 102 in the front-rear direction. FIG. 5 is a block diagram showing a control configuration related to the sliding operation of the seat 100. In FIG. 5, the operation parts for the driver's seat and the passenger seat are indicated by reference numerals 117A, 117B, and the motors for the driver's seat and the passenger seat are indicated by reference numerals 116A, 116B, respectively.

As shown in FIG. 5, the ECU150 (controller), which is composed of a microprocessor and memory etc., receives signals from the operation parts 117A, 117B and signals from position sensors 151A, 151B that detect the sliding positions of the driver's seat 101 and the passenger seat 102, respectively. Various types of sensors can be used as the position sensors 151A, 151B, such as linear encoders, magnetic sensors (Hall sensors), optical encoders, potentiometers (variable resistors), limit switches, and inclination sensors. Sensors that detect the amount of rotation of the motors 116A, 116B can also be used as position sensors. The operation parts 117A, 117B are, for example, push-type switches, and when the operation parts 117A, 117B are pressed, a forward or backward command for the seats 101, 102 is output, and when the pressing operation stops, the output of the forward or backward command stops.

When a forward or backward command for the driver's seat 101 is output by the operation part 117A, the ECU150 outputs a control signal to the motor 116A to move the driver's seat 101 forward or backward. Furthermore, when a forward or backward command for the passenger seat 102 is output by the operation part 117B, the ECU150 outputs a control signal to the motor 116B to move the passenger seat 102 forward or backward. At this time, the ECU150 detects the positions of the driver's seat 101 and the passenger seat 102 based on signals from the position sensors 151A, 151B, and limits the drive of the motors 116A, 116B according to the detected positions.

Specifically, when a forward command for the driver's seat 101 is output, the ECU150 determines whether the driver's seat 110A is at a predetermined front end position, and if it is determined to be at the front end position, the forward movement of the driver's seat 101 is stopped. Similarly, when a backward command for the passenger seat 102 is output, the ECU150 determines whether the passenger seat 102 is at a predetermined backward position, and if it is determined to be at the backward position, the backward movement of the passenger seat 102 is stopped. Furthermore, when a backward command for the driver's seat 101 or a forward command for the passenger seat 102 is output, the ECU150 calculates the distance between the driver's seat 101 and the passenger seat 102, more specifically, the distance (seat-to-seat distance) between the rear end face 101b of the driver's seat 101 and the end face 114b of the notch 114 of the passenger seat 102 (FIG. 1A). Then, it is determined whether the seat-to-seat distance is equal to or less than a predetermined distance, and if it is determined to be equal to or less than the predetermined distance, the backward movement of the driver's seat 101 or the forward movement of the passenger seat 102 is stopped. This prevents interference between the driver's seat 101 and the passenger seat 102.

According to the present embodiment, the following functions and effects can be exerted.
(1) The vehicle seat 100 includes a driver's seat 101 having a seat cushion 110 and a seat back 120, and a passenger seat 102 having a seat cushion 110 and a seat back 120, which is positioned diagonally behind the driver's seat 101 (FIGS. 1A, 2). The rear end face 12a of the seat cushion 110 of the driver's seat 101 is positioned behind the front end face 11b of the seat cushion 110 of the passenger seat 102 (FIG. 1B). The seat cushion 110 of the driver's seat 101 and the seat cushion 110 of the passenger seat 102 each have a pair of left and right side end faces, namely left end surface SF1, right end surface SF2, and left end surface SF3, right end surface SF4 (FIG. 2). The left end surface SF1 of the seat cushion 110 of the driver's seat 101 is positioned to the left of the right end surface SF4 of the seat cushion 110 of the passenger seat 102 (FIG. 1A). A notch 114 is provided on the right end surface SF4 of the seat cushion 110 of the passenger seat 102 to prevent interference between the driver's seat 101 and the passenger seat 102 (FIGS. 1A, 2).

According to this configuration, the left rear corner of the driver's seat 101 is positioned to fit into the right front notch 114 of the passenger seat 102, thereby shortening the length from the right end surface SF2 of the driver's seat 101 to the left end surface SF3 of the passenger seat 102. This allows for the construction of a compact vehicle 10 with a short left-right dimension while ensuring sufficient seating space for the left and right occupants.

(2) Further includes an auxiliary seat 103 positioned behind the driver's seat 101 and to the right of the right end surface SF4 of the passenger seat 102 (FIG. 1A). This allows for three passengers to be accommodated even in a compact vehicle 10.

(3) The width of the auxiliary seat 103 in the left-right direction is narrower than that of the driver's seat 101 (FIG. 1A). By narrowing the width of the less frequently used auxiliary seat 103, it can be optimally positioned without interfering with the driver's seat 101 and the passenger seat 102.

(4) The floor of the compact vehicle 10, where the auxiliary seat 103 is installed, is provided with a recess 135 for stowing the auxiliary seat 103 when not in use (FIGS. 1A, 1B). This allows the auxiliary seat 103 to be retracted below the floor, creating a larger space behind the driver's seat 101 and to the right of the passenger seat 102.

(5) The vehicle seat 100 further comprises a pair of left and right lower rails 115L extending in the front-rear direction on the upper surface of the floor of the compact vehicle 10, supporting the driver seat 101 so that it can move in the front-rear direction, and a pair of left and right lower rails 115L extending in the front-rear direction on the upper surface of the floor, supporting the passenger seat 102 so that it can move in the front-rear direction (Fig. 1A, 2). The left lower rail 115L for the driver's seat and the right lower rail 115L for the passenger seat are identical, and the lower rail 115L is used in common (Fig. 1A). This allows for a reduction in the number of lower rails 115L, enabling a narrower width of the small vehicle 10 in the left-right direction and also reducing costs.

In the above embodiment (FIG. 1A), the driver's seat 101 is configured as a first seat having a seat cushion 110 (first seat cushion) and a seat back 120 (first seat back), and the passenger seat 102 is configured as a second seat having a seat cushion 110 (second seat cushion) and a seat back 120 (second seat back), but the first seat may be other than the driver's seat, and the second seat may be other than the passenger seat. The second seat may be positioned diagonally behind to the right of the first seat instead of diagonally behind to the left.

In the above embodiment, the driver's seat 101 and the passenger seat 102 are slid in the front-rear direction by the drive of the motor 116, but the motor 116 may be omitted, and the driver's seat 101 and the passenger seat 102 may be manually moved forward and backward. In this case, a stopper that restricts movement of the driver's seat 101 beyond a predetermined position (e.g., the position in FIG. 1A) and a stopper that restricts movement of the passenger seat 102 beyond a predetermined position (e.g., the position in FIG. 1A) may be provided on the lower rail 115L, etc., thereby preventing interference between the seats 101 and 102 when the driver's seat 101 moves backward and the passenger seat 102 moves forward.

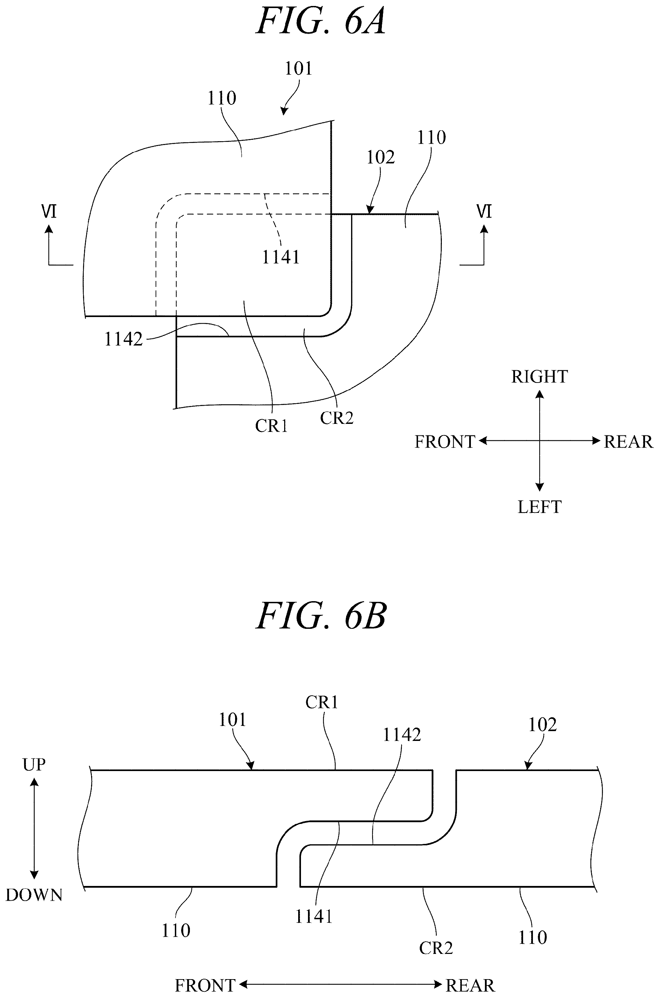

In the above embodiment, a notch 114 is provided at the front end of the right end face SF4 (second side end portion) of the passenger seat 102 (FIG. 1A) or at the rear end of the left end surface SF1 (first side end portion) of the driver's seat 101 (FIG. 4A), but another relief portion to prevent interference between the first side end and the second side end may be provided. FIG. 6A is a plan view showing another example of the relief portion, and FIG. 6B is a cross-sectional view taken along line VI-VI of FIG. 6A. FIG. 6A shows the left rear corner CR1 of the seat cushion 110 of the driver's seat 101 and the right front corner CR2 of the seat cushion 110 of the passenger seat 102.

As shown in FIGS. 6A and 6B, a substantially rectangular recess 1141 of a predetermined depth is provided on the bottom surface of the left rear corner CR1 of the driver's seat 101. On the other hand, a substantially rectangular recess 1142 of a predetermined depth is provided on the upper surface of the right front corner CR2 of the passenger seat 102. As a result, the lower corner CR2 of the recess 1142 of the passenger seat 102 is positioned in the recess 1141 of the driver's seat 101, and the upper corner CR1 of the recess 1141 of the driver's seat 101 is positioned in the recess 1142 of the passenger seat 102. Thus, interference between the driver's seat 101 and the passenger seat 102 can be prevented without providing a notch 114 in the corners CR1 and CR2. A recess 1141 may be provided on the upper surface of the corner CR1, and a recess 1142 may be provided on the bottom surface of the corner CR2, with the up-down relationship of the corners CR1 and CR2 reversed. Instead of providing recesses 1141, 1142 of a predetermined depth in the corners CR1, CR2 of the seats 101, 102, the seats 101, 102 may be arranged such that the left end (first side end) of the driver's seat 101 is positioned above or below the right end (second side end) of the passenger seat 102, thereby forming an interference relief portion.

In the above embodiment (FIG. 1A), the auxiliary seat 103 is arranged as a third seat behind the driver's seat 101 and to the right of the passenger seat 102, but the configuration of the third seat is not limited to the above. The third seat may be a net seat with a net material having elasticity stretched over the seat surface, omitting cushion pads 112 and back pads 122. In the above embodiment (FIG. 3), the auxiliary seat 103 can be retracted in the recess 135 of the floor, but a concave storage portion is not necessary. The third seat may be a flip-up type seat that is retracted by flipping up to the right, for example.

In the above embodiment (FIG. 1A), the driver's seat 101 is slidably supported by a pair of left and right lower rails 115L (first seat rails) provided at the right end and center of the compact vehicle 10, and the passenger seat 102 is slidably supported by a pair of left and right lower rails 115L (second seat rails) provided at the left end and center. That is, a part of the multiple lower rails 115L supporting the driver's seat 101 (left lower rail 115L) and a part of the multiple lower rails 115L supporting the passenger seat 102 (right lower rail 115L) are shared, but the driver's seat 101 and the passenger seat 102 may be supported by separate rails. For example, as shown in FIG. 4B, which is another modification of FIG. 1A, a pair of left and right lower rails 115L supporting the driver's seat 101 and a pair of left and right lower rails 115L supporting the passenger seat 102 may be provided separately. In FIG. 4B, instead of providing the notch in the seat cushion 110 of the passenger seat 102, a notch 114 may be provided in the seat cushion 110 of the driver's seat 101 as shown in FIG. 4A. Each of the seats 101, 102 may be supported by three or more rails.

In the above, the vehicle seat 100 is configured to include the driver's seat 101 (first seat) and the passenger seat 102 (second seat), but the present invention can also be configured as a compact vehicle including the first seat and the second seat. Therefore, the configuration can be rewritten from a vehicle seat to a compact vehicle.

Meanwhile, when comparing the use of a vehicle seat (seat) when an occupant is seated and when not seated, it is preferable to narrow the width of the seat when not in use compared to when in use in order to expand the effective space in the cabin. After narrowing the width of the seat, if the entire seat is configured to be rotatable around an axis extending in the up-down direction, it is even more preferable because the orientation of the seat can be easily changed without interfering with other members or other occupants around the seat. In consideration of this point, in this embodiment, the seat is further configured as follows. Hereinafter, the seat may be referred to as a rotating seat.

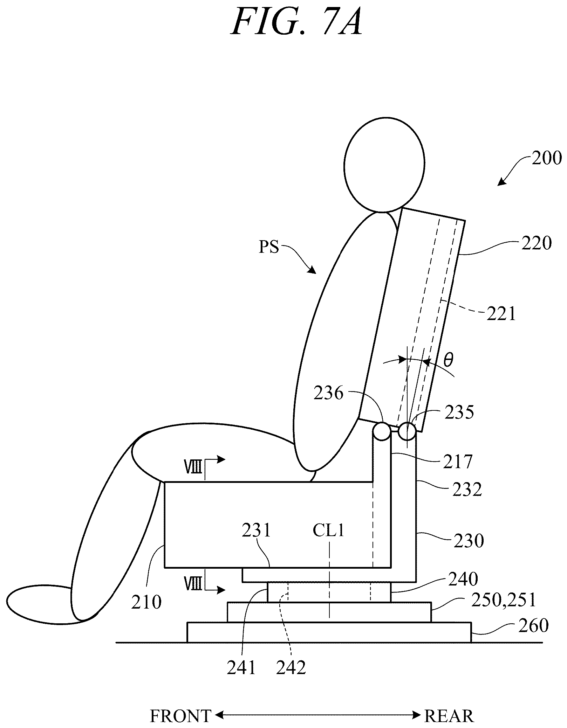

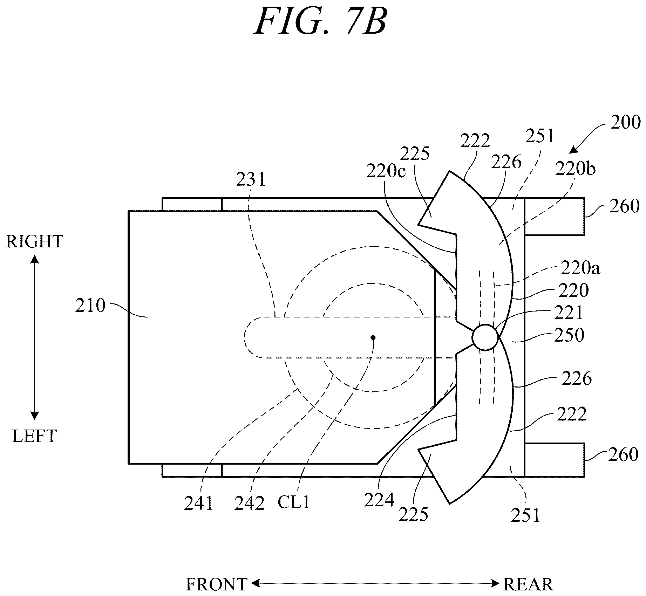

FIG. 7A is a side view schematically showing the overall configuration of the rotating seat 200, and FIG. 7B is a plan view. The rotating seat 200 is mounted on a vehicle not shown. The vehicle may be the aforementioned compact vehicle 10 or may be other than a compact vehicle. The rotating seat 200 can also be mounted on a vehicle other than an automotive. FIGS. 7A and 7B show the use posture of the rotating seat 200 on which an occupant can sit.

As shown in FIGS. 7A and 7B, the rotating seat 200 includes a seat cushion 210 that supports the buttocks of the occupant PS, a seat back 220 that supports the back of the occupant PS, and a support frame 230 that supports the seat cushion 210 and the seat back 220. The support frame 230 is supported by a substantially rectangular plate-like base member 250 in plan view via a rotating device 240. A pair of left and right upper rails 251 are provided at the bottom of the base member 250. The upper rails 251 are slidably engaged with a pair of left and right lower rails 260 extending in the front-rear direction, which are installed on the upper surface of the vehicle floor.

The rotating device 240 includes a substantially cylindrical outer cylinder 241 centered on an axis extending in the up-down direction CL1 fixed to the upper surface of the base member 250, and a substantially cylindrical inner cylinder 242 centered on the axis CL1 disposed inside the outer cylinder 241. The inner cylinder 242 is rotatably supported by the outer cylinder 241 around the axis CL1.

The support frame 230 includes a rod-like or pipe-like horizontal frame 231 extending in the front-rear direction through the center (axis CL1) of the rotating device 240, and a rod-like or pipe-like vertical frame 232 rising from the rear end of the horizontal frame 231. Therefore, the support frame 230 as a whole has a substantially L-shaped in side view. The horizontal frame 231 is fixed to the inner cylinder 242 of the rotating device 240 and rotates integrally with the inner cylinder 242. The front and rear ends of the horizontal frame 231 are positioned more inward in the front-rear direction than the front and rear ends of the base member 250.

As shown in FIG. 7B, the seat back 220 includes a substantially pipe-shaped central frame 221 extending in the up-down direction at its left-right center, and a pair of left and right split seat backs 222 arranged on both sides of the central frame 221. The split seat back 222 includes a pivot frame 220a that forms the skeleton of the split seat back 222. The inner ends of the pivot frame 220a in the left-right direction are rotatably supported by the central frame 221. Around the pivot frame 220a, a back pad 220b is provided, and the surface of the back pad 220b is covered with a skin 220c.

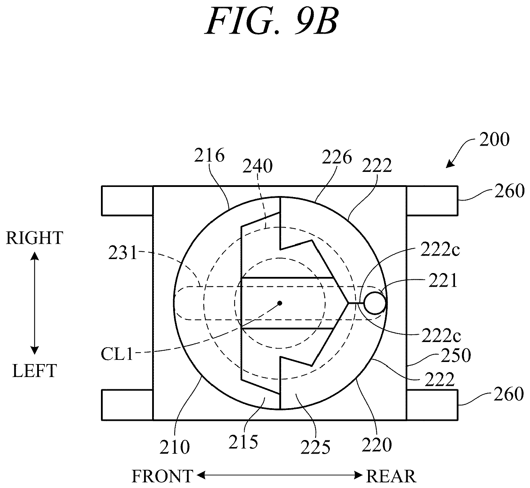

FIG. 7B shows a state where the split seat backs 222 are maximally rotated outward (rearward) in the left-right direction with the central frame 221 as a hinge axis. The rear surfaces 226 of the left and right split seat backs 222 are formed in a substantially arcuate shape in plan view so that they become a substantially semicircular shape as a whole when the split seat back 222 is rotated inward in the left-right direction from the state shown in FIG. 7B (see FIG. 9B). In the state of FIG. 7B, the seating surface 224 on the front of the seat back 220 extends in a substantially straight line in the left-right direction. At this time, the rear surface 226 of the seat back 220 protrudes rearward beyond the central frame 221. Bank portions 225 are provided at the outer ends in the left-right direction of the seat back 220.

As shown in FIG. 7A, the lower end of the central frame 221 of the seat back 220 is supported rotatably in the forward and rearward direction with a pivot shaft 235 extending in the left-right direction as a fulcrum on the upper end of the support frame 230. FIG. 7A shows a reclining posture where the seat back 220 is tilted rearward by a predetermined tilt angle θ. On the other hand, FIG. 7B shows a state where the tilt angle θ is 0°. When the tilt angle θ is 0°, the seating surface 224 extends along the plane extending in the up-down direction.

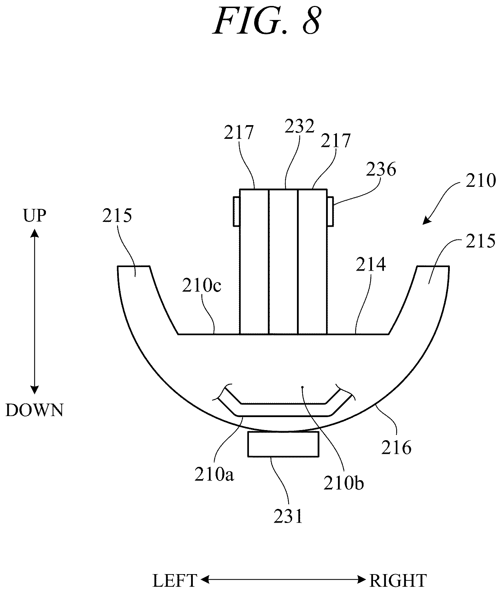

FIG. 8 is a cross-sectional view taken along line VIII-VIII of FIG. 7A. As shown in FIG. 8, the seat cushion 210 includes a seat cushion frame 210a that forms the skeleton of the seat cushion 210. Around the seat cushion frame 210a, a cushion pad 210b is provided, and the surface of the cushion pad 210b is covered with a skin 210c. A substantially horizontal seating surface 214 is formed on the upper surface of the seat cushion 210. Bank portions 215 are provided at the outer ends in the left-right direction of the seat cushion 210. The bottom surface 216 of the seat cushion 210 is substantially semicircular and projects downward.

As shown in FIGS. 7A and 8, the central part in the left-right direction of the bottom surface 216 of the seat cushion 210 is mounted on the upper surface of the horizontal frame 231. The seat cushion 210 has a pair of left and right struts 217 extending upward from its rear end. The front end of the vertical frame 232 is interposed between the left and right struts 217. The upper ends of the struts 217 are supported rotatably in the upward and downward directions on the upper end of the vertical frame 232 with a pivot shaft 236 extending in the left-right direction as a fulcrum.

The rotating seat 200 can change its posture from a usable posture where an occupant can sit (FIGS. 7A, 7B) to an unusable posture where the occupant cannot sit. As shown in FIG. 7B, in the usable posture, the left and right ends of the seat back 220 deploy outwardly in the left-right direction beyond the left and right ends of the base member 250. This allows the width of the seating surface 224 of the seat back 220 in the left-right direction to be increased. On the other hand, the left and right ends of the seat cushion 210 are positioned more inward in the left-right direction than the left and right ends of the base member 250.

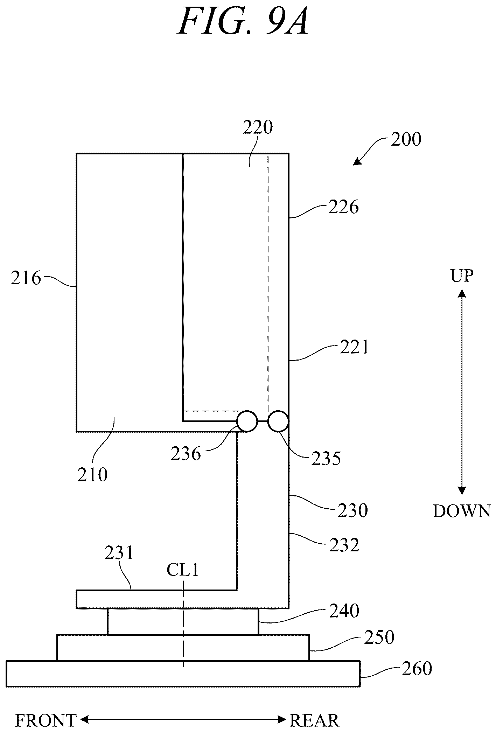

FIG. 9A is a side view of the rotating seat 200 in the unusable posture, and FIG. 9B is a plan view. As shown in FIG. 9A, in the unusable posture, the tilt angle θ of the seat back 220 (FIG. 7B) is 0°, and the rear end surface of the central frame 221 is positioned on the extension line of the rear end surface of the vertical frame 232. Also, in the unusable posture, the seat cushion 210 is rotated upward by 90° with the pivot shaft 236 as a fulcrum, and the bottom surface 216 of the seat cushion 210 extends in the up-down direction. The seat back 220 is biased to be in the unusable posture at all times by, for example, the biasing force of a spring. Furthermore, the seat back 220 has a locking mechanism that holds the seat back 220 in the usable posture against the biasing force of the spring. Therefore, when the locking mechanism is released in the usable posture, the seat back 220 moves to the unusable posture by the biasing force of the spring.

As shown in FIG. 9B, in the unusable posture, the pair of left and right split seat backs 222 are rotated inward in the left-right direction, and the right end surface 222c of the left split seat back 222 and the left end surface 222c of the right split seat back 222 abut each other. This limits the maximum rotation amount of the split seat back 222. When the split seat back 222 is maximally rotated inward in the left-right direction, the rear surface 226 of the seat back 220 becomes a substantially semicircular shape centered on the axis CL1. Also, the bottom surface 216 of the seat cushion 210 becomes a substantially semicircular shape centered on the axis CL1.

At this time, the front end surface of the bank portion 225 of the seat back 220 and the rear end surface of the bank portion 215 of the seat cushion 210 abut each other. As a result, the rear surface 226 of the seat back 220 and the bottom surface 216 of the seat cushion 210 as a whole form a substantially cylindrical shape centered on the axis CL1 in plan view. The diameter of the cylindrical surface centered on the axis CL1 is approximately equal to the length of the horizontal frame 231 in the front-rear direction, and the entire cylindrical surface is located inside the left and right ends and the front and rear ends of the base member 250. Therefore, the entire seat cushion 210 and seat back 220 can be efficiently arranged in the inner space of a predetermined cylindrical surface centered on the axis CL1.

The rotation of the rotating seat 200 is prevented by an unillustrated locking mechanism. This allows the rotating seat 200 to be fixed in the usable posture shown in FIGS. 7A and 7B. When rotating the orientation of the rotating seat 200 from the usable posture by, for example, 180° via the rotating device 240, the user (occupant) first releases the locking mechanism. Then, the seat back 220 is rotated forward with the pivot shaft 235 as a fulcrum, the tilt angle θ is set to 0°, and the seat back 220 is erected, while the pair of left and right split seat backs 222 are rotated inward in the left-right direction around the central frame 221. Furthermore, the user rotates the seat cushion 210 upward with the pivot shaft 236 as a fulcrum and erects the seat cushion 210.

In this state, the user rotates the rotating seat 200 by 180° via the rotating device 240 and activates the locking mechanism. The entire seat cushion 210 and seat back 220 of the rotating seat 200 are arranged inside a cylindrical surface of a predetermined radius centered on the axis CL1. Therefore, the amount of jutting out of the rotating seat 200 outward in the radial direction is small, and the user can easily rotate the rotating seat 200 without interfering with surrounding members or occupants. The space required for the rotation of the rotating seat 200 is determined by the distance from the axis CL1 to the outermost part in the radial direction. In this regard, in the present embodiment, since the outermost parts in the radial direction (the bottom surface 216 of the seat cushion 210, the rear surface 226 of the seat back 220) are located on the cylindrical surface centered on the axis CL1, the distance from the axis CL1 to the outermost part in the radial direction can be shortened. After rotating the rotating seat 200, the user rotates the left and right split seat backs 222 outward in the left-right direction and rotates the seat cushion 210 downward. This allows the rotating seat 200 to be set in the usable posture facing rearward.

The activation and release of the locking mechanism, the rotation of the seat cushion 210 around the pivot shaft 236, the rotation of the seat back 220 around the pivot shaft 235, the rotation of the split seat back 222 with the central frame 221 as a fulcrum, and the rotation of the rotating seat 200 around the axis CL1 can each be performed manually. Any one, or multiple, or all of these operations may be performed by driving an actuator such as a motor. For example, the actuator may be driven in response to a user's switch operation.

According to the present embodiment, the following additional effects can be achieved.
(1) The rotating seat 200 as a vehicle seat can be transformed from a usable posture where an occupant can sit to an unusable posture (FIGS. 7A, 9A). The seat back 220 is configured so that the width of the seat back 220 in the unusable posture is narrower than the width of the seat back 220 in the usable posture (FIGS. 7B, 9B). This allows the available space in the vehicle cabin to be expanded when the rotating seat 200 is not in use.
(2) It further includes a rotating device 240 that rotatably supports the seat cushion 210 around the axis CL1 extending in the up-down direction (FIG. 7A). This allows the orientation of the rotating seat 200 to be easily changed while the width of the seat back 220 is narrowed.
(3) The rotating seat 200 further includes a support frame 230 that rotatably supports the seat cushion 210 so that the seat cushion 210 stands upright in the unusable posture (FIGS. 7A, 9A). Each of the seat cushion 210 and the seat back 220 has a seating surface 214, 224 on which an occupant sits, and a back surface (bottom surface 216 and rear surface 226) on the opposite side of the seating surface 214, 224 (FIGS. 7B, 8). In the unusable posture, the distance from the axis CL1 to the rear surface 226 of the seat back 220 is approximately equal to the distance to the bottom surface 216 of the seat cushion 210 (FIG. 9B). This allows the diameter centered on the axis CL1 of the rotating seat 200 in the non-use posture to be reduced, enabling the rotating seat 200 to be rotated in a narrow space.
(4) The rear surface 226 of the seat back 220 and the bottom surface 216 of the seat cushion 210 are configured in a substantially arcuate shape to extend along a cylindrical surface centered on the axis CL1 in the non-use posture (FIG. 9B). This allows the diameter centered on the axis CL1 of the rotating seat 200 in the non-use posture to be minimized, thereby minimizing the space required for the rotation of the rotating seat 200.
(5) The seat back 220 includes a central frame 221 extending in a substantially up-down direction, and a pair of divided seat backs 222 provided to be rotatable inward in the width direction around the central frame 221 (FIG. 9B). This allows the width of the seat back 220 to be easily narrowed when the rotating seat 200 is not in use.
(6) The support frame 230 includes a vertical frame 232 extending in the up-down direction near the rear end of the seat cushion 210, and a pivot shaft 236 provided at the upper end of the vertical frame 232 (FIGS. 7A, 9A). The seat cushion 210 is supported to be rotatable in the up-down direction via the pivot shaft 236 (FIGS. 7A, 9A). This allows the seat cushion 210 to be raised, shortening the distance from the axis CL1 to the end of the seat cushion 210.

In the above embodiment (FIGS. 7A to 9B), the seat back 220 is configured by the central frame 221 (pivot axis) and a pair of divided seat backs 222 (back pivoting parts), but the configuration of the seat back 220 is not limited to the above. That is, as long as the width of the seat back 220 in a unusable posture is configured to be narrower than the width of the seat back 220 in the usable posture, any configuration of the seat back 220 is usable. In the above embodiment, the left and right ends of the seat back 220 are provided to be rotatable in the left-right direction, but the left and right ends of the seat cushion 210 may also be provided to be rotatable in the left-right direction. In this case, for example, when the seat cushion 210 is rotated outward in the left-right direction, the seating surface 214 of the seat cushion 210 becomes a substantially horizontal plane, and when rotated inward in the left-right direction, the bottom surface 216 of the seat cushion 210 becomes a substantially arcuate shape (FIG. 8).

In the above embodiment (FIG. 7A), the seat cushion 210 is rotatably supported by the support frame 230 as a seat cushion support part. Specifically, the seat cushion 210 is rotatably supported in the up-down direction via a pivot shaft 236 (horizontal axis) extending horizontally at the upper end of a vertical frame 232 (vertical part) extending in the up-down direction near the rear end of the seat cushion 210, but any configuration of the seat cushion support part is usable as long as it allows the seat cushion 210 to stand in the non-use posture. In the above embodiment (FIG. 7B), the horizontal frame 231 is configured to be elongated in the front-rear direction, but the horizontal frame may be extended in the left-right direction, and a seat belt attachment part may be provided at the left-right ends of the horizontal frame.

In the above embodiment (FIGS. 9A, 9B), in the non-use posture, the distance from the axis CL1 to the bottom surface 216 (back surface) on the opposite side of the seating surface 214 of the seat cushion 210 is made equal to the distance to the rear surface 226 (back surface) on the opposite side of the seating surface 224 of the seat back 220. More specifically, the back surfaces of the seat cushion 210 and the seat back 220 are made to extend along a cylindrical surface centered on the axis CL1, but the distance from the axis CL1 to the back surface of the seat cushion 210 and the distance to the back surface of the seat back 220 may differ.

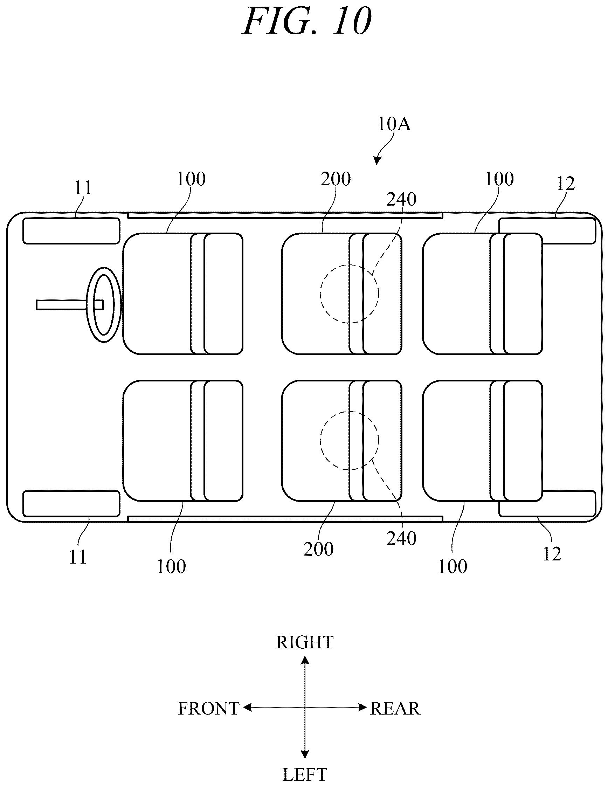

In the above embodiment, the rotating seat 200 is used by rotating it 180° around the axis CL1, but the rotation angle of the rotating seat 200 is not limited to 180° and may be 90°, 270°, or other angles. The rotating seat 200 described above is not limited to the small vehicle 10 in FIG. 1A and can be used in various vehicles or non-vehicle conveyances. FIG. 10 is a plan view showing an example of a vehicle 10A in which the rotating seat 200 is mounted. The vehicle 10A in FIG. 10 has three rows of seats in the front-rear direction. The rotating seat 200 is applied, for example, to the second row of seats, and normal seats 100 (non-rotating seats) are arranged in the first and third rows. This allows the occupants of the second row seats and the third row seats to sit facing each other.

Not only when changing the orientation of the rotating seat 200, but also when loading luggage in the cabin, the rotating seat 200 may be changed from the use posture to the non-use posture. This expands the space for loading luggage in the cabin, making it easier to load luggage. When an occupant boards the vehicle to sit in the seat behind the rotating seat 200 (the third row seat 100 in FIG. 10), the rotating seat 200 may be changed from the use posture to the non-use posture. This makes it easier for occupants to board the rear seats. In the non-use posture, if necessary, only the seat back 220 may be rotated inward without rotating the seat cushion 210 of the rotating seat 200 upward.

The vehicle seat according to this embodiment can be configured to have a function of notifying information without relying on sound or the like. Specifically, it can be configured to notify the occupant of predetermined information by providing vibrations to the occupant through the seat. When information is notified by sound or the like, communication with the passenger may be interrupted if there is a passenger in the vehicle. In this regard, by notifying information through vibrations, communication with the passenger is not interrupted, and the occupant (e.g., the driver) can recognize the predetermined information.

The predetermined information includes, for example, approach information indicating that the approach of another vehicle has been detected during driving, erroneous operation information indicating that the driver has made an incorrect operation during driving, charge completion notification indicating that the battery has been fully charged in EV drive mode, and caution information to alert when driving through intersections or pedestrian crossings. Vibrations may be provided to the driver for purposes other than notifying information, such as waking the driver, and vibrations may also be provided to occupants other than the driver. Below, a seat configured to provide vibrations to the occupant will be described.

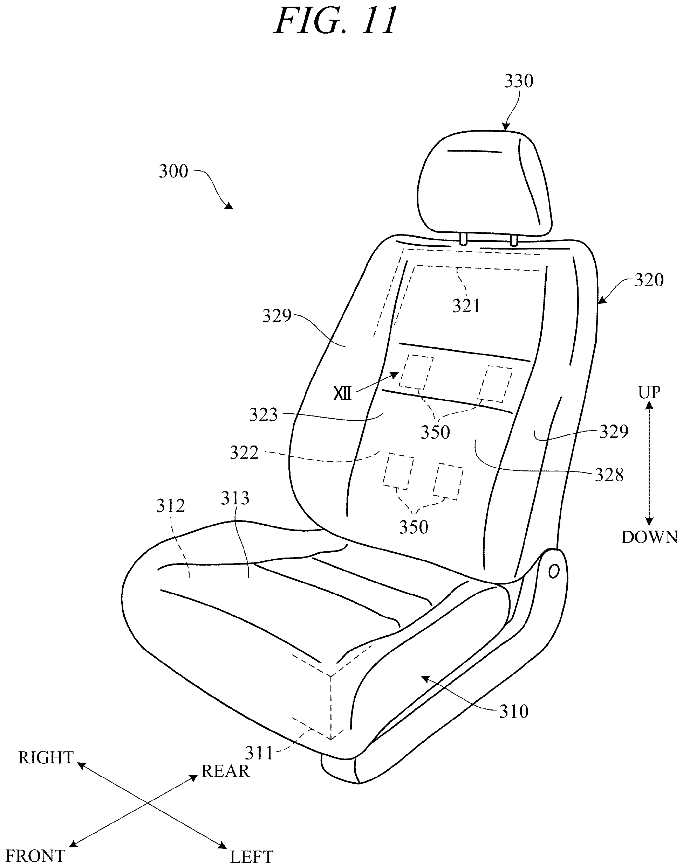

The seat has a vibrator. Such a seat may be referred to as a seat with a vibrator in the following description. The seat with a vibrator can be mounted on a vehicle or a non-vehicle conveyance. In the following, an example of mounting a seat with a vibrator on a vehicle will be described. FIG. 11 is a perspective view showing a schematic configuration of a seat with a vibrator 300 as a vehicle seat according to an embodiment of the present invention. As shown in FIG. 11, the seat with a vibrator 300 includes a seat cushion 310 supporting the occupant's buttocks, a seat back 320 supporting the occupant's back, and a headrest 330 provided at the top of the seat back 320 to support the occupant's head.

The seat with a vibrator 300 has the same configuration as the seat 100 shown in FIG. 2. That is, the seat cushion 310 includes a seat cushion frame 311 (partially shown) forming the skeleton of the seat cushion 310, a cushion pad 312 provided around the seat cushion frame 311, and a skin 313 covering the surface of the cushion pad 312. The seat back 320 includes a seat back frame 321 (partially shown) forming the skeleton of the seat back 320, a back pad 322 provided around the seat back frame 321, and a skin 323 covering the surface of the back pad 322. Similarly, the headrest 330 includes a headrest frame forming the skeleton of the headrest 330, an elastic headrest pad provided around the headrest frame, and a skin covering the surface of the headrest pad.

The seat back 320 is provided with multiple vibration units 350 having vibrators. Specifically, a pair of left and right vibration units 350 are provided above and below the seating part 328, which is in between the left and right bank parts 329 of the seat back 320. The upper pair of left and right vibration units 350 are arranged more outward in the left-right direction than the lower pair of left and right vibration units 350. The vibration units 350 are provided, for example, corresponding to the position of the occupant's latissimus dorsi. If they are provided in positions where the seated person can easily feel the vibrations, the number and installation positions of the vibration units 350 are not limited to those shown. Instead of or in addition to the seat back 320, the seat cushion 310 may be provided with the vibration units 350.

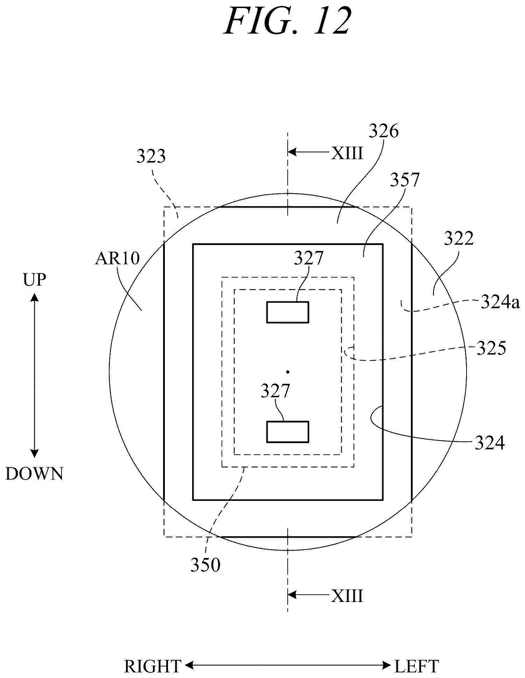

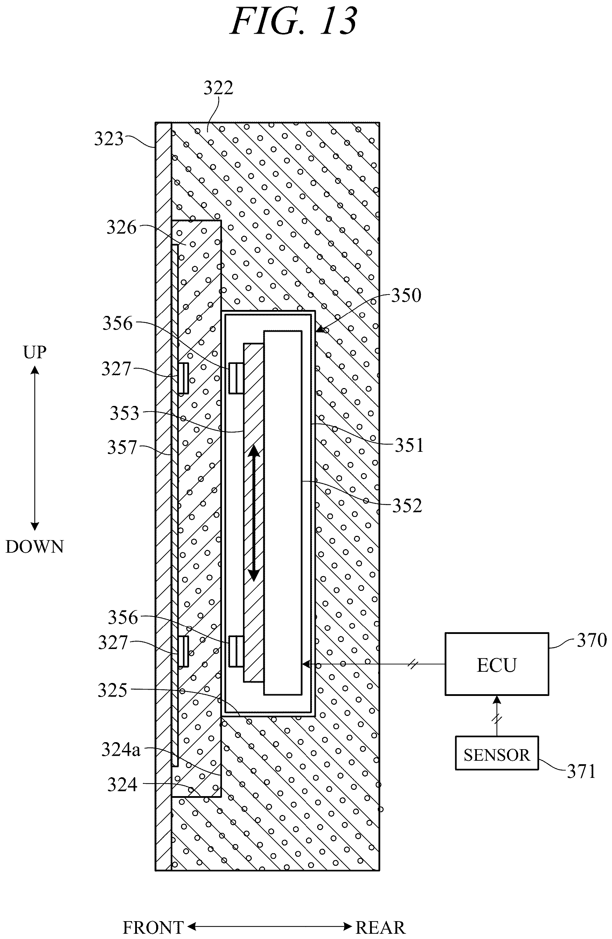

FIG. 12 is a front view (arrow view XII in FIG. 11) of the part where the vibration unit 350 is provided in the seating part 328 of the seat back 320, viewed from the front, and FIG. 13 is a cross-sectional view along line XIII-XIII in FIG. 12. In FIG. 12, for convenience, a part of the skin 323 is shown cut in a substantially circular shape (area AR10). As shown in FIGS. 12 and 13, a recess 324 of a predetermined depth with a substantially rectangular front view is provided on the front surface of the back pad 322, and further, a recess 325 of a predetermined depth with a substantially rectangular front view is provided behind the recess 324. That is, stepped recesses 324, 325 are formed on the front surface of the back pad 322. The recess 325 is provided inside the recess 324, and the bottom surface 324a of the recess 324, which extends in the up-down direction, is formed around the entire circumference of the recess 325.

As shown in FIG. 13, a vibration unit 350 is arranged in the recess 325. The vibration unit 350 includes a vibration unit case 351, which is formed in a substantially box shape corresponding to the shape of the recess 325 (indicated by a bold line for convenience), and a vibration actuator 352 and a vibrator 353 arranged inside the vibration unit case 351. The vibrator 353 is fixed to the front of the vibration actuator 352. The vibration actuator 352 is a linear vibration actuator that receives electrical signals to reciprocate the vibrator 353 in the up-down direction (the direction of the arrow in FIG. 13).

A pair of permanent magnets 356 are fixed to the front of the vibrator 353. The front and rear surfaces of the permanent magnet 356 are, for example, the N pole and the S pole. The front surface of the permanent magnet 356 is arranged with a gap from the opposing vibration unit case 351 so that the permanent magnet 356 can move smoothly within the vibration unit case 351. It is also possible to provide the front of the vibration unit case 351 in an open manner.

FIGS. 12 and 13 show the state before the vibrator 353 vibrates, at which time the vibrator 353 is positioned at an intermediate position in the up-down direction. As shown in FIGS. 12 and 13, a lid pad 326, which is part of the back pad 322, is arranged in the recess 324. The lid pad 326 has a substantially rectangular plate shape and is made of the same material as the back pad 322 (e.g., urethane foam material). The overall thickness (length in the front-rear direction) of the lid pad 326 is the same as the depth of the recess 324, and the lid pad 326 is interposed between the skin 323 and the bottom surface 324a of the recess 324 of the back pad 322.

The lid pad 326 is integrally foam-molded with a magnet mount 357 to which a pair of permanent magnets 327 are fixed. The magnet mount 357 is made of a material that hardens reversibly upon impact, specifically, a sheet-like material with impact hardening properties, where molecules bond and harden upon impact and return to their original state when the impact is removed.

The permanent magnet 356 on the vibrator side and the permanent magnet 327 on the skin side have substantially the same shape in plan view. The permanent magnet 327 on the skin side is positioned at the intermediate position in FIGS. 12 and 13, at the same position in the front-rear and left-right directions as the permanent magnet 356 on the vibrator side, and is arranged a predetermined distance (e.g., about 10mm) forward from the permanent magnet 356. The front and rear surfaces of the permanent magnet 327 on the skin side correspond to the permanent magnet 356 on the vibrator side, for example, as the N pole and the S pole. The magnetic force (attractive force) between the permanent magnets 356 and 327 is greatest when the vibrator 353 is at the intermediate position, and the attractive force decreases as the vibrator 353 moves in the up-down direction from the intermediate position.

As schematically shown in FIG. 13, an ECU 370 with a microcomputer and memory is connected to the vibration actuator 352. Signals from various sensors 371 (such as cameras, radar, lidar, etc.) that detect or sense the conditions around the vehicle or inside the cabin are input to the ECU 370. The ECU 370 determines whether it is necessary to inform the occupant (e.g., the driver) of predetermined information (e.g., the approach of another vehicle) based on signals from the sensors 371. If it is determined that it is necessary to inform the predetermined information, the ECU 370 outputs a control signal to the vibration actuator 352 to vibrate the vibrator 353.

The ECU 370 outputs a control signal to the vibration actuator 352 to vibrate the vibrator 353 until it is determined that it is not necessary to inform the predetermined information (e.g., until it is determined that the driver has recognized the approach of another vehicle). When it is determined that it is not necessary to inform the predetermined information, the ECU 370 stops the vibration of the vibrator 353. The ECU 370 may also vibrate the vibrator 353 for a predetermined time if it is determined that it is necessary to inform the predetermined information.

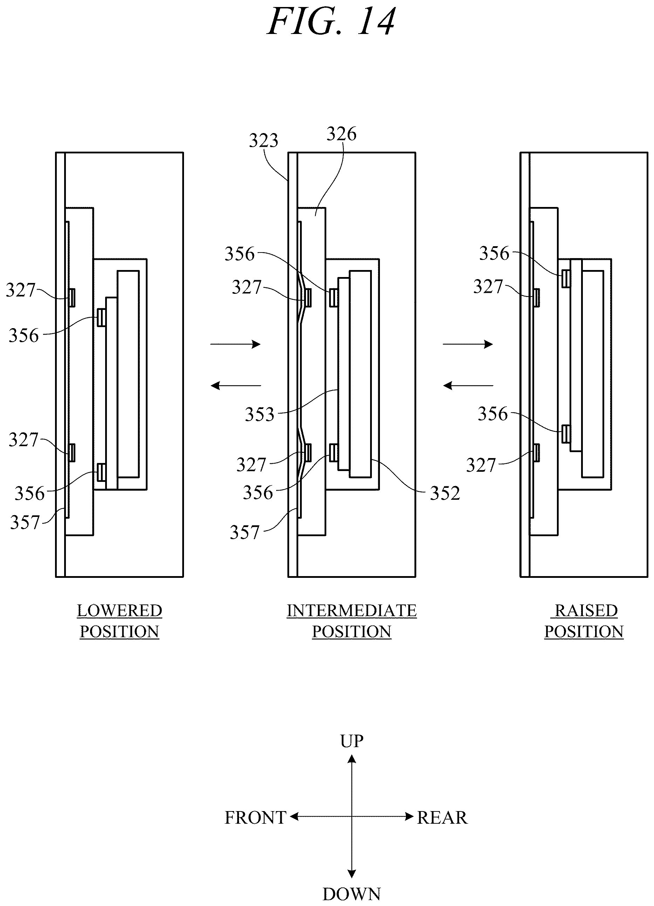

FIG. 14 is a diagram showing an example of the operation of the seat 300 with a vibrator. As shown in FIG. 14, when the vibrator 353 is at the intermediate position, the permanent magnet 327 on the skin side is attracted by the permanent magnet 356 on the vibrator side. As a result, the magnet mount 357 and the lid pad 326 elastically deform, and the permanent magnet 327 moves backward. From this state, when the vibrator 353 descends due to the drive of the vibration actuator 352, a downward attractive force acts on the permanent magnet 327 on the skin side. This attractive force decreases as the distance between the permanent magnets 356 and 327 increases. As a result, at the lowered position where the vibrator 353 has descended the most, the permanent magnet 327 on the skin side moves forward compared to when the vibrator 353 is at the intermediate position, due to the elastic force of the magnet mount 357 and the lid pad 326 tending to return to their original positions.

On the other hand, when the vibrator 353 rises from the lowered position to the neutral position, the attractive force acting on the permanent magnet 327 on the skin side gradually increases as the distance between the permanent magnets 356 and 327 decreases. When the vibrator 353 rises to the neutral position, the attractive force becomes maximum, and the permanent magnet 327 on the skin side moves backward. Furthermore, when the vibrator 353 rises from the neutral position, an upward attractive force acts on the permanent magnet 327 on the skin side. This attractive force decreases as the distance between the permanent magnets 356 and 327 increases. As a result, at the highest position where the vibrator 353 has risen the most, the permanent magnet 327 on the skin side moves forward compared to when the vibrator 353 is at the neutral position.

In this way, as the vibrator 353 moves up and down, the permanent magnet 327 on the skin side reciprocates in the front-rear direction. As a result, vibration is transmitted to the occupant through the magnet mount 357 and the skin 323. When the permanent magnet 327 is placed on the seat surface, the occupant may feel discomfort due to the presence of a foreign object on the seat surface, but placing the permanent magnet 327 on the back side of the skin 323 makes it less likely for the occupant to feel discomfort. Furthermore, if the permanent magnet 327 is placed deeper than the back side of the skin 323, the occupant may find it difficult to feel the vibration, but since the permanent magnet 327 is fixed to the magnet mount 357 on the back side of the skin 323, the occupant can easily feel the vibration, allowing information to be effectively communicated to the occupant.

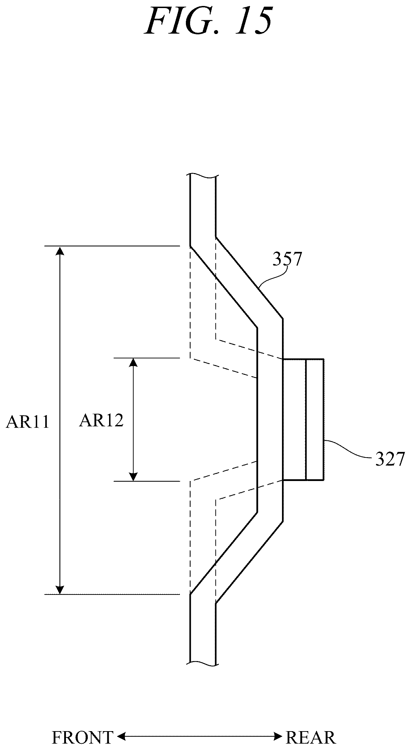

The magnet mount 357 is made of a material with impact hardening properties. Therefore, as schematically shown in FIG. 15, when the vibrator 353 is at the neutral position, the area of elastic deformation of the magnet mount 357 increases. In other words, when the magnet mount 357 is made of a material without impact hardening properties, it deforms locally as shown by the dotted line in FIG. 15, whereas when made of a material with impact hardening properties, the area of deformation of the magnet mount 357 is larger as shown by the solid line in FIG. 15. That is, the deformation area AR11 (solid line) when the magnet mount 357 is made of a material with impact hardening properties is larger than the deformation area AR12 (dotted line) when made of a material without impact hardening properties. As a result, the occupant can feel the vibration more easily.

According to this embodiment, the following additional effects can be achieved.
(1) The seat 300 with a vibrator as a vehicle seat includes a vibration actuator 352 that drives a vibrator 353 built into the seat back 320, a skin 323 that forms the seating surface where the user sits, a permanent magnet 327 arranged on the back side of the skin 323, and a permanent magnet 356 attached to the surface of the vibrator 353 that vibrates by the drive of the vibration actuator 352 (FIGS. 11-13). The permanent magnet 356 on the vibrator side is arranged within the range of interaction with the permanent magnet 327 on the skin side (FIG. 14).
   This allows the occupant to recognize predetermined information through vibration without interrupting communication between occupants. Furthermore, since the permanent magnet 327 is placed on the back side rather than the surface of the skin, the occupant can reliably feel the imparted vibration without feeling discomfort due to the presence of a foreign object.
(2) The seat 300 with a vibrator further includes a back pad 322 provided on the back side of the skin 323 (FIG. 11). The back pad 322 includes a recess 325 indented on the surface of the back pad 322 facing the skin 323, and a lid pad 326 covering the recess 325 (FIG. 13). The vibration actuator 352 and the permanent magnet 356 on the vibrator side are arranged in the recess 325, and the permanent magnet 327 on the skin side is arranged in the lid pad 326 (FIG. 13). This allows the permanent magnet 356 to be easily reciprocated in the up-down direction within the recess 325, and the reciprocation of the permanent magnet 356 can effectively vibrate the permanent magnet 327 on the skin side.
(3) The lid pad 326 has a sheet-like magnet mount 357 made of a material that hardens reversibly when vibration is applied, and the permanent magnet 327 on the skin side is arranged on the magnet mount 357 (FIG. 13). As a result, when the permanent magnet 327 is vibrated, the magnet mount 357 hardens, expanding the area of vibration and making it easier to transmit the vibration to the occupant.
(4) The seat 300 with a vibrator further includes an ECU 370 as a control unit for controlling the vibration actuator 352 (FIG. 13). The ECU 370 outputs a control signal to drive the vibration actuator 352 when informing the user of predetermined information. This allows information to be effectively communicated to the user by providing vibration.

In the above embodiment (FIG. 13), a pair of permanent magnets 327 (first permanent magnets) are disposed above and below on the back side of the skin 323, but the number and arrangement of the first permanent magnets are not limited to those described above. For example, the first permanent magnet may be a single one. However, having multiple first permanent magnets makes it easier to transmit vibrations to the occupants. In the above embodiment (FIG. 13), corresponding to the permanent magnet 327 on the skin side, the same number of permanent magnets 356 (second permanent magnets) as the permanent magnets 327 are arranged inside the back pad 322, but the number and arrangement of the second permanent magnets are not limited to those described above. The number of first permanent magnets and second permanent magnets does not have to be the same. That is, as long as they are arranged within the range of interaction with the first permanent magnets, the arrangement of the second permanent magnets can be anything.

In the above embodiment (FIG. 13), a recess 325 and a lid pad 326 (lid part) covering the recess 325 are provided in the back pad 322 (seat pad) provided on the back side of the skin 323 of the seat back 320, but these may also be provided in the cushion pad 312 provided on the back side of the skin 313 of the seat cushion 310. In the above embodiment (FIG. 13), a linear vibration actuator 352 that reciprocates the vibrator 353 in the up-down direction was provided as a vibration actuator, but the configuration of the vibration actuator is not limited to this.

In the above embodiment (FIG. 13), a magnet mount 357 (planar structure) made of a material that reversibly hardens when vibration is applied was provided in the lid pad 326, but the material of the planar structure is not limited to this. In the above embodiment (FIG. 13), when notifying the user of predetermined information, the ECU 370 as a control unit outputs a control signal to drive the vibration actuator 352, but the predetermined information includes various information to be notified to the driver and occupants other than the driver. The vibration pattern may be changed according to the type of information to be notified to the occupants.

The above vehicle seats 100, 200, 300 can be applied not only to vehicles but also to other vehicles such as air vehicle and ships. Vehicle seats 200, 300 can be modified to be used as vehicle seat 100 in FIG. 1A. That is, among the pair of left and right side ends of the pair of left and right vehicle seats 200, 200, the end face of the side end (first side end) on the other side in the left-right direction (e.g., left side) of the seat cushion 210 of the seat 200 on one side in the left-right direction (e.g., right side) is positioned on one side in the left-right direction (e.g., left side) compared to the end face of the side end (second side end) on one side in the left-right direction (e.g., right side) of the seat cushion 210 of the seat 200 on the other side in the left-right direction (e.g., left side), and a relief portion may be provided on at least one of the rear end of the first side end and the front end of the second side end to prevent interference between the first side end and the second side end. Also, among the pair of left and right side ends of the pair of left and right vehicle seats 300, 300, the end face of the side end (first side end) on the other side in the left-right direction (e.g., left side) of the seat cushion 310 of the seat 300 on one side in the left-right direction (e.g., right side) is positioned on one side in the left-right direction (e.g., left side) compared to the end face of the side end (second side end) on one side in the left-right direction (e.g., right side) of the seat cushion 310 of the seat 300 on the other side in the left-right direction (e.g., left side), and a relief portion may be provided on at least one of the rear end of the first side end and the front end of the second side end to prevent interference between the first side end and the second side end.

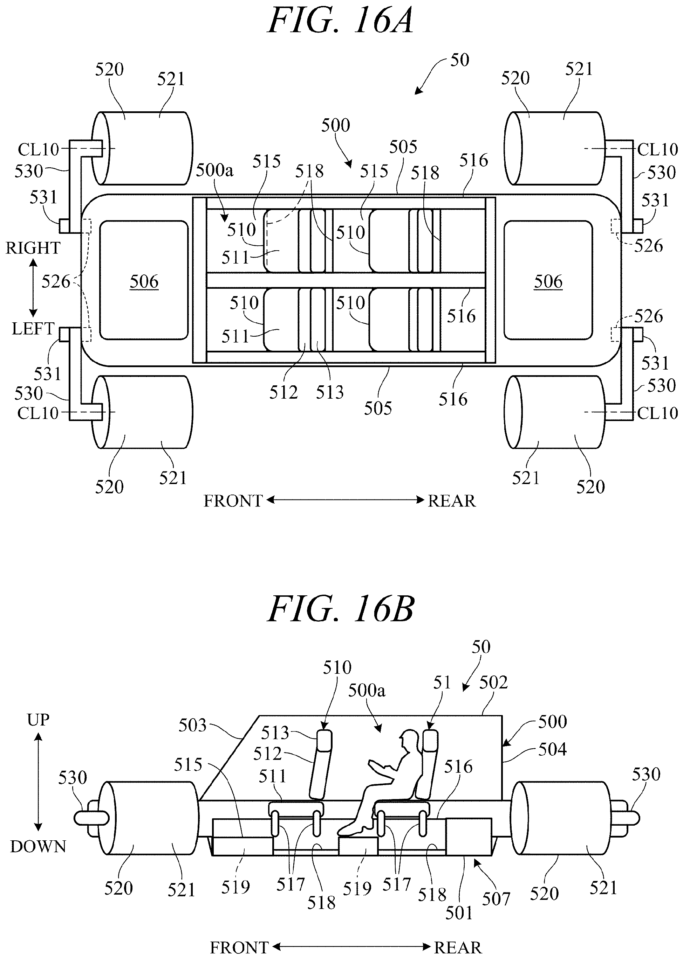

The vehicle seat according to the embodiment of the present invention can also be applied to air vehicle. Below, with reference to FIGS. 16A to 22B, the air vehicle to which the vehicle seat according to the embodiment of the present invention is applied will be described. The air vehicle according to the embodiment can receive commands from outside via a communication unit and fly unmanned without a pilot boarding. This air vehicle is configured to change the mode of its internal space between a human transport mode for transporting people and a cargo transport mode for transporting cargo. The people transported in the human transport mode, i.e., the passengers, include passengers who pay fares and occupants who board without paying fares. Below, for convenience, it is assumed that passengers are transported in the human transport mode.

FIG. 16A is a plan view schematically showing the configuration of an air vehicle 50 to which the vehicle seat according to the embodiment of the present invention is applied, and FIG. 16B is a side view. Below, the three axial directions orthogonal to each other as shown in the figure are defined as the front-rear direction (length direction), left-right direction (width direction), and up-down direction (height direction) of the air vehicle 50, and the configuration of each part will be described according to this definition. The height direction corresponds to the direction of gravity. FIGS. 16A and 16B show the aspect of the air vehicle 50 flying in the human transport mode.

As shown in FIGS. 16A and 16B, the air vehicle 50 includes an air vehicle body 500 constituting a cabin 500a and a plurality of propulsion devices 520 provided around the air vehicle body 500. The air vehicle body 500 has a bottom surface 501, a top surface 502, a front surface 503, a rear surface 504, and a pair of left and right side surfaces 505, and a substantially rectangular cabin 500a is formed inside these surfaces 501 to 505. The front surface 503, rear surface 504, and side surfaces 505 can be partially or entirely made of transparent glass. Although not shown, the side surface 505 1s provided with a door that can be opened and closed for passengers to board the air vehicle body 500.

The air vehicle body 500 includes a frame member forming the skeleton of the air vehicle body 500 and a cover member covering the frame member. Batteries 506 are mounted at the front and rear of the cabin 500a. The battery 506 is used as a power source for driving the propulsion device 520. The air vehicle body 500 is equipped with multiple vehicle seats 510 (seats). Specifically, a pair of left and right seats 510 are installed at the front and rear of the cabin 500a. The seat 510 includes a seat cushion 511 supporting the passenger's buttocks (shown only in FIG. 16B), a seat back 512 supporting the passenger's back, and a headrest 513 provided at the top of the seat back 512 to support the passenger's head.

Although not shown, the seat cushion 511 has a seat cushion frame forming the skeleton of the seat cushion 511. The seat cushion frame includes, for example, a pair of left and right longitudinal frames extending in the front-rear direction and a pair of front and rear crossmember frames extending in the left-right direction, connecting the front ends and rear ends of the pair of left and right longitudinal frames, and the whole presents a substantially rectangular frame shape in plan view. Around the seat cushion frame, a cushion pad with elasticity is provided, and the surface of the cushion pad is covered with skin.

The seat back 512 has a seat back frame forming the skeleton of the seat back 512. The seat back frame includes, for example, a pair of left and right vertical frames extending in the up-down direction and a pair of upper and lower crossmember frames extending in the left-right direction, connecting the upper ends and lower ends of the pair of left and right vertical frames, and the whole presents a substantially rectangular frame shape in front view. Around the seat back frame, a back pad with elasticity is provided, and the surface of the back pad is covered with skin.

The lower end of the seat back 512 is pivotally supported to rotate in the front-rear direction with a shaft (not shown) extending in the transverse direction as a fulcrum at the rear end of the seat cushion 511 via a reclining mechanism. The reclining mechanism has a locking mechanism that holds the tilt angle of the seat back 512 at a predetermined angle. When the lock mechanism is released, the seat back 512 can be folded forward by the urging force of a spring, for example, so that the seating surface of the seat back 512 and the seating surface of the seat cushion 511 face each other.

A floor 515 is formed in a substantially horizontal plane on the bottom surface of the cabin 500a. Vertical frames 516 extending in the front-rear direction are provided at the left end, right end, and center of the floor 515. As shown in FIG. 16B, the vertical frame 516 is provided bulging upward from the floor 515. The upper ends of the pair of front and rear support frames 517 are pivotally supported by the seat cushion frame of the seat 510 with a pivot axis (not shown) extending in the left-right direction as a fulcrum. The lower ends of the pair of front and rear support frames 517 are pivotally supported on the left and right vertical frames 516 of the seat 510 with a pivot axis (not shown) extending in the left-right direction as a fulcrum. The floor 515 and the vertical frame 516 are included in the bottom 507 of the air vehicle body 500.

A fixing part is provided at the lower end of the support frame 517 to fix the support frame 517 in an upright state in the human transport mode. When the support frame 517 is in an upright state, the seat cushion 511 is positioned above the upper surface of the vertical frame 516. At this time, the seat back 512 is upright, and the seat 510 is in a seating posture where passengers can sit.

Below the seat cushion 511 of each seat 510, a recess 518 is provided below the floor 515. The recess 518 presents a substantially rectangular shape in plan view corresponding to the seat shape, and the recess 518 forms a storage space for the seat 510. The floor 515 is provided with recesses 518 at predetermined intervals in the front-rear direction and left-right direction, and the bottom 507 of the air vehicle body 500 is formed in a concave-convex shape. A shock absorbing member 519 is provided in the space below the floor 515. Shock absorbing members can also be provided below the recess 518. That is, shock absorbing members can be arranged over the entire bottom surface of the air vehicle body 500.

On the front end surface of the air vehicle body 500, a pair of left and right pivot frames 530 are supported to rotate in the up-down direction with a shaft 531 extending in the front-rear direction as a fulcrum. At the rear end surface of the air vehicle body 500, a pair of left and right pivot frames 530 are supported, allowing rotation in the up-down direction with the shaft portion 531 extending in the front-rear direction as a fulcrum. The pivot frames 530 extend outward in the left-right direction beyond the side surfaces of the air vehicle body 500. The left-right ends of the front pivot frames 530 are bent rearward, and the left-right ends of the rear pivot frames 530 are bent forward.

At the tip of the pivot frame 530, a propulsion device 520 is supported. The propulsion device 520 has a rotating body 521 (commonly known as a Schneider propeller) that is generally cylindrical in shape, centered around the axis CL10 extending in the front-rear direction. Multiple propulsion devices 520 are arranged on the left-right outside of the air vehicle body 500. That is, propulsion devices 520 are arranged at the right front diagonal, left front diagonal, right rear diagonal, and left rear diagonal of the cabin 500a.

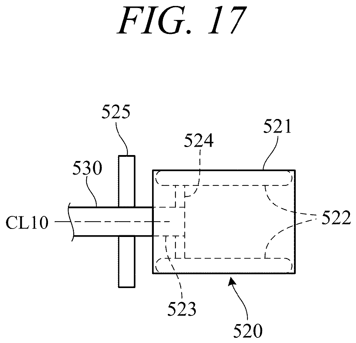

FIG. 17 is an enlarged diagram schematically illustrating the main part configuration of the tip of the pivot frame 530. As shown in FIG. 17, the rotating body 521 has multiple wings 522 extending in the front-rear direction and disposed circumferentially along the cylindrical surface, and is rotatably supported at the tip of the pivot frame 530 centered around the axis CL10. The multiple wings 522 are configured to rotate around the axis CL10 driven by an electric motor 523 provided at the tip of the pivot frame 530, allowing the mounting angle to be changed via a link mechanism 524. Thus, the propulsion device 520 can generate lift force and thrust force based on the principle of the Schneider propeller, enabling vertical takeoff and horizontal flight of the air vehicle 50.

A substantially circular disk portion 525 centered around the axis CL10 is fixed to the pivot frame 530. The disk portion 525 is a non-rotating body with a larger diameter than the rotating body 521 and protrudes radially outward from the rotating body 521. The rotating body 521 and the disk portion 525 are included in the propulsion device 520. Note that in FIGS. 16A and 16B, the illustration of the disk portion 525 is omitted. The disk portion 525 can also be provided on both front and rear sides of the rotating body 521, interposing the rotating body 521. As shown in FIG. 16A, the shaft portion 531 of the pivot frame 530 is provided with an electric motor 526 that rotates the pivot frame 530 in upward and downward directions.

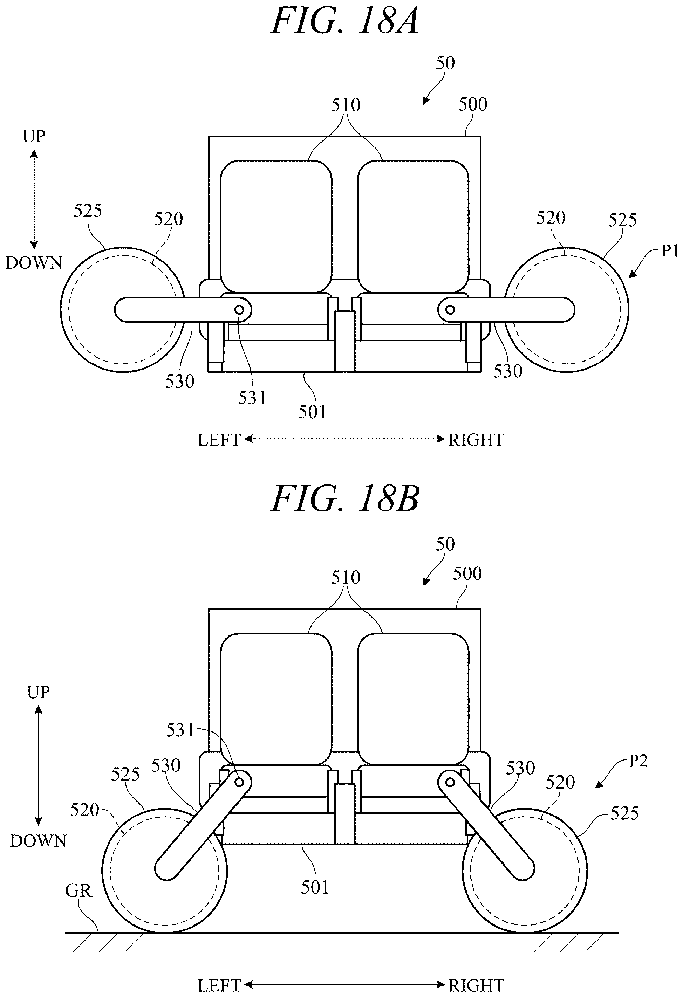

FIGS. 18A and 18B are front views (viewed from the front) showing the main part configuration of the air vehicle 50. FIG. 18A shows the flight position of the air vehicle 50, and FIG. 18B shows the landing position. As shown in FIG. 18A, during flight, the pivot frame 530 rotates upward by a predetermined angle with the shaft portion 531 as a fulcrum, driven by the electric motor 526. At this time, the propulsion device 520 reaches a predetermined ascent position P1. At the ascent position P1, the pivot frame 530 becomes approximately horizontal, and the lower end of the propulsion device 520 (rotating body 521) is positioned above the bottom surface 501 of the air vehicle body 500. Note that at the ascent position P1, the lower end of the propulsion device 520 may be positioned above the bottom surface 501.

As shown in FIG. 18B, during landing, the pivot frame 530 rotates downward by a predetermined angle with the shaft portion 531 as a fulcrum, driven by the electric motor 526. At this time, the propulsion device 520 reaches a predetermined descent position P2. At the descent position P2, the pivot frame 530 extends diagonally downward and outward in the left-right direction, and the lower end of the propulsion device 520 (rotating body 521) is positioned below the bottom surface 501 of the air vehicle body 500. At this time, the lower end of the disk portion 525 becomes the lowest part of the air vehicle 50. Therefore, the disk portion 525 makes contact with the ground GR, and the four disk portions 525 surrounding the air vehicle body 500 can stably hold the air vehicle 50 in the landing position.

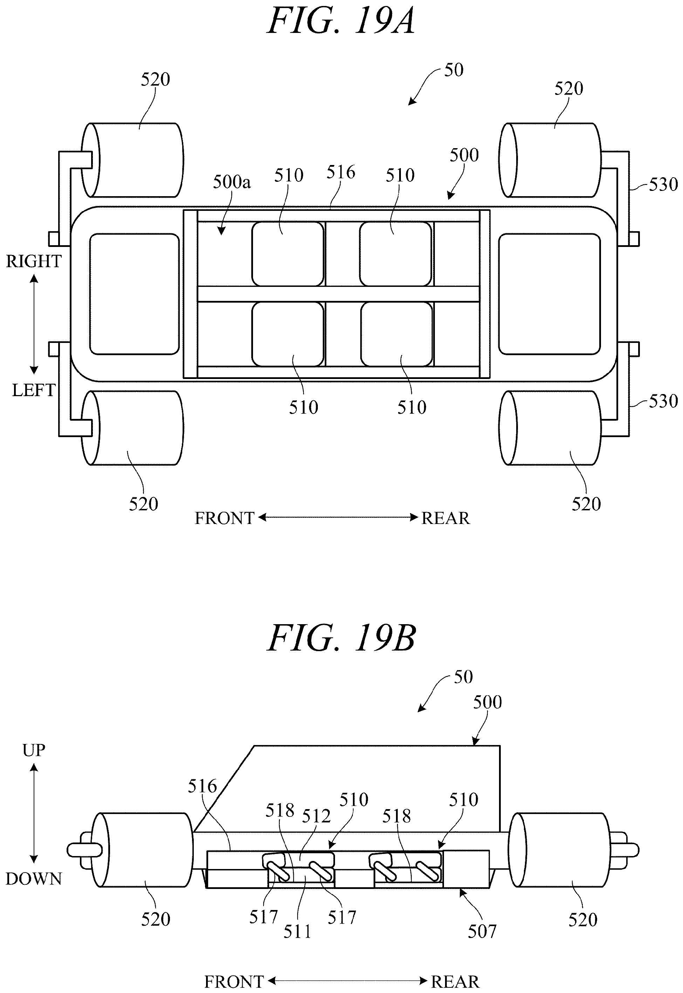

The air vehicle 50 according to this embodiment can change the cabin configuration from a passenger transport mode to a cargo transport mode. FIG. 19A is a plan view showing the configuration of the air vehicle 50 in flight in cargo transport mode, and FIG. 19B is a side view. In passenger transport mode and cargo transport mode, the posture of the seat 510 inside the cabin 500a differs.

That is, as shown in FIGS. 19A and 19B, in cargo transport mode, the seat back 512 is folded forward to the maximum extent, and the seating surface of the seat cushion 511 faces the seating surface of the seat back 512. Furthermore, the lock part of the support frame 517 is released, and the support frame 517 rotates backward with the shaft part at the lower end of the support frame 517 as a fulcrum. The posture of the seat 510 in this case is referred to as the retracted posture. Thus, the seat cushion 511 moves backward and downward together with the seat back 512, and the seat 510 is retracted in the recess 518.

When the seat 510 is retracted in the recess 518, the upper surface of the seat 510 becomes a horizontal plane at approximately the same height as the upper surface of the vertical frame 516. Therefore, the seat 510 does not protrude above the vertical frame 516, expanding the available space inside the cabin 500a. Thus, sufficient space can be formed for loading cargo inside the cabin, allowing easy loading of large or numerous cargo.

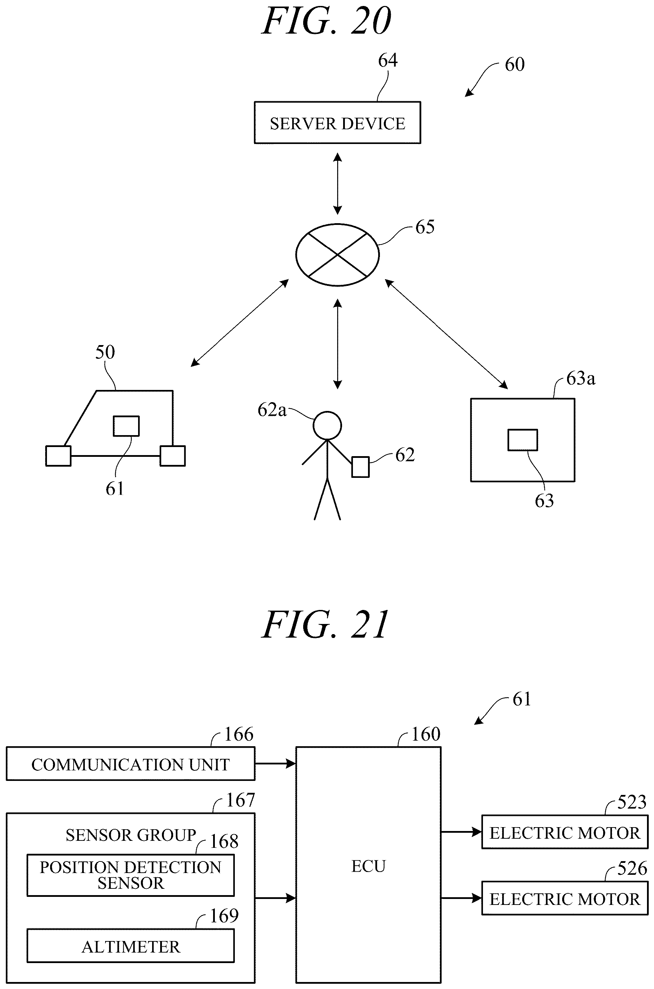

The flight of the air vehicle 50 is managed by a management system. FIG. 20 is a diagram showing the schematic configuration of the management system 60. As shown in FIG. 20, the management system 60 includes a flight control device 61 mounted on the air vehicle 50, a user terminal 62 possessed by a user 62a (passenger), a business entity terminal 63 possessed by a business entity 63a (such as a transport company), and a server device 64. The server device 64 is, for example, a server of the business entity that owns the air vehicle 50. The flight control device 61, user terminal 62, business entity terminal 63, and server device 64 are each connected to a communication network 65 such as a wireless communication network, Internet network, or telephone line network via communication units.

FIG. 21 is a block diagram showing the main part configuration of the flight control device 61. As shown in FIG. 21, the flight control device 61 includes an ECU160, a communication unit 166, a sensor group 167, and electric motors 523, 526, each connected to the ECU160. The ECU160 has a CPU and memory. The ECU160 reads flight commands received via the communication unit 166. The flight command includes information such as mode setting information inside the cabin, information on passengers or cargo to be loaded, departure and destination information, scheduled date and time of flight start, target arrival date and time, and flight route.

The sensor group 167 includes a position detection sensor 168 that detects position information of the air vehicle 50 and an altimeter 169 that detects the altitude of the air vehicle 50. The position detection sensor 168 can be configured as a GPS sensor that detects position based on signals from GPS satellites. The electric motor 523 is a drive motor for the propulsion device 520 (FIG. 17), and the electric motor 526 is a drive motor for the pivot frame 530 (FIG. 16A).

The ECU160 outputs control signals to the electric motors 523, 526 based on the flight commands read via the communication unit 166 and the detected values from the sensor group 167. That is, the ECU160 controls the electric motor 523 so that the air vehicle 50 takes off from the departure point at the scheduled flight start time, flies along the predetermined flight route toward the destination, and lands at the destination at the target scheduled time. Furthermore, the ECU160 controls the electric motor 526 so that when the air vehicle 50 ascends to a predetermined altitude after takeoff, it moves to the flight position (FIG. 18A), and when it descends to a predetermined altitude before landing, it moves to the landing position (FIG. 18B).

The ECU160 has a function as a fall detection unit to detect the fall (crash) of the air vehicle 50. Specifically, it detects the descent speed of the air vehicle 50 based on signals from the altimeter 169, and if the descent speed is above a predetermined speed despite no command for descent above the predetermined speed, it determines that the air vehicle 50 is falling. In this case, when the altitude measured by the altimeter 169 reaches a predetermined value, the ECU160 outputs a control signal to the electric motor 526, causing the pivot frame 530 to rotate downward so that the position of the propulsion device 520 becomes a predetermined impact mitigating position.

The impact mitigating position is a position where the lower end surface of the propulsion device 520 is below the bottom surface 501 of the air vehicle 500, corresponding to the descent position P2 (FIG. 18B) of the propulsion device 520 in the landing position, for example. The impact mitigating position may be higher or lower than the descent position P2. The height of the propulsion device 520 during a fall may be adjusted according to the terrain of the fall location. The height of the propulsion device 520 during a fall may be adjusted between passenger transport mode and cargo transport mode.

During the fall of the air vehicle 50, by lowering the propulsion device 520 to a predetermined impact mitigating position, the propulsion device 520 collides with the ground before the air vehicle body 500 when the air vehicle 50 crashes. As a result, the propulsion device 520 deforms and can absorb the impact during the crash. After the impact is absorbed by the propulsion device 520, the air vehicle body 500 collides with the ground. At this time, the bottom 507 of the air vehicle body 500, which is configured in an uneven shape, deforms, thereby absorbing the impact during the crash. That is, according to this embodiment, the propulsion device 520 can function as a first crushable zone, and the bottom 507 of the air vehicle body 500 can function as a second crushable zone. Thus, in the event of a crash of the air vehicle 50, the passengers and cargo in the cabin 500a can be well protected.

The user terminal 62 in FIG. 20 includes a communication unit, an input unit for the user (passenger) 62a to enter reservation information for the air vehicle 50, and an output unit to notify the user 62a of information corresponding to the reservation information (such as reservation confirmation information). The reservation information includes user information such as the name and contact details of user 62a, information on the departure and destination locations, and the scheduled boarding date and time. The reservation information is confirmed through communication with the server device 64.

The business entity terminal 63 includes a communication unit, an input part where the business entity (transport company) 63a inputs reservation information for the air vehicle 50, and an output part that notifies the business entity 63a of information corresponding to the reservation information (such as reservation confirmation information). The reservation information includes the name of the business entity 63a, business entity information such as contact details, cargo information such as type, quantity, size, and weight of the cargo, information on the departure and destination locations, and the scheduled transport date and time. The reservation information is confirmed through communication with the server device 64.

The server device 64 includes a communication unit and a CPU that executes various processes based on information (such as reservation information) received via the communication unit. The CPU receives reservation information sent from the user terminal 62 and the business entity terminal 63 and determines the flight schedule of the air vehicle 50 based on the reservation information. The flight schedule includes information on the departure location and scheduled departure date and time of the air vehicle 50, information on the destination and scheduled arrival date and time, flight route information, and usage fee information. The CPU temporarily sends the flight schedule to the user terminal 62 or the business entity terminal 63 via the communication unit, and once the flight schedule is accepted by user 62a or business entity 63a, it finalizes the flight schedule.

Once the flight schedule is finalized, the server device 64 sends the flight schedule information to the flight control device 61 via the communication unit. The flight control device 61 stores the received flight schedule in memory. Subsequently, when the flight control device 61 receives a flight command sent from the server device 64, the ECU 160 controls the electric motors 523, 526 according to the flight schedule and initiates the flight of the air vehicle 50.

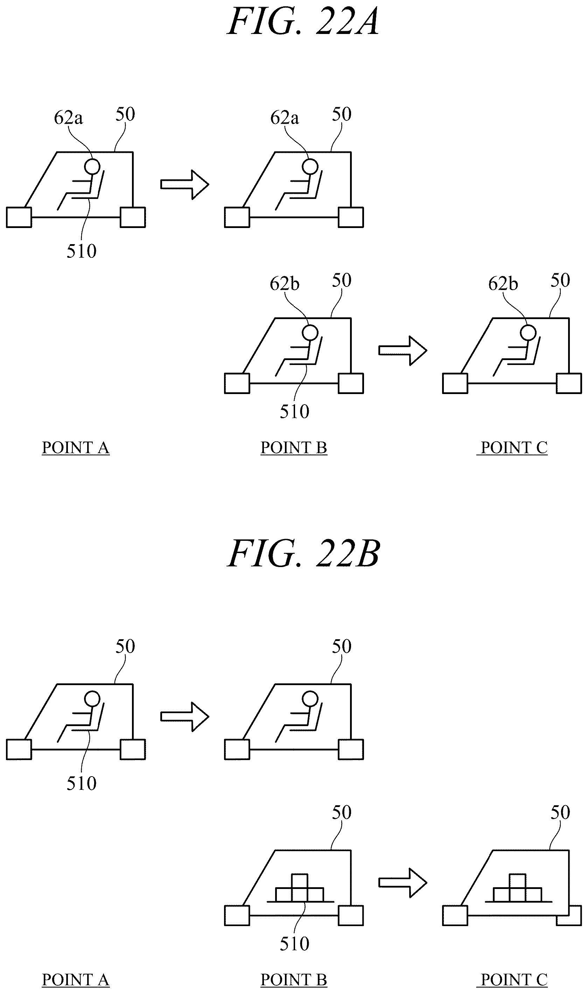

FIGS. 22A and 22B are diagrams schematically illustrating an example of the operation of the air vehicle 50. FIG. 22A is an example where the flight schedule is determined to transport user 62a from point A to point B in passenger transport mode, and then transport another user 62b from point B to point C. At point B, the battery 506 mounted on the air vehicle 50 is charged. The flight schedule may be determined to transport user 62b from point B to point A. The flight schedule may be determined to transport the same user 62a from point B to point C or point A. In FIG. 22A, the seat 510 remains in the sitting posture.

FIG. 22B is an example where the flight schedule is determined to transport user 62a from point A to point B in passenger transport mode, and then transport cargo 63b from point B to point C in cargo transport mode. The flight schedule may be determined to transport cargo 63b from point B to point A. In FIG. 22B, the seat 510 is altered to the retracted posture at point B. The flight schedule may be determined to transport other cargo from point A to point B. As shown in FIG. 22A, by determining the flight schedule so that the server device 64 continuously transports multiple users 62a, 62b, or continuously transports user 62a and cargo 63b, efficient operation of the air vehicle 50 is possible.

According to this embodiment, the following effects can also be achieved.
(1) The air vehicle 50 includes an air vehicle body 500 with a cabin 500a equipped with multiple vehicle seats 510 for passengers to sit on, and a propulsion device 520 that generates thrust (FIG. 16A). The seat 510 is rotatably supported on the bottom 507 (more specifically, the vertical frame 516) of the air vehicle body 500 so that it can change posture between a sitting posture corresponding to the passenger transport mode and a retracted posture corresponding to the cargo transport mode (FIGS. 16B, 19B). In the sitting posture, the seat 510 is erected on the upper surface of the floor 515 of the cabin 500a, and in the retracted posture, the seat 510 is retracted below the floor 515 (FIGS. 16B, 19B). By retracting the seat 510 below the floor 515 in the retracted posture, the space occupied by the seat 510 inside the cabin 500a can be reduced. As a result, sufficient space can be formed in the cabin 500a for loading cargo.
(2) The bottom 507 of the vehicle seat 510 is configured in an uneven shape to store the seat 510 in the retracted posture (FIGS. 16B, 19B). This allows the vehicle seat to be retracted below the floor 515. Additionally, the uneven bottom 507 can function as a crushable zone to absorb impact in the event of a fall of the air vehicle 50.
(3) The air vehicle 50 further includes a rotating frame 530 that supports the propulsion device 520 so that it can move upward and downward from the air vehicle body 500 (FIG. 16B). The rotating frame 530 supports the propulsion device 520 so that it can move to a lowered position P2, which is below the bottom surface 501 of the air vehicle body 500 (FIG. 18B). This allows the position of the air vehicle 50 to be changed from a flight position to a landing position.
(4) The air vehicle 50 further includes an ECU 160 that controls the operation of the rotating frame 530 (FIG. 21). The propulsion device 520 includes a rotating body 521 and a disc portion 525 that protrudes below the rotating body 521 at the lowered position P2 (FIG. 17). The ECU 160 moves the propulsion device 520 to a raised position P1, which is above the lowered position P2, during flight of the air vehicle 50, and moves the propulsion device 520 to the lowered position P2 during landing of the air vehicle 50 (FIGS. 18A, 18B). This allows the air vehicle 50 to be stably held in the landing position via the disc portion 525.
(5) The air vehicle 50 further includes an altimeter 169 and an ECU 160 as a fall detection unit to detect the fall of the air vehicle 50, and an ECU 160 to control the operation of the rotating frame 530 (FIG. 21). When a fall of the air vehicle 50 is detected by the fall detection unit, the ECU 160 moves the propulsion device 520 to the lowered position. This allows the propulsion device 520 to function as a crushable zone, protecting the passengers and cargo in the cabin 500a.
(6) The propulsion device 520 is constituted by a Schneider propeller that rotates around an axis CL10 extending in a substantially horizontal direction. This allows the air vehicle 50 to be miniaturized compared to those with wings that rotate around an axis extending in the up-down direction.

In the above embodiment (FIGS. 16A-22B), the air vehicle 50 is configured to fly unmanned, but it may also be flown by a crew member on board operating the air vehicle. In the above embodiment (FIGS. 16A-22B), the vehicle seat 510 is rotatably provided on the vertical frame 516 via a support frame 517 so that it can change posture between a sitting posture (first posture) corresponding to the passenger transport mode (first mode) and a retracted posture (second posture) corresponding to the cargo transport mode (second mode), but any configuration of the vehicle seat is acceptable as long as it is rotatably supported on the bottom of the air vehicle body to change posture between the first posture and the second posture.

In the above embodiment (FIGS. 16A-22B), the bottom 507 of the air vehicle 50 is configured in an uneven shape to store the vehicle seat 510 in the retracted posture, but the configuration of the bottom is not limited to the above. In the above embodiment (FIGS. 16A-22B), a Schneider propeller is used as the propulsion device 520, but the configuration of the propulsion device is not limited to this. In the above embodiment (FIGS. 16A-22B), the propulsion device 520 is supported by the rotating frame 530 so that it can move upward and downward from the air vehicle body 500, but any configuration of the support part is acceptable as long as it supports the propulsion device 520 so that it can move to a predetermined position (lowered position) below the bottom surface of the air vehicle body.

In the above embodiment (FIGS. 16A-22B), an electric motor 526 is used as an actuator to drive the rotating frame 530, but actuators other than electric motors may also be used. In the above embodiment (FIGS. 16A-22B), the ECU 160 as a control unit controls the electric motor 526 to move the propulsion device 520 to a raised position P1 (second predetermined position) above the lowered position P2 (first predetermined position) during flight of the air vehicle 50, and to move the propulsion device 520 to the lowered position P2 during landing of the air vehicle 50, but the configuration of the control unit is not limited to this.

In the above embodiment (FIGS. 16A-22B), the propulsion device 520 is configured to have a rotating body 521 (rotating part) and a disc portion 525 (non-rotating part), but the non-rotating part can also be provided outside the propulsion device. In the above embodiment (FIGS. 16A-22B), the disc portion 525 is configured as a non-rotating part, but the non-rotating part does not need to be disc-shaped as long as it protrudes below the rotating body 521 when the propulsion device 520 is in the lowered position P2. In the above embodiment (FIGS. 16A-22B), the ECU 160 is configured to detect the fall of the air vehicle 50 based on signals from the altimeter 169, but the configuration of the fall detection unit is not limited to this.

The above vehicle seat 510 is not limited to the air vehicle 50 and can also be applied to vehicles such as ships, and other vehicles. The vehicle seat 510 can be modified for use as the vehicle seat 100 shown in FIG. 1A. That is, among the pair of left and right side ends of the pair of left and right vehicle seats 510, 510, the end face of the side end (first side end) on the other side in the left-right direction (e.g., left side) of the seat cushion 511 of the seat 510 on one side in the left-right direction (e.g., right side) is positioned on one side in the left-right direction (e.g., left side) compared to the end face of the side end (second side end) on one side in the left-right direction (e.g., right side) of the seat cushion 511 of the seat 510 on the other side in the left-right direction (e.g., left side), and a relief portion may be provided on at least one of the rear end of the first side end and the front end of the second side end to prevent interference between the first side end and the second side end.

Incidentally, the seating surface of the vehicle seat may be formed using a breathable mesh material. By using mesh material, the breathability of the seat can be enhanced, and in hot summer weather, the comfort of the occupant sitting on the seat can be improved while suppressing the operation of the air conditioning system. However, when the temperature is low, such as in winter, if the seat is highly breathable, the occupant sitting on the seat may feel cold, compromising the occupant's comfort. Considering this point, it is preferable to configure the vehicle seat to be able to adjust breathability, increasing it when the temperature is high and decreasing it when the temperature is low.

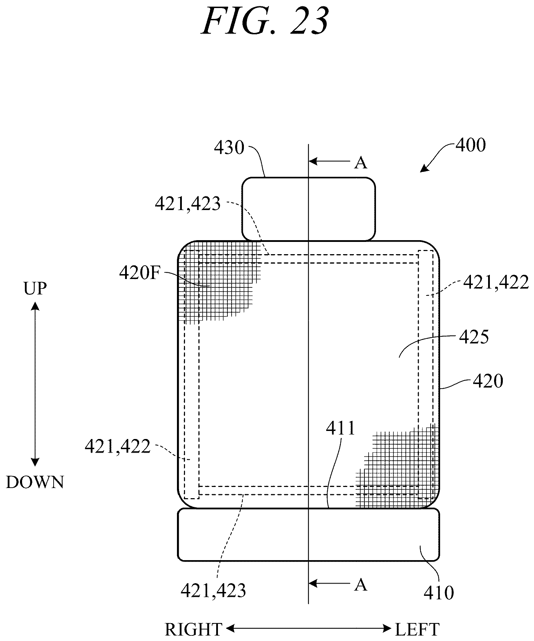

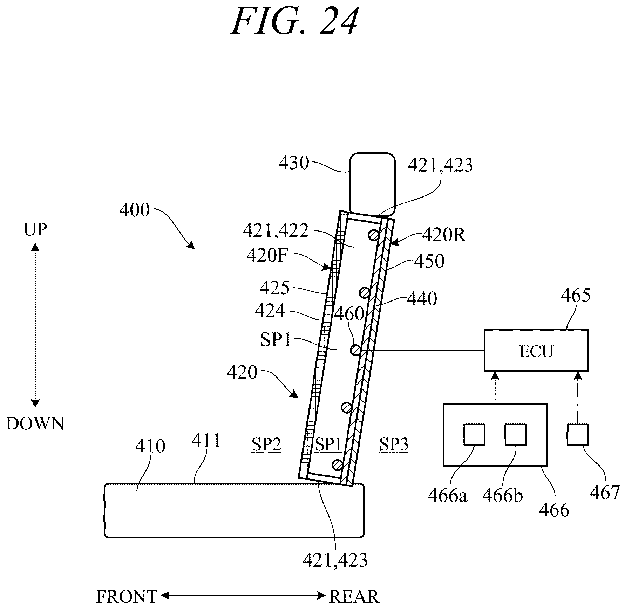

Hereinafter, the configuration of a vehicle seat with adjustable breathability (referred to as a ventilation adjustment seat) will be described with reference to FIGS. 23 to 29. FIG. 23 is a front view showing the schematic configuration of the ventilation adjustment seat 400 according to this embodiment, and FIG. 24 is a side view along line A-A of FIG. 23. In the following, the front-rear direction (length direction), left-right direction (width direction), and up-down direction (height direction) are defined as shown in the figures, and the configuration of each part will be described according to this definition. The ventilation adjustment seat 400 according to this embodiment can be mounted on the aforementioned vehicles 10, 10A, and air vehicle 50. The ventilation adjustment seat 400 can also be mounted on vehicles other than automotives and air vehicle. In the following, an example of mounting the ventilation adjustment seat 400 on a vehicle will be described.

As shown in FIGS. 23 and 24, the ventilation adjustment seat 400 includes a seat cushion 410 that supports the occupant's buttocks, a seat back 420 that supports the occupant's back, and a headrest 430 provided at the top of the seat back 420 to support the occupant's head. The ventilation adjustment seat 400 is characterized by the configuration of the seat back 420. Therefore, in FIG. 24, the cross-sectional shape of the seat back 420 is shown, while for the seat cushion 410 and headrest 430, only the external shape is shown for convenience. The bottom of the seat cushion 410 is provided with a slide mechanism for sliding the seat cushion 410 in the front-rear direction, a height adjustment mechanism for adjusting the height of the seat cushion 410, etc., but these are also omitted from the illustration.

The seat cushion 410 has a substantially rectangular shape in plan view. Although not shown, the seat cushion 410 includes a substantially rectangular frame-shaped seat cushion frame in plan view, a pressure-receiving member disposed inside the seat cushion frame, an elastic pad member disposed around the seat cushion frame, and a skin covering the pad member. A seating surface 411 on which the occupant sits is formed on the upper surface of the seat cushion 410. A bank portion protruding upward from the seating surface 411 can also be provided on both the left and right sides of the seating surface 411 of the seat cushion 410.

The seat back 420 has a substantially rectangular shape in front view. The seat back 420 includes a substantially rectangular frame-shaped seat back frame 421 in front view, a front surface portion 420F forming the front surface of the seat back 420, and a rear surface portion 420R forming the rear surface of the seat back 420. More specifically, the seat back frame 421 includes a pair of left and right vertical frames 422, 422 extending in the up-down direction, and a pair of upper and lower horizontal frames 423, 423 extending in the left-right direction, connecting the upper ends and lower ends of the pair of vertical frames 422, 422. The upper, lower, left, and right peripheral edges of the front surface portion 420F are supported by the front ends of the vertical frames 422 and the front ends of horizontal frames 423. The upper, lower, left, and right peripheral edges of the rear surface portion 420R are supported by the rear ends of the vertical frames 422 and the rear ends of horizontal frames 423.

The front surface portion 420F is composed of a mesh member 425 made of a mesh or net-like fiber material, and the entire front surface of the seat back 420 is covered by the mesh member 425. The mesh member 425 may be composed of an elastic fiber material. The mesh member 425 can also be referred to as a net material. The front surface portion 420F and the rear surface portion 420R are arranged at a predetermined distance in the front-rear direction. Pad members and pressure-receiving members are omitted from the seat back 420, and a cavity (internal space SP1) is formed between the front surface portion 420F and the rear surface portion 420R. A seating surface 424 on which the occupant sits is formed on the front surface of the mesh member 425. The mesh member 425 is highly breathable due to its net-like structure, allowing communication between the internal space SP1 and the external space SP2 in front of the seating surface 424 through the mesh member 425.

The rear surface portion 420R includes a pair of front and rear plate members 440, 450, which are substantially rectangular in plan view and arranged inside the seat back frame 421, namely a front plate 440 and a rear plate 450, and a linear member 460 arranged in front of the front plate 440. The front plate 440 is arranged overlaying the rear plate 450. The rear plate 450 is arranged at the rearmost part of the seat back 420 facing the external space SP3 behind the seat back 420, and the rear surface of the rear plate 450 forms the rear surface of the seat back 420.

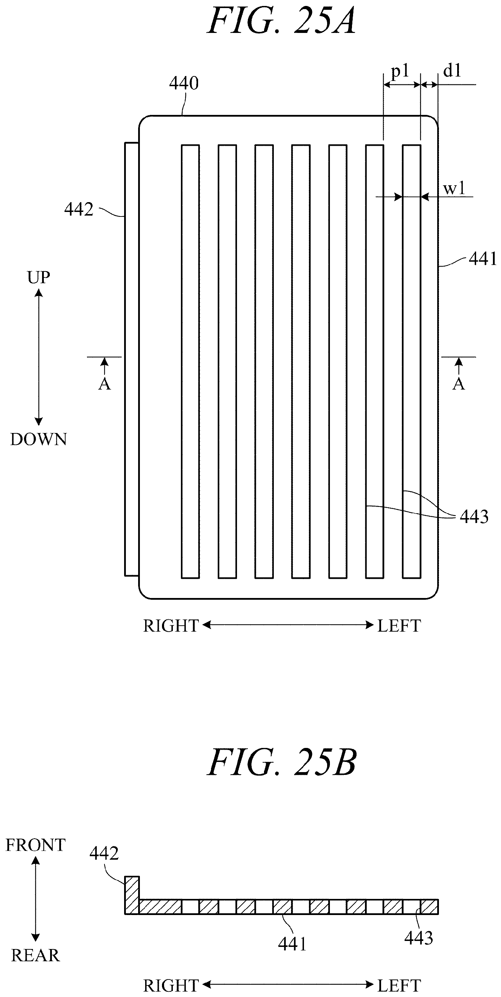

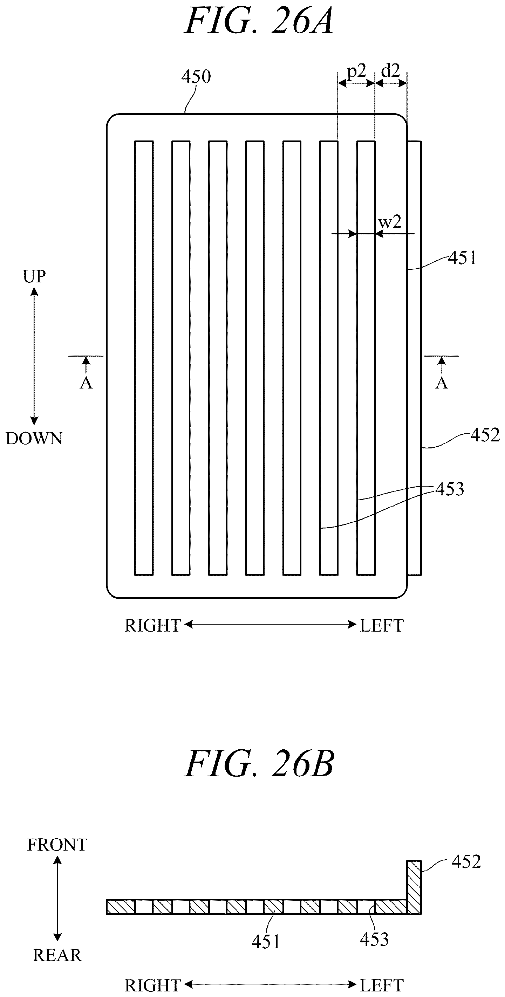

FIG. 25A is a front view (viewed from the front) of the front plate 440, and FIG. 25B is a cross-sectional view of the front plate 440 along line A-A of FIG. 25A. FIG. 26A is a front view (viewed from the front) of the rear plate 450, and FIG. 26B is a cross-sectional view of the rear plate 450 along line A-A of FIG. 26A.

As shown in FIGS. 25A and 25B, the front plate 440 includes a flat plate portion 441 of a predetermined thickness with a substantially rectangular shape, and an end plate portion 442 provided on the right end surface of the flat plate portion 441, protruding forward. The flat plate portion 441 is provided with a plurality of slit holes 443 penetrating the flat plate portion 441 in the front-rear direction. The plurality of slit holes 443 have the same shape as each other, are provided at equal intervals in the left-right direction, and each extends elongated in the up-down direction. More specifically, the slit holes 443 have a predetermined width W1 and are formed in a predetermined number at a predetermined pitch p1 from a position a predetermined distance d1 to the right from the left end surface of the flat plate portion 441.

As shown in FIGS. 26A and 26B, the rear plate 450 includes a flat plate portion 451 of a predetermined thickness with a substantially rectangular shape, and an end plate portion 452 provided on the left end surface of the flat plate portion 451, protruding forward. The external dimensions (thickness, front-rear length, left-right length) of the flat plate portion 451 are the same as those of the flat plate portion 441. The front-rear length of the end plate portion 452 is longer than the front-rear length of the end plate portion 442. That is, when the front plate 440 is overlayed on the front surface of the rear plate 450, the protrusion amount of the end plate portion 452 is set so that the front end face of the end plate portion 442 and the front end face of the end plate portion 452 are positioned on the same plane.

The flat plate portion 451 is provided with a plurality of slit holes 453 penetrating the flat plate portion 451 in the front-rear direction. The plurality of slit holes 453 have the same shape as each other, are provided at equal intervals in the left-right direction, and each extends elongated in the up-down direction. More specifically, the slit holes 453 have a predetermined width W1 and are formed in the same number as the number of slit holes 443 at a predetermined pitch p2 from a position a predetermined distance d2 to the right from the left end surface of the flat plate portion 451. The pitch p2 of the slit holes 453 is equal to the pitch p1 of the slit holes 443. The width W2 of the slit holes 453 is equal to the width W1 of the slit holes 443. Note that the width W2 may be narrower or wider than the width W1. The distance d2 is equal to the sum of the distance d1 and the width W1.

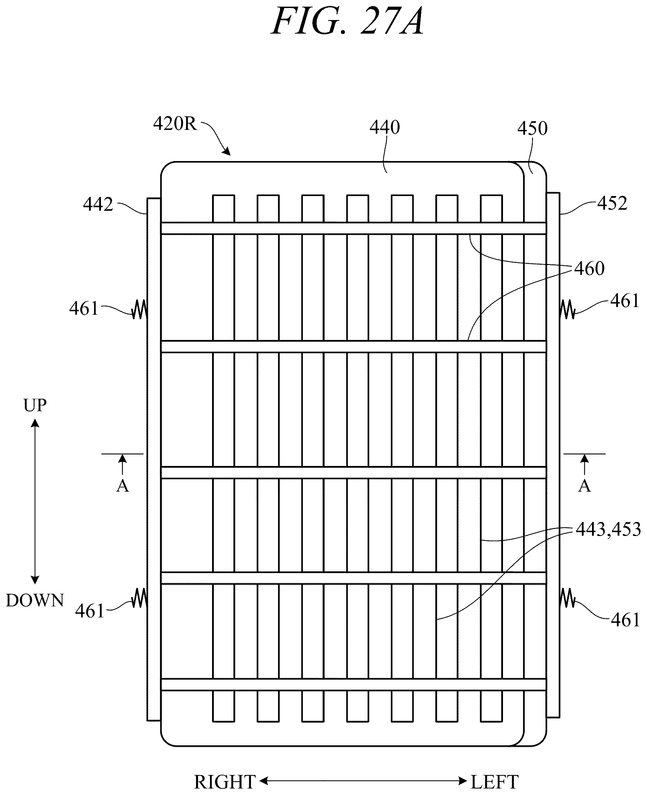

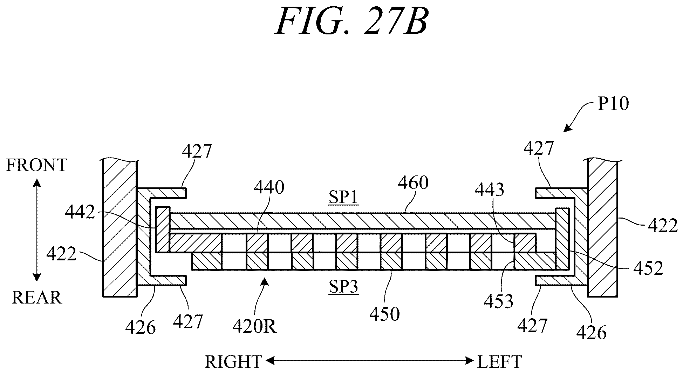

FIG. 27A is a front view (viewed from the front) of the rear surface portion 420R of the seat back 420 (FIG. 24), and FIG. 27B is a cross-sectional view of the rear surface portion 420R along line A-A of FIG. 27A. In FIG. 27A, the illustration of the vertical frames 422 and horizontal frames 423 surrounding the rear surface portion 420R is omitted. As shown in FIGS. 27A and 27B, a plurality of linear members 460 with conductivity are arranged at equal intervals in the up-down direction in front of the front plate 440.

The linear member 460 is an actuator made of a shape memory alloy that generates heat and contracts when energized, and returns to its original length when the power is turned off, and can use, for example, Biometal (registered trademark). The right end of the linear member 460 is fixed to the left end surface of the end plate portion 442 of the front plate 440, and the left end is fixed to the right end surface of the end plate portion 452 of the rear plate 450.

As shown in FIG. 27B, a guide 426 with a substantially C-shaped cross-section is fixed to the inner side surfaces in the left-right direction of the vertical frames 422. The guide 426 includes a base portion 428 fixed to the vertical frame 422, and a pair of front and rear protruding portions 427, 427 protruding inward in the left-right direction from the front and rear ends of the base portion 428. The pair of protruding portions 427, 427 are arranged behind the rear plate 450 and in front of the linear member 460 so as to cover both the left and right ends of the rear plate 450 and the left and right ends of the linear member 460. As a result, the front plate 440 and the rear plate 450 are restricted in position in the front-rear direction by the pair of protruding portions 427, 427 and are supported so as to be movable in the left-right direction.

As shown in FIG. 27A, one end of a tension spring 461 is fixed to the right end surface of the end plate portion 442 of the front plate 440 and the left end surface of the end plate portion 452 of the rear plate 450, respectively. Although not shown in FIG. 27B, the other end of the tension spring 461 is fixed to the base portion 428 of the guide 426. In this way, a tension spring 461 is interposed between the guide 426 and the end plates 442, 452, and the spring force of the tension spring 461 constantly acts on the front plate 440 and the rear plate 450 to urge them outward in the left-right direction. If a spring force is applied to maintain the linear member 460 in its initial state before heating by energization, other biasing members different from the tension spring 461 may be used. One end of the biasing member may be connected to the linear member 460.

FIGS. 27A and 27B correspond to the initial state before the linear member 460 is heated by energization. In the initial state, the linear member 460 is at its initial length, the front plate 440 is positioned at the rightmost position moved to the right, and the rear plate 450 is positioned at the leftmost position moved to the left. At this time, the positions of the multiple slit holes 443 of the front plate 440 and the multiple slit holes 453 of the rear plate 450 coincide. As a result, the internal space SP1 in front of the rear surface portion 420R and the external space SP3 at the rear communicate with each other through the slit holes 443, 453. The positions of the front plate 440 and the rear plate 450 in FIG. 27B are referred to as the communication position P10.

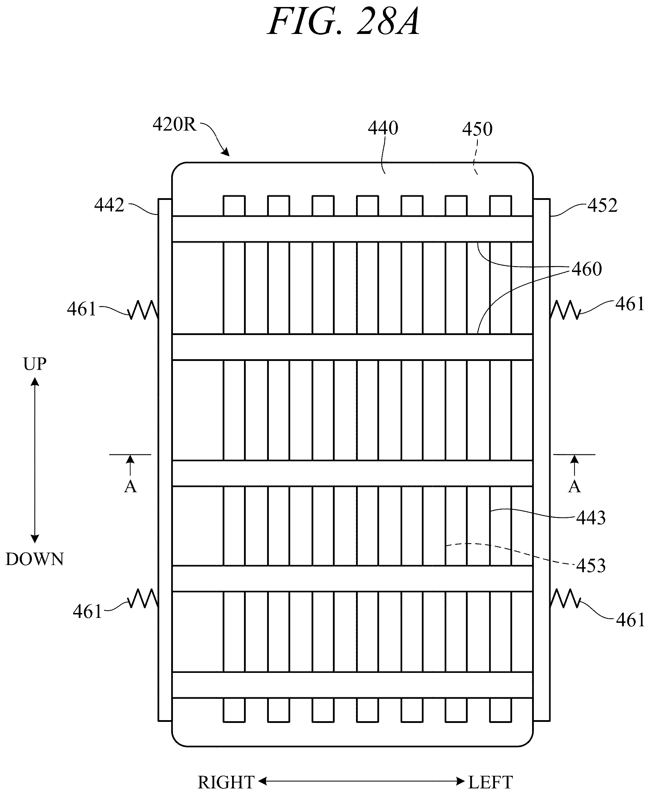

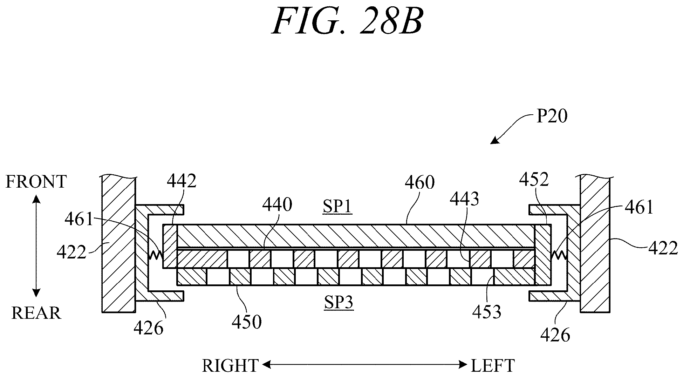

FIG. 28A is a front view of the rear surface portion 420R of the seat back 420 in the heated state after the linear member 460 is heated by energization, and FIG. 28B is a cross-sectional view of the rear surface portion 420R along line A-A of FIG. 28A. As shown in FIGS. 28A and 28B, in the heated state, the linear member 460 contracts, and the front plate 440 and the rear plate 450 move inward in the left-right direction along the guide 426 against the spring force of the tension spring 461. When the amount of movement of the front plate 440 and the rear plate 450 reaches a predetermined amount, the left end surface of the front plate 440 comes into contact with the right end surface of the end plate portion 452. As a result, the inward movement of the front plate 440 and the rear plate 450 in the left-right direction is restricted.

At this time, the position of the slit hole 443 of the front plate 440 is offset in the left-right direction by an amount corresponding to the width W1 of the slit hole 443 or the width W2 of the slit hole 453 from the position of the slit hole 453 of the rear plate 450. As a result, the front of the slit hole 453 of the rear plate 450 is blocked by the front plate 440, preventing communication between the internal space SP1 and the external space SP3 through the slit holes 443, 453. The positions of the front plate 440 and the rear plate 450 in FIG. 28B are referred to as the blocking position P20.

As shown in FIG. 24, an ECU 465 is connected to the linear member 460. Signals from the operation part 466 and the temperature sensor 467 are input to the ECU 465. The operation part 466 includes various switches operated by the occupant seated on the ventilation adjustment seat 400. For example, the operation part 466 includes a manual switch 466a for inputting an operation command for the linear member 460 and an automatic mode selection switch 466b for selecting an automatic mode that automatically operates the linear member 460. The temperature sensor 467 detects the temperature inside the vehicle cabin.

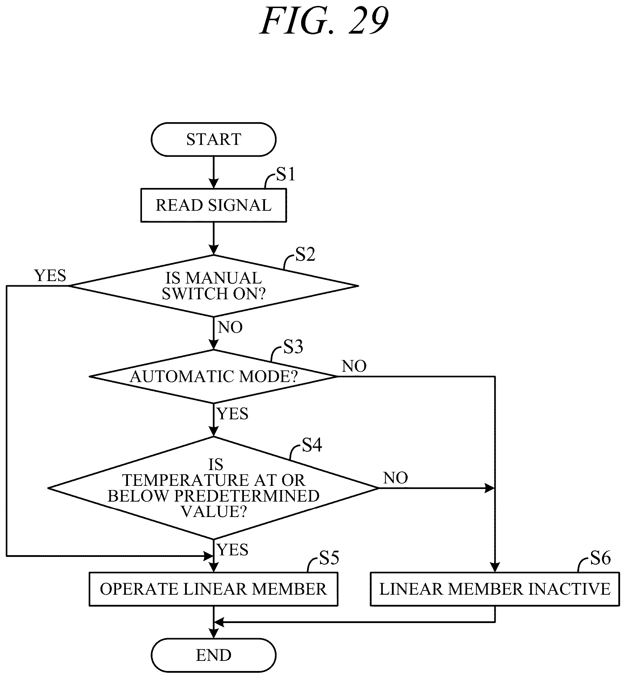

The ECU 465 has a CPU and memory. The ECU (CPU) 465 executes processing according to a predetermined program based on signals from the operation part 466 and the temperature sensor 467, and outputs control signals to the linear member 460. FIG. 29 is a flowchart showing an example of processing executed by the ECU 465. The processing shown in this flowchart is started, for example, by turning on the vehicle's power key switch and is repeated at predetermined periods.

As shown in FIG. 29, first, in step S1, signals from the operation part 466 and the temperature sensor 467 are read. Next, in step S2, it is determined whether the manual switch 466a is on, that is, whether an operation command for the linear member 460 has been input. If affirmed in step S2, the process proceeds to step S5, and if negated, it proceeds to step S3. In step S5, a predetermined current is applied through the linear member 460 to operate the linear member 460 as an actuator. As a result, the linear member 460 generates heat. In other words, the linear member 460 is heated by energization.

In step S3, it is determined whether the automatic mode has been selected by the automatic mode selection switch 466b. If affirmed in step S3, the process proceeds to step S4, and if negated, it proceeds to step S6. In step S6, no current is passed through the linear member 460, and the linear member 460 as an actuator is deactivated. As a result, the temperature rise of the linear member 460 is prevented. On the other hand, in step 4, it is determined whether the temperature inside the vehicle cabin is at or below a predetermined value based on the signal from the temperature sensor 467. The predetermined value corresponds to a threshold for determining the necessity of heating, for example. If affirmed in step S4, the process proceeds to step S5, and if negated, it proceeds to step S6.

The operation of the ventilation adjustment seat 400 can be summarized as follows. When the temperature is high in summer, etc., and the interior of the vehicle is hot, the occupant turns off the manual switch 466a. As a result, the linear member 460 becomes inactive (step S2→step S3→step S6), and as shown in FIG. 27B, the front plate 440 and the rear plate 450 are pulled outward in the left-right direction by the tension spring 461. As a result, the positions of the slit holes 443, 453 coincide, and the internal space SP1 and the external space SP3 of the ventilation adjustment seat 400 communicate with each other through the slit holes 443, 453. Therefore, the breathability of the rear surface portion 420R of the seat back 420 is improved, allowing air to pass through the entire seat, enhancing the comfort of the occupant.

On the other hand, when the temperature is low in winter, etc., the occupant turns on the manual switch 466a. As a result, the linear member 460 operates and contracts (step S2→step S5), and as shown in FIG. 28B, the front plate 440 and the rear plate 450 move inward in the left-right direction against the spring force of the tension spring 461. As a result, the positions of the slit holes 443, 453 are offset from each other, preventing communication between the internal space SP1 and the external space SP3 through the slit holes 443, 453. Therefore, the flow of air from the internal space SP1 to the external space SP3 or from the external space SP3 to the internal space SP1 is blocked.

At this time, the temperature of the internal space SP1 rises due to the heat generation of the linear member 460. Therefore, warm air can be directed to the occupant's back through the front surface portion 420F, alleviating the occupant's coldness and improving the occupant's comfort. Due to the movement of the front plate 440 and the rear plate 450, the internal space SP1 becomes a closed space with the rear surface portion 420R closed. Therefore, the temperature of the internal space SP1 can be efficiently increased by the heat generation of the linear member 460.

On the other hand, when the automatic mode is set by the automatic mode selection switch 466b, the linear member 460 operates automatically regardless of the operation of the manual switch 466a. That is, when the automatic mode is set and the temperature inside the vehicle cabin falls below a predetermined value, the linear member 460 operates (step S3→step S4→step S5). Also, after the operation of the linear member 460, if the temperature inside the vehicle cabin becomes higher than the predetermined value due to the use of heating, etc., the linear member 460 becomes inactive (step S3→step S4→step S6). In this way, the linear member 460 automatically operates or deactivates according to the temperature inside the vehicle cabin, allowing the linear member 460 to operate at the optimal timing without the occupant having to operate the manual switch 466a.

According to the present embodiment, the following additional effects can be achieved.
(1) The ventilation adjustment seat 400 as a vehicle seat includes a seat cushion 410 and a seat back 420 (FIGS. 23, 24). The seat back 420 has a front surface portion 420F with a seating surface 424 on which the occupant sits, a rear surface portion 420R on the opposite side of the seating surface 424, and a seat back frame 421 that supports the edges of the front surface portion 420F and the rear surface portion 420R so that the front surface portion 420F and the rear surface portion 420R face each other through the internal space SP1 (FIGS. 23, 2). The front surface portion 420F has a mesh-like member (mesh member 425) that constitutes the seating surface 424 (FIG. 23). The rear surface portion 420R has a front plate 440 and a rear plate 450 that operate to communicate or block communication between the internal space SP1 and the external space SP3 outside the rear surface portion 420R (FIGS. 27B, 28B).
   As a result, communication between the internal space SP1 and the external space SP3 can be established or blocked. Therefore, in high-temperature summer conditions, etc., by allowing communication between the internal space SP1 and the external space SP3, the breathability of the seat is improved, enhancing the comfort of the occupant while reducing the operation of the air conditioning system. Additionally, in low-temperature winter conditions, etc., by blocking communication between the internal space SP1 and the external space SP3, the breathability of the seat is reduced, making it less likely for the occupant to feel cold, thereby enhancing the occupant's comfort.
(2) The rear surface portion 420R further includes a linear member 460 that moves the front plate 440 and the rear plate 450 from the communication position P10, where the internal space SP1 and the external space SP3 communicate, to the blocking position P20, where communication between the internal space SP1 and the external space SP3 is blocked (FIG. 24). The linear member 460 is a heating element that is arranged facing the internal space SP1 and moves the front plate 440 and the rear plate 450 to the blocking position P20 while generating heat (FIG. 28B). As a result, by activating or deactivating the linear member 460, the internal space SP1 and the external space SP3 can be set to a communicating state or a non-communicating state. Additionally, since the linear member 460 is a heating element, it can efficiently raise the temperature of the internal space SP1 when the internal space SP1 and the external space SP3 are in a non-communicating state, and direct warm air to the occupant's back.
(3) The linear member (heating element) 460 is composed of an expandable and contractible member that contracts with heat generation. Thus, there is no need to separately provide an actuator for moving the front plate 440 and the rear plate 450, and a heat source for heating the internal space SP1, thereby simplifying the configuration.
(4) The ventilation adjustment sheet 400 further includes a temperature sensor 467 for detecting the temperature of the space outside the internal space (e.g., external space), and an ECU 465 for controlling the operation of the linear member 460 based on the detected value of the temperature sensor 467 (FIG. 24). In automatic mode, the ECU 465 controls the operation of the linear member 460 so that when the temperature detected by the temperature sensor 467 falls below a predetermined value, the front plate 440 and the rear plate 450 are moved to the blocking position P20 while generating heat (FIG. 29). This allows for optimal control of the operation of the linear member 460.
(5) The rear plate 450 is arranged to overlay the front plate 440 in such a way that it can move relative to the front plate 440, so that the slit holes 443 and 453 either overlap or shift relative to each other (FIGS. 27A, 28A). This allows the internal space SP1 and the external space SP3 to be easily brought into communication or non-communication states through the slit holes 443, 453.
(6) The guide 426, which is part of the seat back frame 421, supports the front plate 440 and the rear plate 450 so that they can move in the width direction (left-right direction) of the ventilation adjustment sheet 400 (FIGS. 27B, 28B). This allows the front plate 440 and the rear plate 450 to be moved smoothly in the left-right direction.
(7) The slit holes 443 are multiple slit holes disposed in the width direction and extending in the front plate 440 in the up-down direction, and the slit holes 453 are multiple slit holes disposed in the width direction and extending in the rear plate 450 in the up-down direction (FIGS. 25A, 26A). This results in a large communication area between the internal space SP1 and the external space SP3, providing high breathability for the sheet 400.

In the above embodiment (FIGS. 23-29), the rear surface portion 420R of the seat back 420, which has a front surface portion 420F (surface portion) and a rear surface portion 420R (back surface portion), is configured so that the internal space SP1 and the external space SP3 can communicate and be blocked. However, the bottom surface of the seat cushion 410, which has a top surface portion (surface portion) and a bottom surface portion (back surface portion), may be configured so that the internal space and the external space can communicate and be blocked. That is, either or both of the seat cushion 410 and the seat back 420 may be configured so that the internal space and the space outside the back surface portion can communicate.

In the above embodiment (FIG. 24), the seat back frame 421 supports the edge portions of the front surface portion 420F and the rear surface portion 420R, but as long as the surface portion and back surface portion are supported to face each other through the internal space, the configuration of a support portion can be any form. A fan or the like can also be arranged in the internal space to generate an airflow. In the above embodiment (FIG. 23), the seating surface 424 is formed by the mesh member 425, but the configuration of the mesh-like surface member is not limited to the above. For example, a surface member formed in a mesh shape may be provided on a part of the seating surface.

In the above embodiment (FIGS. 27B, 28B), the front plate 440 and the rear plate 450 are provided to be movable in the left-right direction to allow or block communication between the internal space SP1 and the external space SP3, but the configuration of a movable member is not limited to the above. For example, one of a pair of front and rear plate members may be fixed and the other movable to allow or block communication between the internal space and the space outside the back surface portion.

In the above embodiment (FIGS. 27B, 28B), the linear member 460 is used as an actuator (drive unit) to move the front plate 440 and the rear plate 450 from the communication position P10 (first position) where the internal space SP1 and the external space SP3 communicate, to the blocking position P20 (second position) where the communication between the internal space SP1 and the external space SP2 is blocked, but the configuration of the drive unit is not limited to the above. However, it is preferable to configure it as a heating element that is arranged facing the internal space and moves the movable member to the second position while generating heat.

In the above embodiment (FIGS. 27B, 28B), the linear member 460, which contracts with heat generation, is used to move the front plate 440 and the rear plate 450 as movable members, but it is also possible to configure an expandable member to extend with heat generation and move the movable member to block communication between the internal space and the space outside the back surface.

In the above embodiment (FIG. 29), the ECU 465 as a control unit controls the operation of the linear member 460 based on a signal from the temperature sensor 467 (temperature detection unit) that detects the temperature inside the vehicle cabin, but the configuration of the control unit is not limited to the above. Also, if the temperature of the space outside the back surface is to be detected, the configuration of the temperature detection unit can be any form. In this case, the space outside the back surface is not limited to the external space SP3, but can be any space inside the vehicle cabin where a temperature detection value correlated with the temperature detection value of the external space SP3 can be obtained.

In the above embodiment (FIGS. 23-29), multiple slit holes 443 (first slit holes) are provided in the front plate 440 (first plate) extending in the length direction perpendicular to the width direction of the vehicle seat (ventilation adjustment sheet 400), and multiple slit holes 453 (second slit holes) are provided in the rear plate 450 (second plate) disposed in the width direction, but the first holes opened in the first plate and the second holes opened in the second plate may have shapes other than slit holes. That is, as long as the second plate moves relative to the first plate so that the first holes and the second holes overlap or shift relative to each other, the configuration of the first hole and the second hole can be any form.

The above-mentioned vehicle seat (ventilation adjustment sheet) 400 can be modified for use as the vehicle seat 100 shown in FIG. 1A. That is, among the pair of left and right side end portions of the pair of left and right vehicle seats 400, 400, the end face of the side end portion (first side end portion) on the other side in the left-right direction (e.g., left side) of the seat cushion 410 of the seat 400 on one side in the left-right direction (e.g., right side) is positioned on one side in the left-right direction (e.g., left side) relative to the end face of the side end portion (second side end portion) on one side in the left-right direction (e.g., right side) of the seat cushion 410 of the seat 400 on the other side in the left-right direction (e.g., left side), and a relief portion may be provided on at least one of the rear end portion of the first side end portion and the front end portion of the second side end portion to prevent interference between the first side end portion and the second side end portion.

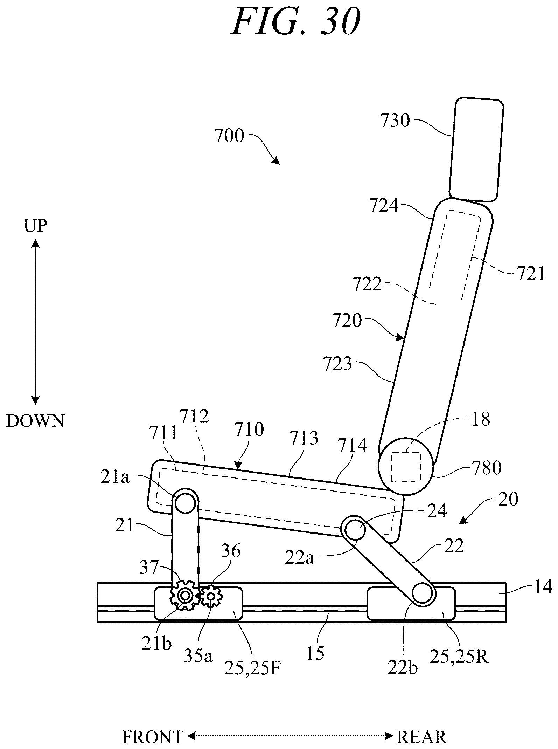

It is preferable that the vehicle seat allows for changes in the height and tilt angle of the seat cushion with a simple configuration. Below, a vehicle seat configured from this perspective will be described with reference to FIGS. 30 to 39. This vehicle seat can be applied to various vehicles, but the following describes an example of applying the vehicle seat as a vehicle seat to an automotive. The vehicle seat may simply be referred to as a seat.

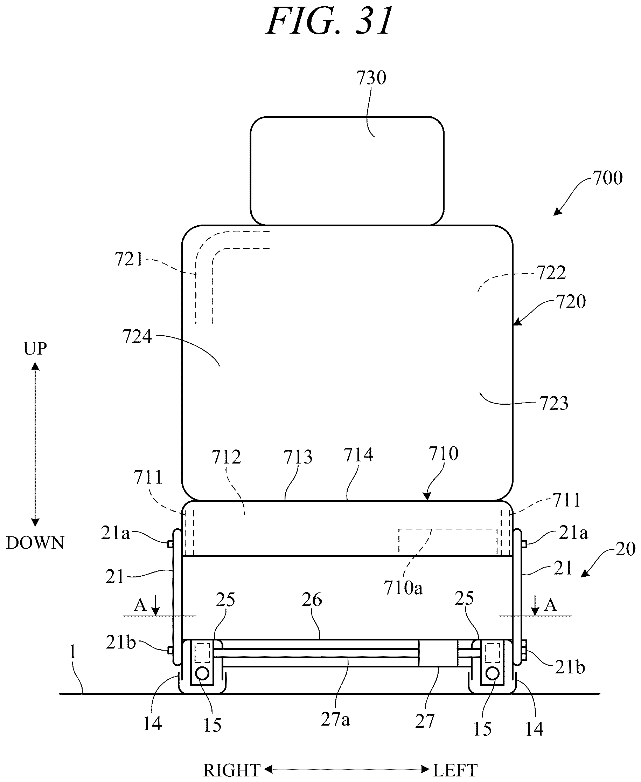

FIG. 30 is a side view showing the schematic configuration of a vehicle seat (seat) 700 according to this embodiment, and FIG. 31 is a front view. Below, the front-rear direction (length direction), left-right direction (width direction), and upper-lower direction (height direction) are defined as shown in the figures, and the configuration of each part is explained according to this definition. The front in FIGS. 30 and 31 is the direction in which the face of an occupant seated on the seat 700 faces. The front-rear direction of the seat 700 usually coincides with the front-rear direction of the vehicle, but it may differ from the vehicle's front-rear direction if the orientation of the seat 700 is changed, etc.

As shown in FIGS. 30 and 31, the seat 700 includes a seat cushion 710 that supports the occupant's buttocks, a seat back 720 that supports the occupant's back, a headrest 730 provided at the top of the seat back 720 to support the occupant's head, and a support part 20 that supports the seat cushion 710 so that it can move in the upper-lower direction and front-rear direction from the floor 1.

The seat cushion 710 extends in the front-rear direction and left-right direction, that is, it extends in a substantially horizontal direction and has a substantially rectangular shape in plan view. The seat cushion 710 has a seat cushion frame 711 (partially shown) that forms the skeleton of the seat cushion 710. Detailed illustration is omitted, but the seat cushion frame 711 includes, for example, a pair of left and right vertical frames extending in the front-rear direction, and a pair of front and rear horizontal frames extending in the left-right direction, connecting the front ends and rear ends of the pair of left and right vertical frames, respectively, and the whole presents a substantially rectangular frame shape in plan view.

Inside the seat cushion frame 711 (inside the frame), a substantially plate-like pressure receiving member (not shown) is arranged. Around the seat cushion frame 711, a cushion pad 712 with elasticity, made of, for example, urethane foam material, is provided, and the surface of the cushion pad 712 is covered with a skin 713. On the upper surface of the seat cushion 710, a seating surface 714 on which the occupant sits is formed. Although not shown, an ottoman can be provided at the front end of the seat cushion 710, pivotable in the up-down direction with an axis extending in the left-right direction as a fulcrum.

The seat back 720 has a seat back frame 721 (partially shown) that forms the skeleton of the seat back 720. Detailed illustration is omitted, but the seat back frame 721 includes, for example, a pair of left and right vertical frames extending in a substantially up-down direction, and a pair of upper and lower horizontal frames extending in the left-right direction, connecting the upper ends and lower ends of the pair of left and right vertical frames, respectively, and the whole presents a substantially rectangular frame shape in front view.

Inside the seat back frame 721 (inside the frame), a substantially plate-shaped pressure receiving member (not shown) is arranged. Around the seat back frame 721, a elastic back pad 722, for example, made of urethane foam material is provided, and the surface of the back pad 722 is covered with a skin 723. On the front surface of the seat back 720, a seating surface 724 for the occupant to sit on is formed.

The lower end of the seat back 720 is pivotally supported at the rear end of the seat cushion frame 711 via a reclining mechanism 780, allowing it to rotate in the front-rear direction using an axis (not shown) extending in the left-right direction as a fulcrum. The reclining mechanism 780 includes an electric motor 18, and the seat back 720 rotates in the front-rear direction by the drive of the electric motor 18. The electric motor 18 may be omitted, and the seat back 720 may be manually rotated in the front-rear direction.

Below the seat 700, that is, on the upper surface of the floor 1, a pair of left and right lower rails 14, 14 are extended in the front-rear direction. Each lower rail 14 is slidably engaged with a pair of front and rear upper rails 25,25. In FIGS. 30 and 31, the shapes of the lower rail 14 and the upper rail 25 are schematically shown for convenience.

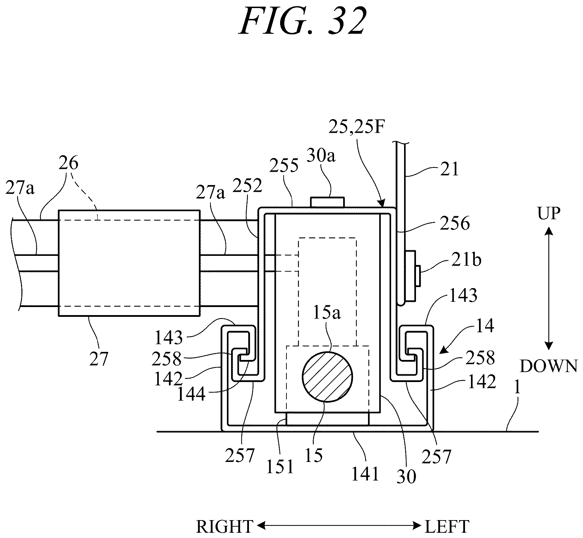

FIG. 32 is an enlarged view of the main part of FIG. 31 (an enlarged view of the left end of the support part 20). As shown in FIG. 32, the lower rail 14 is formed into a substantially U-shape in front view by bending a plate-shaped metal to have an opening on the upper surface. More specifically, the lower rail 14 includes a bottom portion 141 fixed to the floor 1, a pair of left and right side wall portions 142, 142 rising from both ends in the left-right direction of the bottom portion 141, upper surface portions 143, 143 extending inward in the left-right direction from the upper ends of the side wall portions 142, 142, and substantially L-shaped bent portions 144, 144 extending downward from both ends in the left-right direction of the upper surface portions 143, 143 and further extending outward in the left-right direction.

Similarly, the upper rail 25 is formed into a substantially U-shape in front view by bending a plate-shaped metal to have an opening on the bottom surface. More specifically, the upper rail 25 includes an upper surface portion 255 extending in a substantially horizontal direction, a pair of left and right side wall portions 256, 256 hanging down from both ends in the left-right direction of the upper surface portion 255, bottom portions 257, 257 extending outward in the left-right direction from the lower ends of the side wall portions 256, 256, and substantially L-shaped bent portions 258, 258 extending upward from both ends in the left-right direction of the bottom portions 257, 257 and further extending inward in the left-right direction. The left and right side wall portions 256, 256 are arranged inside the left and right bent portions 144, 144 of the lower rail 14. The bent portion 258 of the upper rail 25 engages with the bent portion 144 of the lower rail 14, thereby allowing the upper rail 25 to be slidably supported by the lower rail 14.

As shown in FIGS. 30 and 31, the support part 20 includes a pair of left and right front links 21, 21 extending in a substantially up-down direction and a pair of left and right rear links 22, 22. The upper end of the front link 21 is pivotally supported by the seat cushion frame 711 in the front-rear direction using an axis portion 21a extending outward in the left-right direction from the front end of the seat cushion frame 711 as a fulcrum. The lower end of the front link 21 is pivotally supported by the front upper rail 25 (front upper rail 25F) in the front-rear direction using an axis portion 21b extending outward in the left-right direction from the front upper rail 25F as a fulcrum. The axis portions 21a, 21b are fixed to the front link 21, and the front link 21 rotates integrally with the axis portions 21a, 21b.

The upper end of the rear link 22 is pivotally supported by the seat cushion frame 711 in the front-rear direction using an axis portion 22a extending outward in the left-right direction from the rear end of the seat cushion frame 711 as a fulcrum. The lower end of the rear link 22 is pivotally supported by the rear upper rail 25 (rear upper rail 25R) in the front-rear direction using an axis portion 22b extending outward in the left-right direction from the rear upper rail 25R as a fulcrum. The axis portions 22a, 22b are fixed to the rear link 22, and the rear link 22 rotates integrally with the axis portions 22a, 22b.

The left and right front links 21, 21 may be joined to both left and right ends of a link connection frame extending in the left-right direction. The left and right rear links 22, 22 may be joined to both left and right ends of a link connection frame extending in the left-right direction. That is, the left and right front links 21, 21 may be integrated via a link connection frame. The left and right rear links 22, 22 may be integrated via a link connection frame.

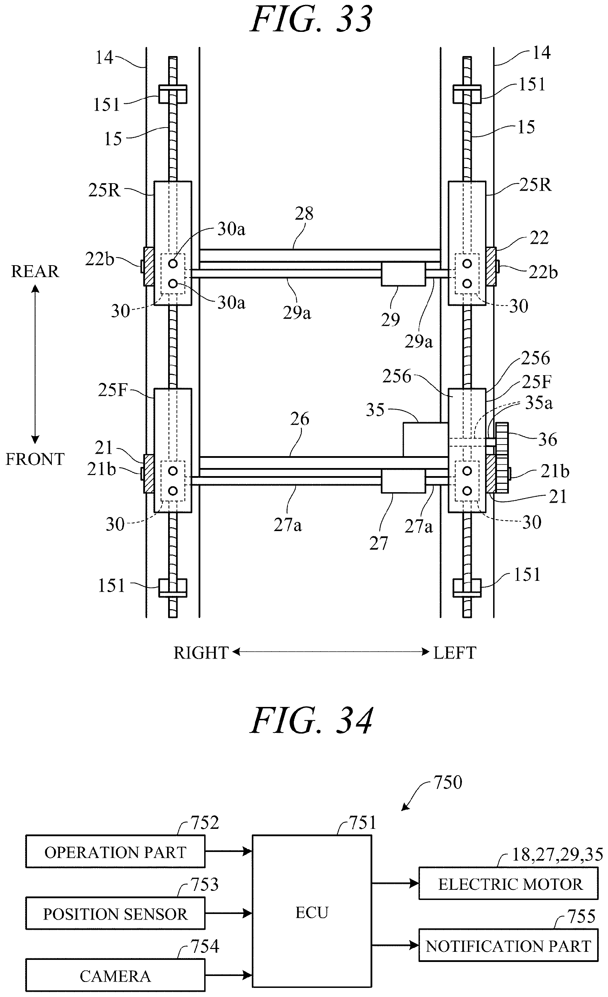

The pair of left and right front upper rails 25F, 25F are fixed to both left and right ends of a connecting frame 26 extending in the left-right direction. More specifically, as shown in FIG. 32, the connecting frame 26 extends in the left-right direction above the lower rail 14, and its left-right ends are fixed to the inner side wall portions 256 of the upper rail 25 by welding or the like. As a result, the left and right front upper rails 25F, 25F are integrated via the connecting frame 26. The pair of left and right rear upper rails 25R, 25R are also fixed to both left and right ends of a connecting frame 28 (FIG. 33) extending in the left-right direction. As a result, the left and right rear upper rails 25R, 25R are integrated via the connecting frame 28.

As shown in FIGS. 30 and 31, a substantially cylindrical lead screw 15, elongated in the front-rear direction, is arranged inside the lower rail 14. FIG. 33 is a cross-sectional view taken along line A-A of FIG. 30. As shown in FIGS. 32 and 33, a threaded portion 15a is provided on the outer peripheral surface of the lead screw 15 over almost its entire length.

On the upper surface of the bottom portion 141 of the lower rail 14, brackets 151 are fixed near the front end and near the rear end of the lower rail 14. The bracket 151 rises upward from the upper surface of the bottom portion 141 and supports the front and rear ends of the lead screw 15 in a state where the lead screw 15 is floated by a predetermined height from the bottom portion 141. As a result, the lead screw 15 is non-rotatably fixed to the lower rail 14 via the bracket 151.

A reversible electric motor 27 is mounted on the front surface of the front connecting frame 26. The electric motor 27 has a pair of left and right output shafts protruding to the left and right. A shaft 27a extending in the left-right direction is connected to the output shaft, and the shaft 27a rotates about an axis extending in the left-right direction by the drive of the electric motor 27.

As shown in FIG. 32, a gearbox 30, which is a substantially rectangular parallelepiped case member, is mounted on the upper surface portion 255 of the front upper rail 25F. For example, the gearbox 30 is fixed by a pair of front and rear bolts 30a penetrating the upper surface portion 255. The bottom surface of the gearbox 30 is located below the bottom surface of the lead screw 15 and above the bottom portion 141 of the lower rail 14. The lead screw 15 extends through the gearbox 30 in the front-rear direction.

Although not shown, a rotating body that engages with the threaded portion 15a of the lead screw 15 is provided inside the gearbox 30. The rotating body is, for example, a nut, and the nut is rotatably supported inside the gearbox 30 around the axis of the lead screw 15. The gearbox 30 moves in the front-rear direction along the lead screw 15 integrally with the front upper rail 25F as the nut rotates in one direction or the opposite direction. Note that the rotating body may be other than a nut as long as it engages with the threaded portion 15a of the lead screw 15.

The shaft 27a of the electric motor 27 is inserted through the side wall portion 256 of the front upper rail 25F into the interior of the gearbox 30. Inside the gearbox 30, particularly in the space above the lead screw 15, one or more gear units (e.g., worm gears or bevel gears) that convert rotation about a left-right axis into rotation about a front-rear axis are housed. The tip of the shaft 27a meshes with the gear unit, and the rotation of the electric motor 27 is transmitted to a gear provided on the outer peripheral surface of the nut, for example, via the shaft 27a and the gear unit. As a result, the gearbox 30 moves in the front-rear direction integrally with the front upper rail 25F by the drive of the electric motor 27, and accordingly, the lower end of the front link 21 moves in the front-rear direction.

As shown in FIG. 33, an electric motor 29 is mounted on the front surface of the connecting frame 28 arranged inside the left and right rear links 22. The electric motor 29 is configured similarly to the electric motor 27. A gearbox 30 similar to that of the front upper rail 25F is mounted on the rear upper rail 25R. The rotation of the electric motor 29 is transmitted to the gearbox 30 via the shaft 29a. As a result, the rear upper rail 25R moves in the front-rear direction along the lead screw 15 by the drive of the electric motor 29, and accordingly, the lower end of the rear link 22 moves in the front-rear direction.

A reversible electric motor 35 is mounted on the rear surface and left end of the front connecting frame 26. The output shaft of the electric motor 35 protrudes to the left, and one end of a shaft 35a extending in the left-right direction is connected to this output shaft. The shaft 35a extends to the left of the front upper rail 25F through the left and right side wall portions 256 of the front upper rail 25F, and a pinion 36 is fixed to the other end of the shaft 35a. As a result, the pinion 36 rotates about the left-right axis by the drive of the electric motor 35. Note that a reducer may be interposed between the electric motor 35 and the pinion 36, and the rotation of the electric motor 35 may be reduced by the reducer and transmitted to the pinion 36.

The shaft portion 21b of the left front link 21 protrudes by a predetermined amount from the left end surface of the front link 21, and a gear 37 is coupled to this protruding portion so as to rotate integrally with the shaft portion 21b. For example, the gear 37 is fitted to the outer peripheral surface of the shaft portion 21b by spline coupling. The gear 37 meshes with the pinion 36, and thus, as the pinion 36 rotates, the front link 21 pivots in the front-rear direction via the gear 37. In FIG. 30, the gear 37 is configured in a substantially circular shape, but if it is provided integrally with the front link 21, the gear 37 is not limited to a circular shape and may be semicircular or sector-shaped. In FIG. 30, the gear 37 is provided centered on the shaft portion 21b, but it may be provided at a position offset from the shaft portion 21b (for example, a position shifted rearward). Instead of providing the gear 37 as a separate member of the front link 21, a gear portion may be provided on the front link itself. In the above configuration of the support portion 20, when there is a risk of the support portion 20 becoming stuck when the links 21, 22 are pivoted, stoppers may be provided to limit the rotating of the links 21, 22 to prevent the support portion 20 from becoming stuck.

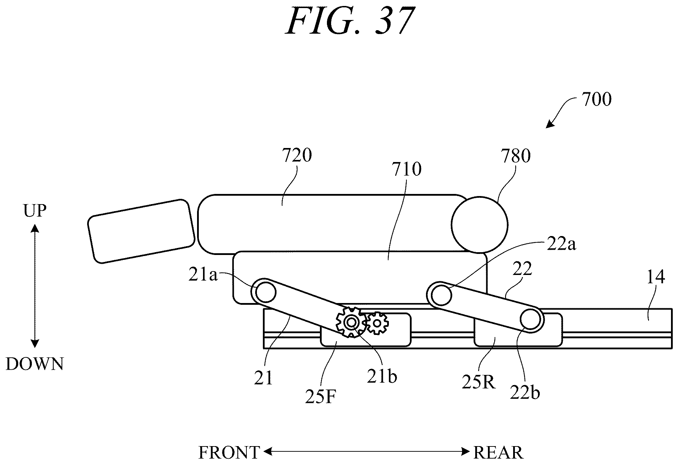

As described above, in this embodiment (FIGS. 30 to 33), as actuators for driving the support portion 20 of the seat 700, an electric motor 27 for driving the front upper rail, an electric motor 29 for driving the rear upper rail, and an electric motor 35 for driving the front link are provided below the seat 700. These electric motors 27, 29, 35 are positioned below the upper surface portion 255 of the upper rail 25. Therefore, the seat cushion 710 can be lowered to the maximum lowered position (FIG. 37) without the seat cushion 710 coming into contact with the electric motors 27, 29, 35. As shown in FIG. 31, a recess 710a may be provided on the bottom surface of the seat cushion 710 to prevent the bottom surface of the seat cushion 710 from interfering with the motor or the like.

At least one of the front link 21 and the rear link 22 is provided with a spring to prevent rattling of the links 21, 22. Although not shown in detail, as shown in FIG. 30, a spring 24 is provided on the upper shaft portion 22a of the rear link 22, that is, at a position diagonal to the shaft portion 21b driven via the gear 37. The spring 24 is, for example, a torsion spring. Thus, the biasing force of the spring 24 acts on the shaft portion 22a of the freely rotating rear link 22, preventing rattling of the shaft portion 22a. Not only the shaft portion 22a but also the shaft portions 21a, 21b rotate freely. Therefore, a spring 24 for preventing rattling may be provided not only on the shaft portion 22a but also on the shaft portion 21a. Furthermore, a spring 24 for preventing rattling may be provided on the shaft portion 22b, and springs 24 for preventing rattling may be provided on all the shaft portions 21a, 21b, 22a, 22b.

FIG. 34 is a block diagram showing the configuration of a control device 75 for controlling the operation of the support portion 20. As shown in FIG. 34, the control device 75 includes an ECU 751, an operation part 752, a position sensor 753, a camera 754, electric motors 18, 27, 29, 35, and a notification part 755. Signals from the operation part 752, the position sensor 753, and the camera 754 are input to the ECU 751. The ECU 751 executes predetermined processing based on these input signals according to a prestored program and outputs control signals to the electric motors 18, 27, 29, 35 and the notification part 755.

The operation part 752 is provided, for example, on the side of the seat 700 so that an occupant seated on the seat 700 can operate it. The operation part 752 includes a front-rear movement switch for commanding the movement of the seat 700 in the front-rear direction, a up-down movement switch for commanding the movement in the upper-lower direction, and a mode selection switch for selecting a desired seat mode from among multiple seat modes (seat postures).

The position sensor 753 includes multiple sensors for detecting the current front-rear position, up-down position, and the inclination angle of the seat cushion 710 of the seat 700. Various types of sensors can be used as the position sensor 753, such as a linear encoder, a magnetic sensor (Hall sensor), an optical encoder, a potentiometer (variable resistor), a limit switch, and an inclination sensor. A sensor for detecting the amount of rotation of the electric motors 18, 27, 29, 35 can also be used as the position sensor 753.

The camera 754 is provided in the vehicle cabin and captures obstacles or people around the seat 700 that may interfere with the movement of the seat 700. For example, it captures other seats 700 or occupants seated on other seats 700. These may be referred to as imaging targets.

The notification part 755 is composed of a display unit or a speaker that informs the occupant of information through display or sound. The notification part 755 may include a vibration actuator that generates vibrations in the seat 700 to inform the occupant of information via the vibration actuator.

FIG. 30 shows the normal posture (normal mode) of the seat 700. In this embodiment, the seat 700 can be moved in the front-rear and up-down directions without changing the inclination angle of the seating surface 714 of the seat cushion 710 by driving the electric motors 18, 27, 29. For example, when forward movement of the seat 700 is commanded from the operation part 752, the ECU 751 outputs control signals to the electric motors 27, 29 in response to the command from the operation part 752, and moves the front upper rail 25F and the rear upper rail 25R forward by the same amount. When backward movement of the seat 700 is commanded from the operation part 752, the ECU 751 outputs control signals to the electric motors 27, 29 in response to the command from the operation part 752, and moves the front upper rail 25F and the rear upper rail 25R backward by the same amount.

When lowering of the seat 700 is commanded from the operation part 752, the ECU 751 outputs control signals to the electric motors 27, 29, 35 in response to the command from the operation part 752, and pivots the front link 21 forward by a predetermined amount. At this time, the distance from the front upper rail 25F to the rear upper rail 25R is shortened to a predetermined distance so that the inclination angle of the seating surface 714 of the seat cushion 710 is not changed. Furthermore, while maintaining the distance from the front upper rail 25F to the rear upper rail 25R at a predetermined distance, the front upper rail 25F and the rear upper rail 25R are moved backward simultaneously so that the front-rear position of the seat cushion 710 is not changed.

This allows the seat cushion 710 to be lowered. In this case, the ECU 751 controls the electric motors 27, 29, 35 so that the seat cushion 710 is lowered while the front-rear position of the seat cushion 710 remains constant, and adjusts the drive amount and drive timing of each electric motor 27, 29, 35. When the raising of the seat 700 is commanded from the operation part 752, the ECU 751 controls the electric motors 27, 29, 35 to perform the opposite operation to that during the lowering described above, and adjusts the drive amount and drive timing of each electric motor 27, 29, 35.

In this embodiment, not only can the seat 700 be moved in the front-rear and up-down directions, but also the seat 700 can be changed from the normal posture to various postures by driving the electric motors 18, 27, 29, 35, such as changing the inclination angle of the seating surface of the seat cushion 710. Below, several postures that the seat 700 can achieve will be described.

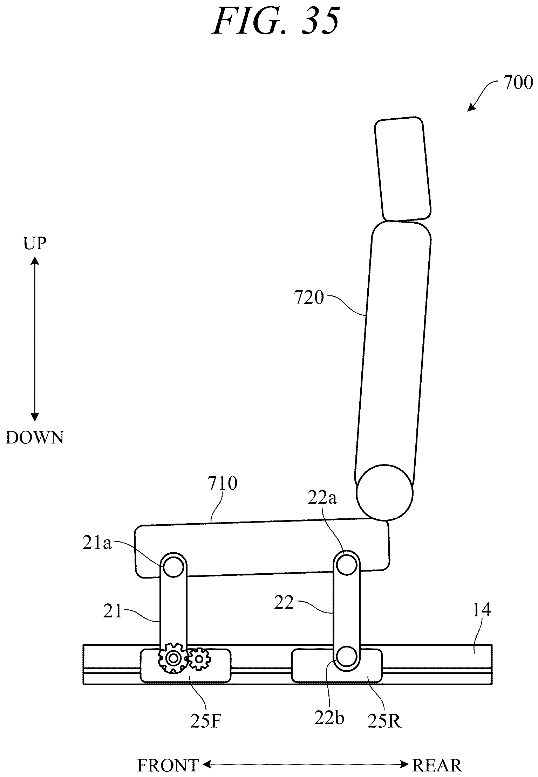

FIG. 35 is a side view of the seat 700 showing the hip-up posture. When the hip-up mode is commanded via the operation part 752, or when the raising of the rear end of the seat cushion 710 is commanded, the seat 700 changes from the normal posture to the hip-up posture. In this case, the rear upper rail 25R is moved forward by a predetermined amount by the drive of the electric motor 29. As a result, the rear link 22 rises while rotating about the shaft portions 22a, 22b. Consequently, the rear end of the seat cushion 710 rises with the shaft portion 21a of the front link 21 as a fulcrum, and the seat 700 takes the hip-up posture.

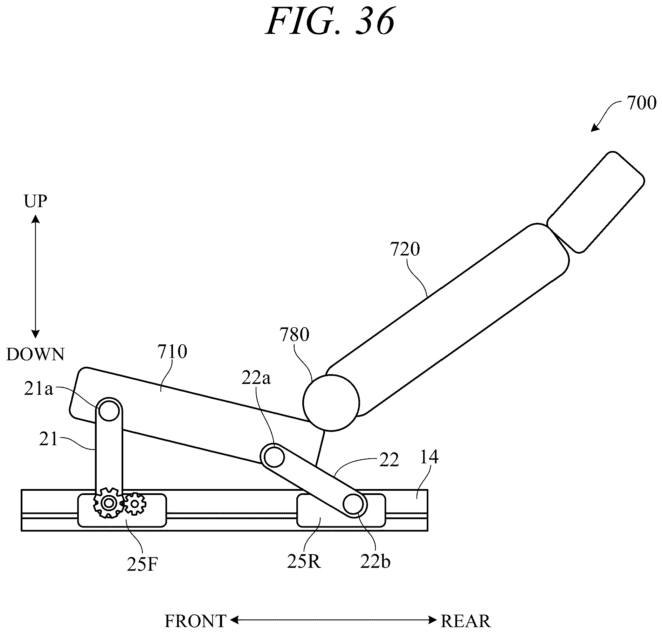

FIG. 36 is a side view of the seat 700 showing the relaxing posture. When the relaxed mode is commanded via the operation part 752, or when the lowering of the rear end of the seat cushion 710 and the rearward rotating of the seat back 720 are commanded, the seat 700 changes from the normal posture to the relaxing posture. In this case, the rear upper rail 25R is moved backward by a predetermined amount by the drive of the electric motor 29. As a result, the rear link 22 tilts down while rotating about the shaft portions 22a, 22b. Consequently, the rear end of the seat cushion 710 descends with the shaft portion 21a of the front link 21 as a fulcrum. Furthermore, the seat back 720 pivots rearward by a predetermined amount by the drive of the electric motor 18, and the seat 700 takes the relaxing posture.

FIG. 37 is a side view of the seat 700 showing the dive-down posture. The dive-down posture is one in which the entire seat is tilted forward to create a flat space above the seat 700. When the dive-down mode is commanded via the operation part 752, or when the forward and downward movement of the seat cushion 710 and the forward rotating of the seat back 720 are commanded, the seat 700 changes from the normal posture to the dive-down posture.

In this case, the front link 21 pivots forward until the seat cushion 710 reaches the maximum lowered position by the drive of the electric motor 35. The maximum lowered position is, for example, the position where the bottom surface of the seat cushion 710 contacts the upper surface of the upper rail 25. Furthermore, the rear upper rail 25R is moved forward by a predetermined amount by the drive of the electric motor 29. As a result, the rear link 22 rotates around the pivot points 22a and 22b, tilting back, and the seat cushion 710 becomes approximately horizontal. Furthermore, the seat back 720 rotates forward by a predetermined amount due to the drive of the electric motor 18, and the seat 700 moves to a dive-down posture.

The seat 700 can also change to various other postures besides those mentioned above. The ECU751 controls the electric motors 27, 29, and 35 to avoid jamming when there is a risk of the seat 700 getting stuck while changing its posture to a predetermined posture. For example, if there is a risk of jamming when the sliding operation of the upper rail 25 is performed before the rotation of the front link 21, the ECU751 controls the electric motors 27, 29, and 35 to perform the rotation of the upper rail 25 before or simultaneously with the rotation of the front link 21. A stopper that regulates the rotation angle of links 21 and 22 may be provided to prevent jamming.

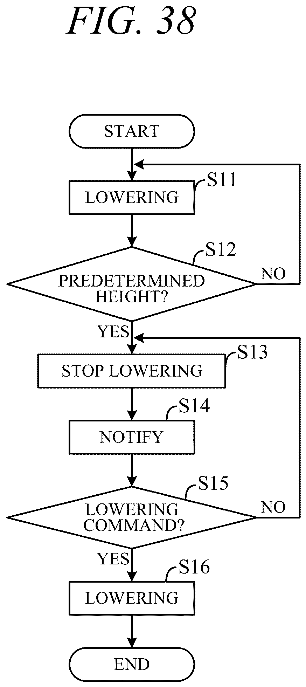

The ECU751 may automatically pause the operation of the seat 700 to avoid interference with obstacles or people when a change to a predetermined posture is commanded. FIG. 38 is a flowchart showing an example of processing by the ECU751 in such a case. The processing shown in this flowchart starts, for example, when the relax mode in FIG. 36 is commanded in the normal posture. Also when modes other than the relax mode are commanded, if the lowering of the seat cushion 710 is commanded, the same processing as in FIG. 38 is executed.

As shown in FIG. 38, first, in step S11, the ECU751 outputs a control signal to the electric motor 29 to move the rear upper rail 25R backward. As a result, the rear end of the seat cushion 710 lowers. In step S12, the ECU751 detects the height of the seat cushion 710 based on signals from the position sensor 753 and determines whether the height of the seat cushion 710 has reached a predetermined height. In other words, it determines whether the height of the seat cushion 710 is below a predetermined height. If the determination in step S12 is negative, the process returns to step S11 and repeats the same processing. If the determination in step S12 is affirmative, the process proceeds to step S13.

In step S13, the ECU751 outputs a control signal to the electric motor 29 to stop its drive. As a result, the lowering of the seat cushion 710 is stopped. Next, in step S14, the ECU751 outputs a control signal to the notification part 755 to inform that the lowering of the seat cushion 710 has been temporarily paused and that it is necessary to command the lowering again to continue. The command for lowering again is, for example, a command for the relax mode by re-operating the operation part 752. Instead of a command via the operation part 752, it is also possible to command the lowering of the seat cushion 710 again through other means, such as voice commands or gesture commands.

Next, in step S15, the ECU751 determines whether the lowering of the seat cushion 710 has been commanded again. If the determination in step S15 is negative, the process returns to step S13 and repeats the same processing. If the determination in step S15 is affirmative, the process proceeds to step S16, where the ECU751 outputs a control signal to the electric motor 29, similar to step S11, to lower the seat cushion 710.

According to the process in FIG. 38, when the height of the seat cushion 710 reaches a predetermined height in response to the lowering command, the lowering operation of the seat cushion 710 is temporarily paused, and the pause information is displayed to the occupant. Therefore, the occupant can check for the presence of obstacles or people (such as the feet of rear seat occupants) below the seat 700 and command the lowering again after confirmation. Thus, it is possible to prevent the seat 700 from accidentally pinching obstacles or people (collectively referred to as objects).

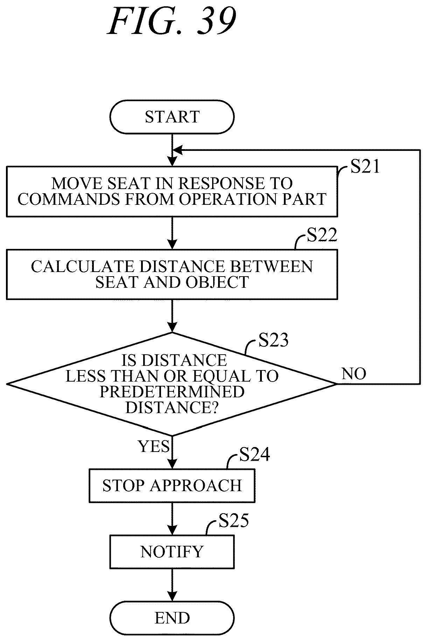

The ECU751 may determine whether there is a risk of the seat 700 coming into contact with surrounding objects based on images from the camera 754 while changing the position or posture of the seat 700. FIG. 39 is a flowchart showing an example of processing executed by the ECU751 in such a case. The process in FIG. 39 starts when the movement of the seat 700 is commanded from the operation part 752.

As shown in FIG. 39, first, in step S21, control signals are output to the electric motors 18, 27, 29, and 35 to move the seat 700 in response to commands from the operation part 752. Next, in step S22, the distance between the seat 700 and surrounding objects is calculated based on images captured by the camera 754. It is also possible to calculate the distance between the seat 700 and objects based on sources other than images captured by the camera 754.

Next, in step S23, it is determined whether the distance calculated in step S22 is less than or equal to a predetermined distance. That is, it is determined whether there is a risk of collision between the seat 700 and the object. If the determination in step S23 is negative, the process returns to step S21 and repeats the same processing. If the determination in step S23 is affirmative, the process proceeds to step S24, where control signals are output to the electric motors 18, 27, 29, and 35 to stop the approach operation of the seat 700. In this case, it is possible to stop the drive of all electric motors 18, 27, 29, and 35, or to stop only the drive of specific electric motors related to the approach to the object.

Next, in step S25, the notification part 755 informs the occupant that the approach operation of the seat 700 has been stopped. This allows for the avoidance of a collision between the seat 700 and the object. After step S25, the occupant moves the object away from the seat 700. In this state, if the occupant commands the movement of the seat 700 again via the operation part 752, the seat 700 resumes its movement. Instead of stopping the approach operation in step S24, control signals may be output to the electric motors 18, 27, 29, and 35 to move the seat 700 away from the object.

According to this embodiment, the following additional effects can be achieved.
(1) The vehicle seat (seat) 700 includes a seat cushion 710 arranged above the floor 1, a seat back 720 rotatably supported in the front-rear direction at the rear end of the seat cushion 710, and a support part 20 that supports the seat cushion 710 to be movable in the front-rear direction and the upper-lower direction from the floor 1 (FIG. 30). The support part 20 includes a front upper rail 25F slidably provided in the front-rear direction relative to the floor 1, a rear upper rail 25R slidably provided in the front-rear direction relative to the floor 1 and relatively movable in the front-rear direction behind the front upper rail 25F, a front link 21 with one end and the other end rotatably supported in the front-rear direction by the front upper rail 25F and the seat cushion 710, and a rear link 22 with one end and the other end rotatably supported in the front-rear direction by the rear upper rail 25R and the seat cushion 710 behind the front link 21 (FIG. 30).
   With this configuration, a so-called four-bar linkage is formed by the front link 21, the pair of front and rear upper rails 25F, 25R, the rear link 22, and the seat cushion 710. Here, the pair of front and rear upper rails 25F, 25R are provided to be movable separately in the front-rear direction. Therefore, the distance between the front and rear upper rails 25F, 25R can be appropriately changed, allowing the seat cushion 710 to move in the front-rear and up-down directions, and further allowing the inclination angle of the seat cushion 710 to be changed.
(2) The support part 20 further includes a lower rail 14 extending in the front-rear direction on the floor 1 (FIG. 30, 31). The front upper rail 25 extends in the front-rear direction to engage with the lower rail 14, and the rear upper rail 25 extends in the front-rear direction, spaced apart from the front upper rail 25, to engage with the lower rail 14 (FIG. 32, 33). By providing the front and rear upper rails 25, 25, to which different links 21, 22 are connected, spaced apart from each other, various movements of the seat cushion 710 can be easily realized.
(3) The front link 21 is configured as a drive link that is driven to rotate in the front-rear direction (FIG. 30). The support part 20 further includes an electric motor 27 that generates a driving force to move the front upper rail 25F in the front-rear direction, an electric motor 29 that generates a driving force to move the rear upper rail 25R in the front-rear direction, an electric motor 35 that generates a driving force to rotate the front link 21, and an ECU751 that controls the electric motors 27, 29, and 35 (FIG. 34). Thus, by controlling the three electric motors 27, 29, and 35, the ECU751 enables various operations of the seat cushion 710.
(4) The front upper rail 25F is provided on the left and right, and the rear upper rail 25R is provided on the left and right (FIG. 33). The support part 20 further includes a connecting frame 26 extending in the left-right direction to connect the pair of front upper rails 25F, 25F, and a connecting frame 28 extending in the left-right direction to connect the pair of rear upper rails 25R, 25R (FIG. 33). The electric motor 27 is attached to the connecting frame 26, the electric motor 29 is attached to the connecting frame 28, and the electric motor 35 is attached to the connecting frame 26. As a result, since all the electric motors 27, 29, 35 are arranged on the upper rail 25 side, it is easy to provide space below the seat cushion 710 to allow the seat cushion 710 to move.
(5) The seat 700 further includes an operation part 752 that commands the raising and lowering of the seat cushion 710 in response to a command from the occupant, and a position sensor 753 that detects the height of the rear end of the seat cushion 710 (FIG. 34). When the lowering of the seat cushion 710 is commanded by the operation part 752, the ECU 751 stops the lowering operation when the height detected by the position sensor 753 reaches a predetermined height, and then controls the electric motors 27, 29, 35 to continue the lowering operation when the lowering of the seat cushion 710 is commanded again by the operation part 752 (FIG. 38). This prevents the rear end of the seat 700 from coming into contact with the feet of the rear seat occupant, etc., as the seat cushion 710 is lowered.
(6) The seat 700 further includes a camera 754 that detects the degree of proximity between objects (things or people) around the seat 700 and the seat 700 (FIG. 34). When the camera 754 detects a approaching movement of a predetermined degree or more (the distance to the object is less than or equal to a predetermined distance) of the seat 700, the ECU 751 controls the electric motors 27, 29, 35 to avoid the approaching movement (FIG. 39). This allows for avoiding contact between the seat 700 and surrounding objects.
(7) The seat 700 further includes a spring 24 that biases at least one of the front link 21 and the rear link 22 (for example, the rear link 22) in a predetermined rotational direction (FIG. 30). This prevents rattling of the links 21, 22, and provides good seating comfort for the occupant seated on the seat 700.

In the above embodiment (FIGS. 30 to 39), one end and the other end of the front link 21 as a first link member are supported rotatably in the front-rear direction with respect to the seat cushion 710 and the front upper rail 25F, but if it is provided to be slidable in the front-rear direction with respect to the floor 1 (base), the first moving body may be other than the front upper rail 25F. That is, as long as it is provided to be movable integrally with the front upper rail 25F (first upper rail), the configuration of the first moving body may be any. In the above embodiment (FIGS. 30 to 39), one end and the other end of the rear link 22 as a second link member are supported rotatably in the front-rear direction with respect to the seat cushion 710 and the rear upper rail 25R, but if it is provided to be slidable in the front-rear direction with respect to the floor 1, the second moving body may be other than the rear upper rail 25R. That is, as long as it is provided to be movable integrally with the rear upper rail 25R (second upper rail), the configuration of the second moving body may be any.

In the above embodiment (FIGS. 30 to 39), the front upper rail 25F and the rear upper rail 25R are each configured to have a substantially U-shaped cross-section and engage with the lower rail 14, but the configuration of the first upper rail and the second upper rail is not limited to the above. In the above embodiment (FIGS. 30 to 39), the front link 21 is used as a drive link member and is rotated by the electric motor 35, but the rear link 22 may be driven by the electric motor as a drive link member. In the above embodiment (FIGS. 30 to 39), the front upper rail 25F is driven by the electric motor 27 (first actuator), the rear upper rail 25R is driven by the electric motor 29 (second actuator), and the front link 21 is driven by the electric motor 35 (third actuator), but the first actuator, second actuator, and third actuator may be other than electric motors.

In the above embodiment (FIGS. 30 to 39), the electric motors 27, 35 are attached to the connecting frame 26 (first connecting part) that connects the pair of left and right front upper rails 25F, 25F, but the electric motors 27, 35 may be attached to other members. In the above embodiment (FIGS. 30 to 39), the electric motor 29 is attached to the connecting frame 28 (second connecting part) that connects the pair of left and right rear upper rails 25R, 25R, but the electric motor 29 may be attached to other members. In the above embodiment (FIGS. 30 to 39), the raising and lowering of the seat cushion 710 is commanded by the operation of the operation part 752, but the configuration of the command unit is not limited to the above. In the above embodiment (FIGS. 30 to 39), the height of the rear end of the seat cushion 710 is detected by the position sensor 753, but the configuration of the height detection unit may be any.

In the above embodiment (FIGS. 30 to 39), the distance from the seat 700 to surrounding objects is calculated based on the image acquired by the camera 754, but other than the camera may be used as a proximity detection unit that detects the degree of proximity between the vehicle seat and surrounding objects or people. Therefore, the ECU 751 as a control unit controls the actuator to avoid the approaching movement (stop the approach or operate in the direction of moving away) when the proximity detection unit detects an approaching movement of a predetermined degree or more of the vehicle seat. In the above embodiment (FIGS. 30 to 39), a spring 24 for preventing rattling is provided on the shaft portion 22a of the rear link 22, but the biasing member may be provided other than on the shaft portion, and the configuration of the biasing member is not limited to the above.

In the above embodiment (FIGS. 30 to 39), a single lead screw 15 is supported non-rotatably by the lower rail 14, but a pair of front and rear lead screws 15, 15 may be supported rotatably by the lower rail 14, and a pair of front and rear nuts may be screwed non-rotatably and slidably onto the pair of front and rear lead screws 15, 15, and the pair of front and rear nuts may be supported by the pair of front and rear upper rails 25, 25. In this case, the pair of front and rear lead screws 15, 15 may be rotationally driven by an actuator such as an electric motor. The nut may be arranged on the lower rail side, and the rotatable lead screw may be provided on the upper rail side.

The vehicle seat 700 described above can be modified to be used as the vehicle seat 100 in FIG. 1A. That is, among the pair of left and right side end portions of the pair of left and right vehicle seats 700, 700, the end face of the side end portion (first side end portion) on the other side in the left-right direction (e.g., left side) of the seat cushion 710 of the seat 700 on one side in the left-right direction (e.g., right side) is positioned on one side in the left-right direction (e.g., left side) relative to the end face of the side end portion (second side end portion) on one side in the left-right direction (e.g., right side) of the seat cushion 710 of the seat 700 on the other side in the left-right direction (e.g., left side), and a relief portion may be provided on at least one of the rear end portion of the first side end portion and the front end portion of the second side end portion to prevent interference between the first side end portion and the second side end portion.

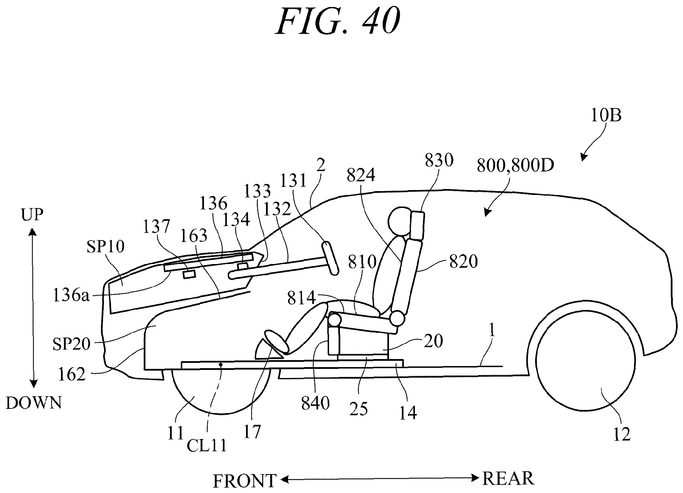

The vehicle seat can be reclined by tilting the seat back backward, but if a lot of space is required behind the seat to achieve the reclining posture, the vehicle becomes larger. Therefore, it is preferable to be able to change the posture of the vehicle seat without increasing the size of the vehicle. Hereinafter, a vehicle configured from such a viewpoint will be described with reference to FIGS. 40 to 52C.

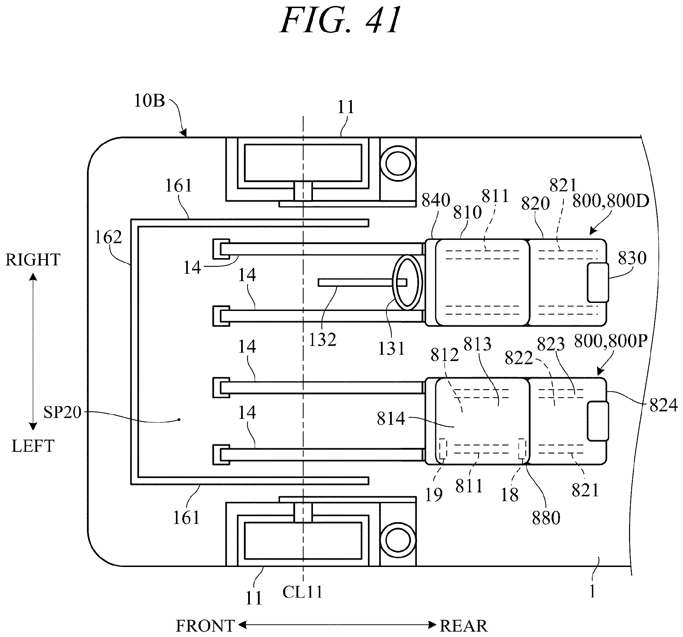

FIG. 40 is a side view showing a schematic configuration of a vehicle 10B equipped with a vehicle seat according to an embodiment of the present invention, and FIG. 41 is a plan view schematically showing a main part configuration of the front side of the vehicle 10B. Hereinafter, the front-rear direction, left-right direction, and upper-lower direction are defined as shown in the figure, and the configuration of each part will be described according to this definition. The front-rear direction, left-right direction, and upper-lower direction in the figure correspond to the length direction, width direction, and height direction of the vehicle 10B, respectively. The vehicle 10B is a four-wheeled vehicle having a pair of left and right front wheels 11 and a pair of left and right rear wheels 12.

The vehicle 10B is configured as a vehicle with an autonomous driving function, that is, an autonomous vehicle. The vehicle 10B can travel not only in an autonomous drive mode where driving operation by the driver is unnecessary, but also in a manual drive mode by the driver's operation. Furthermore, the vehicle 10B is an electric vehicle that travels by driving a travel motor.

As shown in FIGS. 40 and 41, the vehicle 10B is equipped with a pair of left and right vehicle seats 800, namely, a driver's seat 800D and a passenger seat 800P, on the floor 1. The configuration of the driver's seat 800D and the passenger seat 800P is identical to each other, and these vehicle seats 800 may simply be referred to as seats. The seat 800 includes a seat cushion 810 that supports the occupant's buttocks, a seat back 820 that supports the occupant's back, a headrest 830 provided on the upper part of the seat back 820 that supports the occupant's head, and a support part 20 that movably supports the seat cushion 810 in the up-down and front-rear directions from the floor 1.

The seat cushion 810 extends in the front-rear direction and the left-right direction, that is, it extends in a substantially horizontal direction and has a substantially rectangular shape in plan view. The seat cushion 810 has a seat cushion frame 811 (partially shown in FIG. 41) that forms the framework of the seat cushion 810. Although detailed illustration is omitted, the seat cushion frame 811 has, for example, a pair of left and right longitudinal frames extending in the front-rear direction, and a pair of front and rear lateral frames extending in the left-right direction, connecting the front ends and the rear ends of the pair of left and right longitudinal frames, respectively, and the whole has a substantially rectangular frame shape in plan view.

Inside the seat cushion frame 811 (inside the frame), a substantially plate-shaped pressure receiving member (not shown) is arranged. Around the seat cushion frame 811, a cushion pad 812 made of, for example, urethane foam material with elasticity is provided, and the surface of the cushion pad 812 is covered with a skin 813. On the upper surface of the seat cushion 810, a seating surface 814 for the occupant to sit on is formed. At the front end of the seat cushion 810, an ottoman 840 is provided, which can rotate in the up-down direction around an axis extending in the left-right direction.

The seat back 820 includes a seat back frame 821 (partially shown in FIG. 41) that forms the skeleton of the seat back 820. Although not shown in detail, the seat back frame 821 includes, for example, a pair of vertical frames extending approximately in the up-down direction and a pair of horizontal frames extending in the left-right direction, connecting the upper and lower ends of the pair of vertical frames, respectively, forming an approximately rectangular frame shape when viewed from the front.

Inside the seat back frame 821 (inside the frame), a substantially plate-shaped pressure receiving member (not shown) is arranged. Around the seat back frame 821, a back pad 822 made of, for example, urethane foam material with elasticity is provided, and the surface of the back pad 822 is covered with a skin 823. On the front surface of the seat back 820, a seating surface 824 for the occupant to sit on is formed.

Below the seat 800, that is, on the upper surface of the floor 1, a pair of lower rails 14, 14 extending in the front-rear direction is provided. At the bottom of the support part 20, a pair of upper rails 25, 25 extending in the front-rear direction is provided. The left and right upper rails 25, 25 are slidably engaged with the left and right lower rails 14. Note that in FIGS. 40 and 41, detailed illustrations of the support part 20 are omitted.

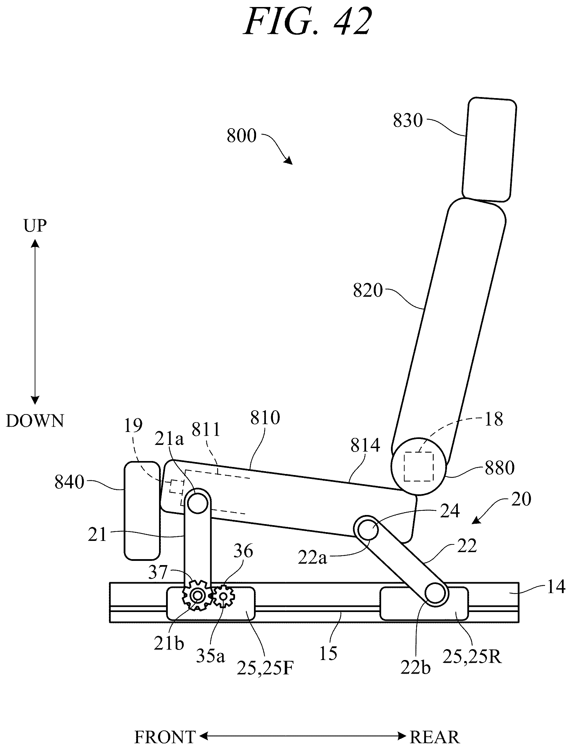

The support part 20 may have any configuration as long as it supports the seat cushion 810 to be movable in the front-rear and up-down directions relative to the floor 1. FIG. 42 is a side view showing an example of the support part 20. The configuration of this support part 20 is the same as that of the support part 20 shown in FIGS. 30 to 33.

As shown in FIG. 42, the lower end of the seat back 820 is pivotally supported in the front-rear direction at the rear end of the seat cushion frame 811 via a reclining mechanism 880, using an axis (not shown) extending in the left-right direction as a fulcrum. The reclining mechanism 880 includes an electric motor 18 supported by the seat cushion frame 811, and the seat back 820 rotates in the front-rear direction by the drive of the electric motor 18. The electric motor 18 may be omitted, and the seat back 820 may be manually rotated in the front-rear direction. An electric motor 19 is provided at the front end of the seat cushion frame 811. The ottoman 840 moves up and down by the drive of the electric motor 19.

FIG. 42 shows the normal posture (normal mode) of the seat 800. In this embodiment, by configuring the support part 20 as shown in FIGS. 30 to 33, the seat 800 can be changed from the normal posture to various postures. The change in seat posture is made in response to a seat posture change command from the occupant. The seat posture change command is input, for example, by operating a seat switch provided on the side of the seat 800. The seat switch includes an up-and-down command switch for commanding the up-and-down movement of the seat, a back-and-forth command switch for commanding the back-and-forth movement, and a mode change switch for commanding the change of seat mode.

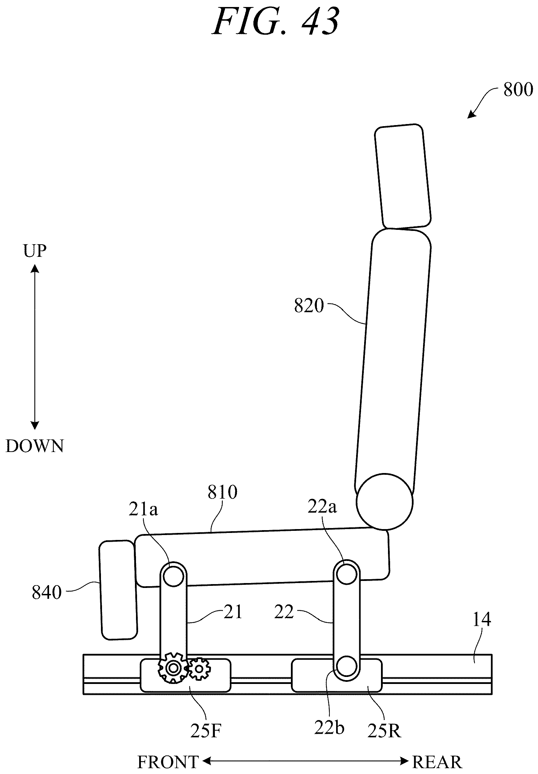

FIG. 43 is a side view of the seat 800 showing a hip-up posture (hip-up mode), which is an example of a posture change. The hip-up mode is commanded, for example, by operating the mode change switch. When changing the seat posture from the normal posture to the hip-up posture, the rear upper rail 25R moves forward by a predetermined amount by the drive of the electric motor 29. As a result, the rear link 22 rises while rotating around the axis parts 22a, 22b as a fulcrum. As a result, the rear end of the seat cushion 810 rises with the axis part 21a of the front link 21 as a fulcrum, and the seat 800 moves to a hip-up posture.

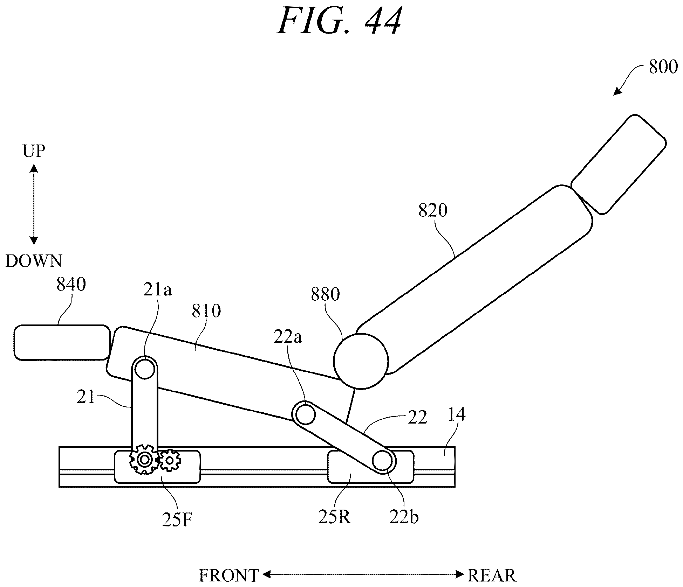

FIG. 44 is a side view of the seat 800 showing a relaxing posture (relax mode), which is another example of a posture change. The relax mode is commanded, for example, by operating the mode change switch. When changing the seat posture from the normal posture to the relaxing posture, the rear upper rail 25R moves backward by a predetermined amount by the drive of the electric motor 29. As a result, the rear link 22 rotates downward while rotating around the axis parts 22a, 22b as a fulcrum. As a result, the rear end of the seat cushion 810 descends with the axis part 21a of the front link 21 as a fulcrum. Furthermore, the ottoman 840 rotates upward by a predetermined amount by the drive of the electric motor 19, and the seat back 820 rotates backward by a predetermined amount by the drive of the electric motor 18, resulting in the seat 800 assuming a relaxing posture.

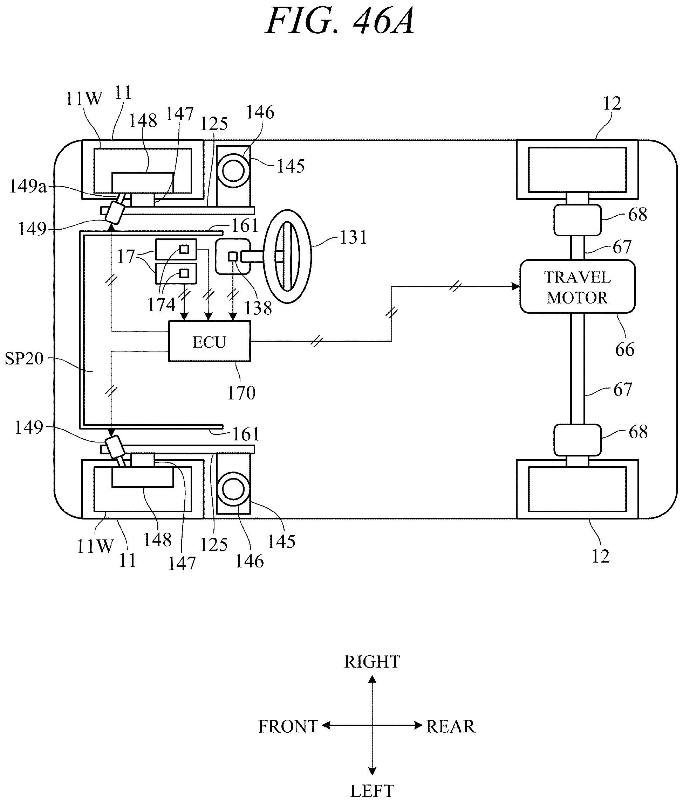

As shown in FIG. 40, a steering wheel 131 is arranged in front of the seat 800 (driver's seat 800D). The steering wheel 131 is rotatably supported by a steering shaft 132 extending in the front-rear direction. The operation of the steering wheel 131 commands the steering of the vehicle 10B (front wheel 11). The operation of the steering wheel 131, that is, the amount and direction of operation, is detected by a steering sensor 138 (FIG. 46A).

The front end of the steering shaft 132 extends into a space SP10 provided in front of the instrument panel 133. The steering shaft 132 is supported to be movable in the front-rear direction within the space SP10. The steering shaft 132 moves in the front-rear direction by the drive of an actuator 134 (e.g., an electric motor). With the front-rear movement of the steering shaft 132, the steering wheel 131 moves integrally with the steering shaft 132 in the front-rear direction, allowing the steering wheel 131 to be retracted near the instrument panel 133.

In the space SP10, a substantially rectangular display 136 is also arranged with the display screen 136a facing downward. Although not shown, the display 136 is retracted in a substantially box-shaped display case installed within the space SP10. An elongated opening in the left-right direction is provided on the rear end surface of the display case, and the display 136 can be taken out from the display case through the opening. More specifically, an actuator 137 (e.g., an electric motor) for moving the display is provided within the display case, and the display 136 is supported to be movable in the front-rear direction by the drive of the actuator 137.

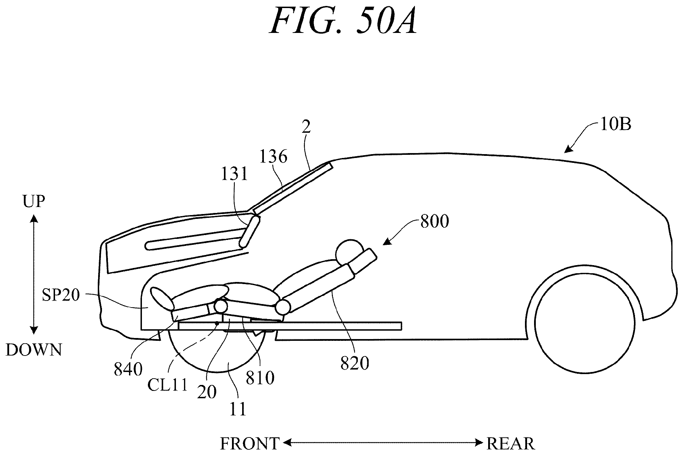

The display 136 is supported by the display case so that the display screen 136a gradually rises as it moves backward, that is, the inclination angle of the display screen 136a with respect to the horizontal plane gradually increases. When the entire display 136 is taken out from the display case, the inclination angle of the display 136 becomes approximately the same as the inclination angle of the front window 2, and the front window 2 is covered by the display 136 (see FIG. 50A). In particular, the lower side of the front window 2 is covered by the display 136.

Instead of storing the display 136 inside the instrument (inside the dashboard), it may be retracted facing the ceiling. That is, instead of an in-dash display, it may be a flip-down display that can rotate forward from near the ceiling surface along an axis extending in the left-right direction. In this case, when the display 136 is rotated downward, the upper side of the front window 2 is covered by the display 136.

As shown in FIGS. 40 and 41, the lower rails 14 extend forward between the left and right front wheels 11, 11. Between the lower rail 14 arranged at the right end and the right front wheel 11, and between the lower rail 14 arranged at the left end and the left front wheel 11, a pair of left and right side walls 161 extending in the front-rear direction are erected from the floor 1. The lower rail 14 extends forward beyond the axis CL11 passing through the rotation center of the front wheel 11, and a front wall 162 extending in the left-right direction is erected from the floor 1 in front of the lower rail 14. An upper wall 163 is arranged at the upper ends of the side wall 161 and the front wall 162. The upper wall 163 extends approximately horizontally below the space SP10, more precisely, it extends with a gentle upward slope toward the rear. As a result, a substantially box-shaped space SP20 with an open rear surface is formed between the left and right front wheels 11, 11 by the side wall 161, the front wall 162, and the upper wall 163.

The height of the space SP20 is set so that the lower body of an occupant in a relaxed posture can move into the space SP20 (see FIG. 50A). It is preferable that the side wall 161 and the front wall 162 forming the space SP20 are made of high-strength members. For example, it is preferable to construct it with a vehicle body frame forming the skeleton of the vehicle body, or with a strength member fixed to the vehicle body frame. An airbag may be arranged to deploy toward the space SP20 when a predetermined impact acts on the vehicle 10B.

As shown in FIG. 40, a pair of operation pedals 17, 17 that can be operated by the driver are provided on the upper surface of the floor 1 in front of the driver's seat 800D in the normal posture (see FIG. 46A). The right operation pedal 17 is an accelerator pedal that commands the acceleration and deceleration of the vehicle 10B according to the amount of depression operation, and the left operation pedal 17 is a brake pedal that commands the braking of the vehicle 10B. The operation pedal 17 is positioned between a pair of left and right lower rails 14, 14 of the driver's seat 800D.

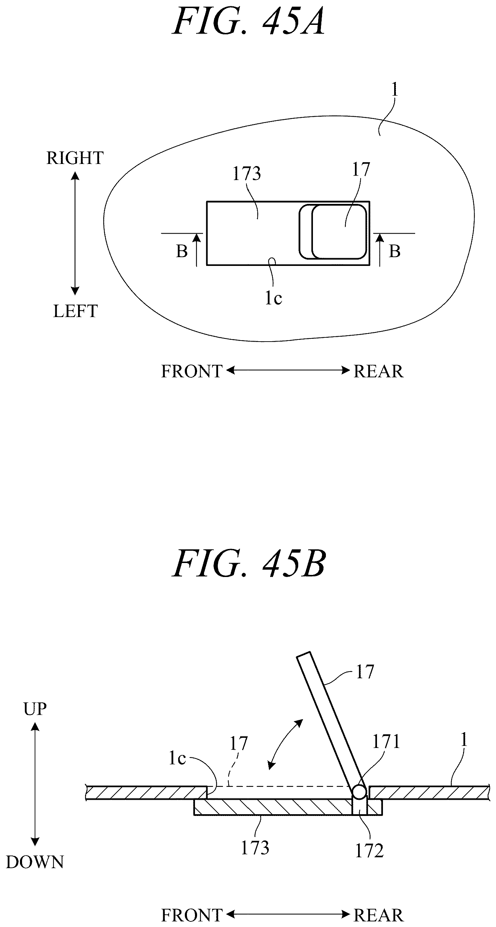

FIG. 45A is a plan view of the operation pedal 17, and FIG. 45B is a cross-sectional view along line B-B of FIG. 45A. As shown in FIGS. 45A and 45B, the operation pedal 17 extends forward and upward at a predetermined angle from the floor 1 and is pivotally supported in the up-down direction using the shaft portion 171, which extends in the left-right direction and is provided on the floor 1, as a fulcrum. Although not shown, the shaft portion 171 is provided with a spring that biases the operation pedal 17 upward and a stopper that limits the upward rotation amount of the operation pedal 17. As a result, the operation pedal 17 is held in an upright state at a predetermined inclination angle as shown by the solid line in FIG. 45B.

When the driver depresses the operation pedal 17, the operation pedal 17 rotates downward about the shaft portion 171 as a fulcrum. The operation amount (rotation amount) of the operation pedal 17 (accelerator pedal, brake pedal) is detected by the pedal sensor 174 (FIG. 46A). The shaft portion 171 is provided with an actuator 172, such as an electric motor, that rotates the operation pedal 17 forward against the biasing force of the spring. In a predetermined seat mode (immersion mode described later), the operation pedal 17 is rotated maximally forward by the drive of the actuator 172. As a result, as shown by the dotted line in FIG. 45B, the operation pedal 17 is positioned inside the substantially rectangular opening 1c of the floor 1 and is retracted in the floor 1. When the operation pedal 17 is retracted, it abuts the upper surface of the backing plate 173 provided on the bottom surface of the floor 1 to cover the opening 1c. At this time, the upper surface of the operation pedal 17 is positioned on substantially the same plane as the upper surface of the floor 1.

FIG. 46A is a schematic plan view showing the configuration related to the driving operation of the vehicle 10B. In FIG. 46A, the illustration of the seat 800 is omitted. As shown in FIG. 46A, the vehicle 10B is equipped with a travel motor 66 between the left and right rear wheels 12, 12. The rotation of the travel motor 66 is transmitted to the left and right rear wheels 12 via an axle 67 extending in the left-right direction, with or without a reduction gear. Therefore, the vehicle 10B is a rear-wheel-drive vehicle. The travel motor 66 is controlled by the ECU 170 in manual drive mode according to signals from the pedal sensor 174. Specifically, it is controlled by a power control unit (not shown) that receives commands from the ECU 170. Suspension 68 is provided on the left-right inner side of the left and right rear wheels 12.

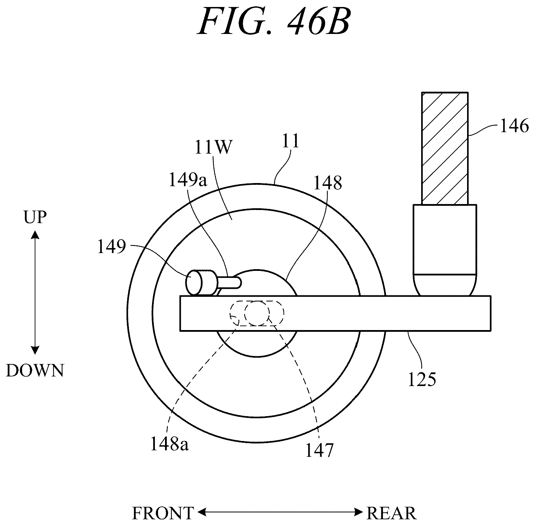

Between the wheel 11W of the front wheel 11 and the side wall 161, a substantially plate-shaped arm 125 extending in the front-rear and the up-down directions is arranged. The arm 125 is fixed to the vehicle body frame. A shaft 147 is protrudingly provided on the arm 125 toward the left-right outer side. FIG. 46B is a side view of the right front wheel 11 as seen from the left-right inner side (left side). As shown in FIGS. 46A and 46B, a hub 148 is arranged on the left-right outer side of the arm 125. An elongated hole 148a is opened in the hub 148 in the front-rear direction. The shaft 147 is inserted through the elongated hole 148a, allowing the hub 148 to be swingably supported in the left and right directions relative to the shaft 147 from the arm 125. The wheel 11W of the front wheel 11 is rotatably supported on the hub 148.

A steering actuator 149 (e.g., an electric motor) for steering the front wheel 11 is mounted on the arm 125, and the rod 149a expands and contracts by the drive of the actuator 149. The tip of the rod 149a is connected to the hub 148, and by driving the actuator 149, the hub 148 can be swung in the left and right directions to change the steering angle of the front wheel 11. The actuator 149 is controlled by the ECU 170 in manual drive mode according to signals from the steering sensor 138. A bracket 145 fixed to the arm 125 is arranged behind the front wheel 11. The suspension 146 is supported on the upper surface of the bracket 145.

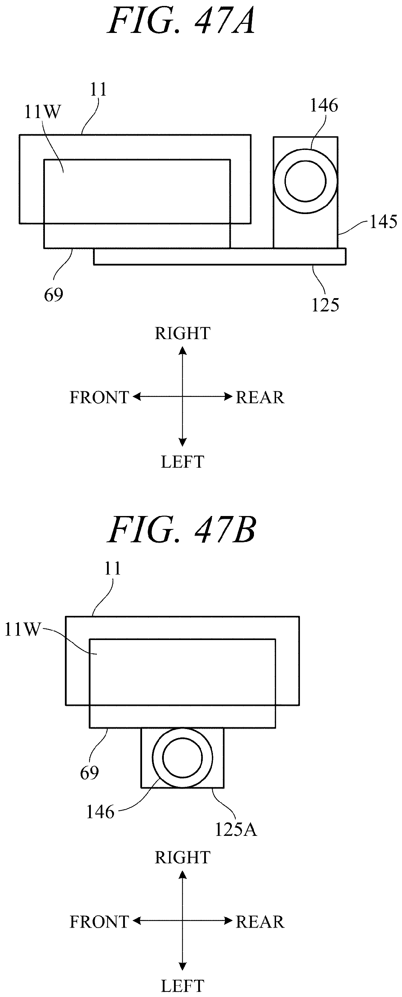

In place of or in addition to the travel motor 66 in FIG. 46A, an in-wheel motor can also be used. FIG. 47A is a plan view of the front wheel 11 showing an example. As shown in FIG. 47A, an in-wheel motor is mounted as the travel motor 69 on the arm 125. The in-wheel motor is positioned inside the wheel 11W and rotates integrally with the wheel 11W. FIG. 47B is a diagram showing a modification of FIG. 47A. In FIG. 47B, unlike FIG. 47A, the arm 125A extends in the left-right direction instead of the front-rear direction. Similar to FIG. 47A, an in-wheel motor is mounted as the travel motor 69 on the arm 125A, and the suspension 146 is supported on the upper surface of the arm 125A.

Comparing FIG. 47A and FIG. 47B, in FIG. 47A, the suspension 146 is arranged behind the front wheel 11, allowing the inner space SP20 (FIG. 46A) between the left and right front wheels 11, 11 to be expanded compared to FIG. 47B. On the other hand, in the example of FIG. 47B, since the arm 125A extends in the left-right direction, the front wheel 11 can be supported for steering via a kingpin or the like.

In this embodiment, the driving operation of the vehicle 10B is controlled by the vehicle control system. The vehicle control system controls the driving operation of the vehicle 10B in both manual and autonomous drive modes. Although not shown, the vehicle control system includes external sensors (radar, LiDAR, cameras, etc.) that detect external conditions, which are the circumferential information of the vehicle 10B, internal sensors (vehicle speed sensors, acceleration sensors, etc.) that detect the driving state of the vehicle 10B, an input unit (steering sensor 138, pedal sensor 174, drive mode switch, etc.) where various commands related to the driving operation of the vehicle 10B are input by the driver, a position detection sensor (GPS receiver, etc.) that detects the current position of the vehicle 10B, a map database, a navigation device that sets the driving route to the destination, an ECU, and driving actuators (travel motor 66, steering actuator 149, braking actuator, etc.).

The ECU of the vehicle control system is configured to include the ECU 170 of FIG. 46A. This ECU reads signals from external sensors, internal sensors, input units, position detection sensors, map databases, and navigation devices, performs predetermined processing, and controls the driving actuators. That is, in manual drive mode, the ECU controls the driving actuators according to commands from the input unit. In autonomous drive mode, the ECU sets the target route to the destination and controls the driving actuators so that the vehicle 10B travels along the target route while avoiding contact with surrounding obstacles.

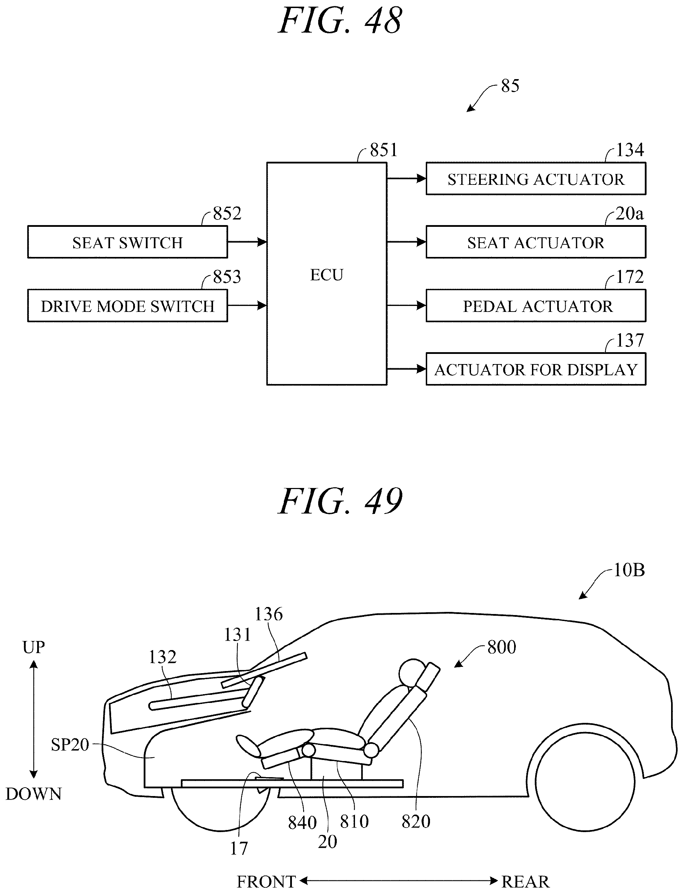

FIG. 48 is a block diagram showing the configuration of a control device 85 that controls the seat mode. As shown in FIG. 48, the control device 85 includes an ECU 851, a seat switch 852 connected to the ECU 851, a drive mode switch 853, a seat actuator 20a, a steering actuator 134 (FIG. 40), a display actuator 137 (FIG. 40), and a pedal actuator 172 (FIG. 45B).

The seat actuator 20a is a general term for multiple electric motors for driving the seat. The seat actuator 20a includes the electric motor 18 for seat back rotation (FIG. 42), the electric motor 19 for ottoman rotation (FIG. 42), the electric motor 27 for front upper rail slide (FIG. 33), the electric motor 29 for rear upper rail slide (FIG. 33), and the electric motor 35 for front upper rail rotation (FIG. 33).

The seat switch 852 includes an up-and-down command switch that commands the up-and-down movement of the seat 800, a back-and-forth command switch that commands the back-and-forth movement, and a mode switch that commands the switching of the seat mode. The seat mode includes the normal mode (FIG. 40), the hip-up mode (FIG. 43), the relax mode (FIG. 44), and an immersion mode described later.

The drive mode switch 853 includes a manual-automatic switch that commands either the automatic drive mode or the manual drive mode, and a driving level command switch that commands the automated driving level. The manual-automatic switch is configured as a switch that can be manually operated by the driver, for example, and outputs a switching command to an automatic drive mode with the automated driving function enabled or a manual drive mode with the automated driving function disabled according to the switch operation. Regardless of the operation of the manual-automatic switch, when predetermined driving conditions are met, the vehicle control system can command switching from manual drive mode to automatic drive mode or from automatic drive mode to manual drive mode.

The driving level command switch is configured as a switch that can be manually operated by the driver, for example, and the automatic driving level is commanded according to the switch operation. The automatic driving level is a guideline of the extent to which driving is automated. The automatic driving level is classified into levels 0 to 5 based on SAE J3016 established by SAE International, for example. Specifically, level 0 is a driving level without automation, and at level 0, all driving operations are performed by a human (driver).

Level 1 is a driving level (driver assistance) where the vehicle control system performs one of the operations of acceleration, steering, and braking. Level 2 is a driving level (partial driving automation) where the vehicle control system performs multiple operations of acceleration, steering, and braking at once. Up to level 2, humans have a duty to monitor the surroundings. Level 3 is a driving level (conditional automated driving) where the vehicle control system performs all acceleration, operation, and braking, and the driver only responds when requested by the vehicle control system. From Level 3 onwards, the vehicle control system monitors the surroundings, and humans have no obligation to monitor the surroundings. Level 4 is a driving level (highly automated driving) where the vehicle control system performs all driving operations in specific situations, and humans do not need to take over even if the vehicle control system cannot continue driving. Therefore, from Level 4 onwards, the vehicle control system responds even in emergencies. Level 5 is a driving level (fully automated driving) where the vehicle control system autonomously drives under all conditions.

The driving level command switch commands one of the automatic driving levels from Level 0 to 5 according to the driver's switch operation. The vehicle control system can be configured to determine whether the conditions for autonomous driving are met based on the surrounding situation, and automatically switch the driving level command switch to command one of the levels from 0 to 5 according to the determination result.

When the automatic drive mode of Level 4 or Level 5 is commanded by the drive mode switch 853, and the immersion mode is commanded by the seat switch 852, the ECU851 outputs a control signal to the seat actuator 20a and changes the seat posture to the immersion posture as follows. Note that when the manual drive mode is commanded by the drive mode switch 853, or when an automatic drive mode of Level 3 or below is commanded, the command for the immersion mode by the seat switch 852 is disabled.

FIG. 49 is a side view of the vehicle 10B showing the intermediate state when the seat posture is changed from the normal posture to the immersion posture. In the normal posture state of FIG. 40, when the immersion mode is commanded, the ECU851 outputs a control signal to the seat actuator 2a, and as shown in FIG. 49, lowers the seat cushion 810, rotates the seat back 820 backward, rotates the ottoman 840 upward, and further moves the seat 800 forward. This allows the occupant's feet to enter the space SP20.

Furthermore, the ECU851 outputs a control signal to the steering actuator 134, moves the steering shaft 132 forward together with the steering wheel 131, and retracts it from the front of the seat 800. This expands the front space of the occupant seated in the seat 800, allowing the occupant to easily move the seat 800 forward without contacting the steering wheel 131. Additionally, the ECU851 outputs a control signal to the pedal actuator 172, rotates the operation pedal 17 downward, and stores it in the floor 1 (dotted line in FIG. 45B). This allows the seat 800 to be easily moved forward without interfering with the operation pedal 17. Furthermore, the ECU851 outputs a control signal to the display actuator 137 and moves the display 136 backward through the opening of the display case.

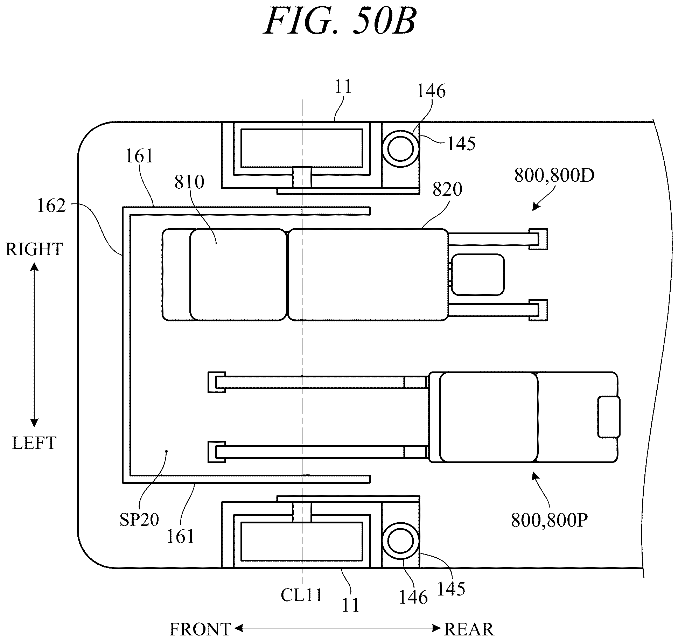

FIG. 50A is a side view of the vehicle 10B showing the immersion posture, and FIG. 50B is a plan view. As shown in FIG. 50A, in the immersion posture, the seat cushion 810 is further lowered, the seat back 820 is rotated backward, the ottoman 840 is rotated upward, and the seat 800 is moved forward compared to the state in FIG. 49. At this time, the front end of the seat 800 is positioned forward of the lower end of the front window 2, more specifically, forward of the axis CL11 of the center of the front wheel 11 as shown in FIG. 50B. In FIG. 50B, only the driver's seat 800D is in the immersion posture, while the passenger seat 800P remains in the normal posture.

As shown in FIG. 50A, the immersion posture differs from the relaxing posture in FIG. 44 only in the front-rear position of the seat 800, and the height of the seat cushion 810, the inclination angle of the seat back 820, and the inclination angle of the ottoman 840 are the same as in the relaxing posture. Note that any or all of the height of the seat cushion 810, the inclination angle of the seat back 820, and the inclination angle of the ottoman 840 may differ from the relaxing posture. For example, the height of the seat cushion 810 in the immersion posture may be lower than the height of the seat cushion 810 in the relaxing posture.

In the immersion posture, the display 136 moves maximally backward, and the lower end of the front window 2 is covered by the display 136. At this time, the inclination angle of the seat back 820 is approximately equal to the inclination angle of the front window 2 or the display 136, and the display 136 is positioned facing the occupant's face. Various images can be displayed on the display 136 according to the occupant's preference. Music or sound corresponding to the display 136 can also be output from the speakers. Since the display 136 appears from below the front window 2, the lower end of the front window 2 is covered by the display 136. This suppresses the front window 2 from entering the occupant's field of view, providing a good view for the occupant looking at the display 136.

According to the present embodiment, the following functions and effects can be exerted.
(1) The vehicle 10B is provided with front wheels 11, 11 on the left and right (FIG. 41). This vehicle 10B includes a seat 800 arranged facing the front window 2, and side wall 161, front wall 162, and upper wall 163 forming an excess space SP20 in front of the seat 800, which is forward and downward of the front window 2, allowing the seat 800 to move, and a support part 20 that movably supports the seat 800 such that the posture of the seat 800 changes from a normal posture where the front end of the seat is positioned behind the center (axis CL11) of the front wheel 11 to an immersion posture where the front end of the seat is positioned forward of the axis CL11 (FIGS. 40, 41, 50A). This allows the seat back 820 to be easily reclined backward without requiring much space behind the seat 800. Therefore, it is possible to achieve a reclined relaxing posture (e.g., immersion posture) of the seat 800 without enlarging the vehicle 10B in the front-rear direction.
(2) In the normal posture, the front end of the seat is positioned behind the lower end of the front window 2, and in the immersion posture, the front end of the seat is positioned forward of the lower end of the front window 2 (FIGS. 40, 50A). This allows a lot of space to be formed behind the seat 800 in the immersion posture, enabling the seat back 820 to be easily reclined backward without interfering with the rear part of the seat 800 (e.g., rear seat).
(3) The seat 800 includes a seat cushion 810 and a seat back 820 (FIG. 40). The support part 20 supports the seat 800 such that the seat cushion 810 is positioned lower when the seat 800 is in the immersion posture than when it is in the normal posture (FIGS. 40, 50A). This prevents the occupant's lower body from contacting the upper wall 163, etc., forming the space SP20 when the seat 800 is moved into the space SP20 in front of the seat 800.
(4) The vehicle 10B further includes a display 136 movably provided between a position facing the front window 2 (facing position) and a position retracted from the front window 2 (retracted position), and a display actuator 137 for moving the display 136 between the facing position and the retracted position (FIGS. 40, 50A). This allows the display 136 to be positioned facing the occupant's face in the immersion posture, providing good visibility of the display screen 136a of the display 136.
(5) The vehicle 10B further includes an arm 125 disposed between the front wheel 11 and the side wall 161 forming the space SP20, and a travel motor 69, more specifically an in-wheel motor, disposed inside the front wheel 11 or between the front wheel 11 and the arm 125, supported by the arm 125 to drive the front wheel 11 (FIGS. 47A, 47B). This allows the travel motor 69 (in-wheel motor) to be positioned near the front wheel 11, easily forming a large space SP20 between the left and right front wheels 11, 11 into which the front end of the seat 800 can enter.
(6) The vehicle 10B further includes a steering actuator 149 supported by the arm 125 for steering the front wheel 11 (FIGS. 46A, 46B). This allows the steering mechanism to be miniaturized, thereby expanding the space SP20 between the left and right front wheels 11, 11.
(7) The vehicle 10B is an autonomous vehicle with an autonomous driving function, and further includes a drive mode switch 853 for switching the level of autonomous driving to a Level 3 or lower autonomous driving level including the driver's surrounding monitoring obligation while driving, or a Level 4 or higher autonomous driving level without the surrounding monitoring obligation, and an ECU851 for controlling the support part 20 according to the switching of the drive mode switch 853 (FIG. 48). When the autonomous driving level is switched to a Level 3 or lower autonomous driving level by the drive mode switch 853, the ECU851 disables the posture change of the seat 800 from the normal posture to the immersion posture, and when the autonomous driving level is switched to a Level 4 or higher autonomous driving level, it enables the posture change from the normal posture to the immersion posture. This allows the seat posture to be changed to the immersion posture considering whether the driver has the obligation to monitor the surroundings of the vehicle 10B.

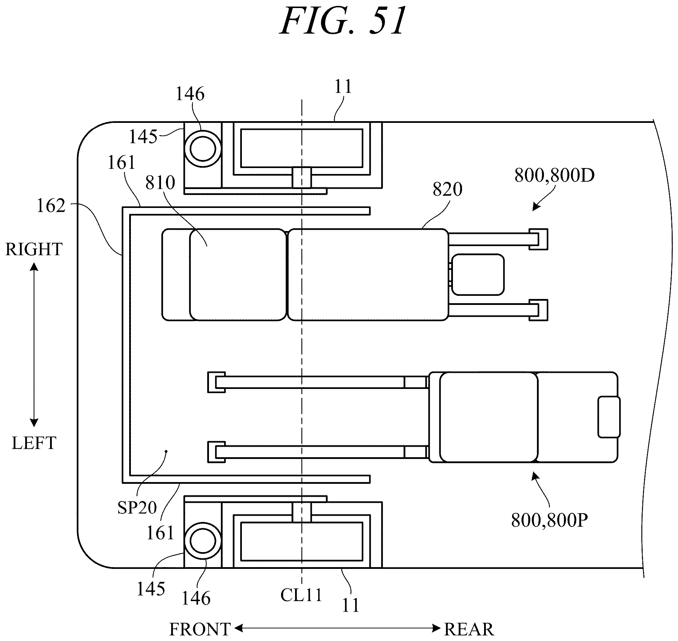

FIG. 51 is a diagram showing a modification of FIG. 50B. In FIG. 50B, the front suspension 146 of the vehicle is supported via bracket 145 behind the front wheel 11, whereas the suspension 146 may also be supported via bracket 145 in front of the front wheel 11, as shown in FIG. 51.

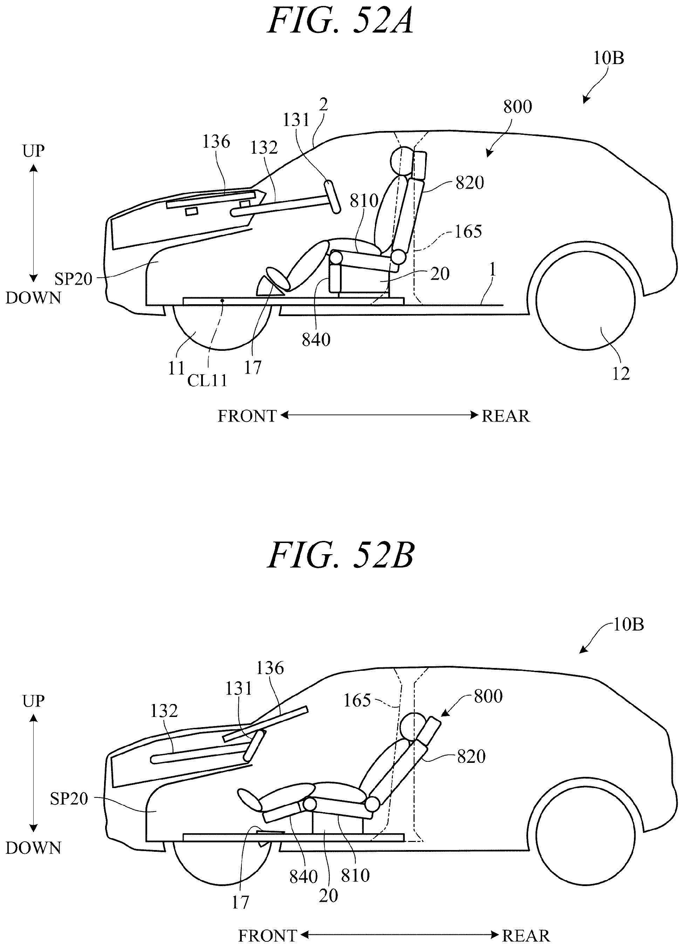

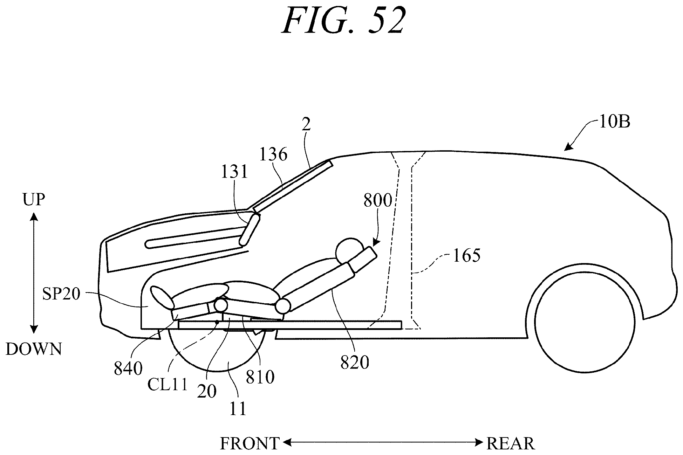

Vehicle 10B is equipped with a B-pillar, which is a structural member, behind the front door. The position of seat 800 can also be defined in relation to this B-pillar. FIGS. 52A, 52B, and 52C are side views of vehicle 10B with the B-pillar added, corresponding to FIGS. 40, 49, and 50A, respectively. As shown in FIGS. 52A, 52B, and 52C, a B-pillar 165 (two-dot chain line) is provided in the front-rear center of vehicle 10B. In the normal posture shown in FIG. 52A, the B-pillar 165 and seat 800 overlap in a side view. On the other hand, in the immersion posture shown in FIG. 50A, the entire seat is positioned in front of the B-pillar 165. More specifically, in the immersion posture, the seat back 820 reclines maximally backward, but in this case, the rear end of seat 800 is positioned in front of the B-pillar 165.

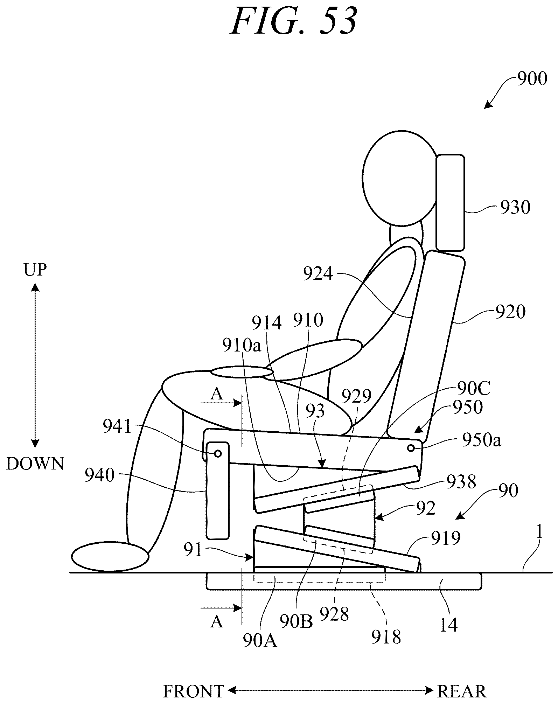

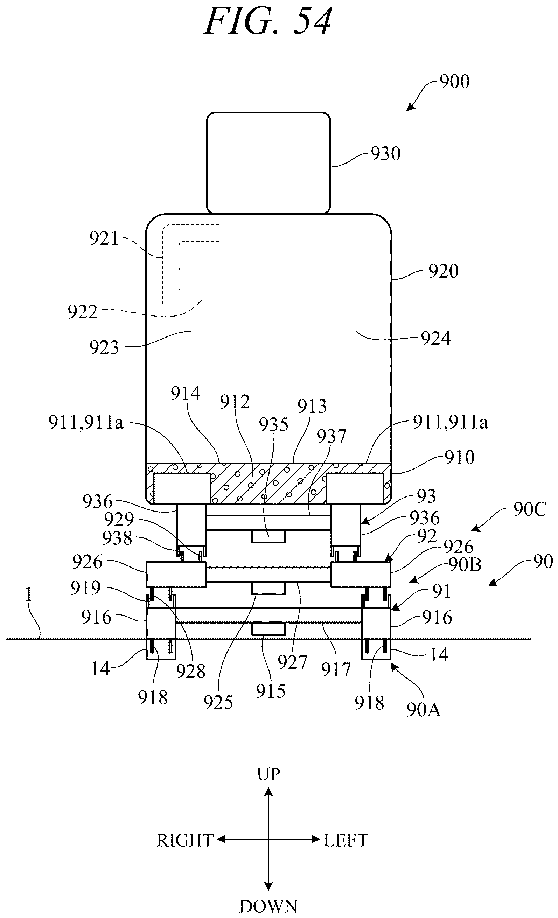

In the above embodiment (FIG. 50A), a support part 20 having a pair of links 21, 22 in the front-rear direction is used as a support for movably supporting seat 800 in the front-rear and up-down directions, but the configuration of the support part is not limited to the above. That is, as long as the seat can be movably supported from a first position where the front end of the seat is located behind the center of the front wheel 11 to a second position where the front end of the seat is located in front of the center of the front wheel 11, the configuration of the support part can be any. For example, a support part (FIGS. 53, 54) for supporting the vehicle seat 900 described later may be used. The support part may support the seat such that, in the first position, the front end of the seat is located behind the lower end of the front window 2, and in the second position, the front end of the seat is located in front of the lower end of the front window 2. It should be noted that the seat posture in the first posture is not limited to the normal posture. Also, the seat posture in the second position is not limited to the immersion posture.

In the above embodiment (FIGS. 40 to 52C), a space SP20 with an open rear surface is formed in front and below the front window 2, in front of seat 800, or in other words, below the bonnet, by side wall 161, front wall 162, and upper wall 163, but the configuration of a space forming part that forms surplus space for seat movement is not limited to the above. In the above embodiment (FIGS. 40 to 52C), the seat cushion 810 is positioned lower in the immersion posture than in the normal posture, but the height of the seat cushion may be almost the same in the first and second positions, such as when the seat cushion is lowered in the first position.

In the above embodiment (40 to 52C), the seat mode is switched by the seat switch 852 to change the seat posture from the normal posture (normal mode) to the immersion posture (immersion mode), but the seat posture may be manually changed to the immersion posture by the occupant operating the upper-lower movement command switch or the front-rear movement command switch. In the above embodiment (40 to 52C), the seat posture is changed by driving the seat actuator 20a, but the seat actuator 20a may be omitted, and the seat posture may be changed manually.

In the above embodiment (FIGS. 40 to 52C), the display 136 is provided to be movable between a retracted position in front of the front window 2 and an opposing position facing the front window 2 by driving the display actuator 137, but the configuration of the display moving part is not limited to the above. In the above embodiment (FIGS. 40 to 52C), an arm 125 is arranged as a frame part between the side wall 161 and the front wheel 11, but the configuration of the frame part can be any. In the above embodiment (FIG. 46A), a travel motor 66 is arranged between the left and right rear wheels 12, 12, and in the above embodiment (FIGS. 47A, 47B), a travel motor 69 is arranged inside the front wheel 11 or between the front wheel 11 and the arm 125, but the configuration of the driving actuator is not limited to the above.

In the above embodiment (FIGS. 40 to 52C), a steering actuator 149 is provided to swing the hub 148 of the front wheel 11, but the configuration of the steering actuator is not limited to the above. In the above embodiment (FIGS. 40 to 52C), an operation mode switch 853 capable of switching to a first autonomous driving level of level 3 or lower or a second autonomous driving level of level 4 or higher is provided as a driving level switching unit, and the ECU 851 as a control unit disables the movement of seat 800 from the first position to the second position when the autonomous driving level is switched to the first autonomous driving level, and enables the movement of seat 800 from the first position to the second position when the autonomous driving level is switched to the second autonomous driving level, but the configuration of the control unit is not limited to the above. For example, regardless of the switching of the operation mode switch, when it is detected that vehicle 10B is in a non-driving state (parked state), the movement of the seat from the first position to the second position may be allowed. Therefore, the vehicle to which the present invention is applied is not limited to autonomous vehicles.

The above embodiment (FIGS. 40 to 52C) configures the vehicle as an electric vehicle, but the vehicle is not limited to electric vehicles. That is, the driving power source may be an internal combustion engine instead of a motor. The vehicle seat 800 described above can be modified for use as the vehicle seat 100 in FIG. 1A. That is, among the pair of side end portions of the pair of vehicle seats 800, 800, the end surface of the side end portion (first side end portion) on the other side in the left-right direction (e.g., left side) of the seat cushion 810 of the seat 800 on one side in the left-right direction (e.g., right side) is positioned on one side in the left-right direction (e.g., left side) relative to the end surface of the side end portion (second side end portion) on one side in the left-right direction (e.g., right side) of the seat cushion 810 of the seat 800 on the other side in the left-right direction (e.g., left side), and a relief portion may be provided on at least one of the rear end portion of the first side end portion and the front end portion of the second side end portion to prevent interference between the first side end portion and the second side end portion.

The position of the vehicle seat can also be changed to various positions in the front-rear and up-down directions without using a link mechanism. Hereinafter, such a vehicle seat will be described with reference to FIGS. 53 to 61B. This vehicle seat can be applied to various vehicles, but the following describes an example of applying the vehicle seat as an automotive seat to an automotive. The vehicle seat may simply be referred to as a seat.

FIG. 53 is a side view showing a schematic configuration of a vehicle seat (seat) 900 according to an embodiment of the present invention, and FIG. 54 is a cross-sectional view taken along line A-A of FIG. 53. In the following, the front-rear direction (length direction), left-right direction (width direction), and upper-lower direction (height direction) are defined as shown in the figures, and the configuration of each part is described according to this definition. FIG. 53 also shows an occupant in a riding posture.

As shown in FIGS. 53 and 54, the seat 900 includes a seat cushion 910 that supports the occupant's buttocks, a seat back 920 that supports the occupant's back, a headrest 930 provided at the top of the seat back 920 to support the occupant's head, and a support part 90 that movably supports the seat cushion 910 in the up-down and front-rear directions from the floor 1.

The seat cushion 910 extends in the front-rear and left-right directions, that is, it extends in a substantially horizontal direction and has a substantially rectangular shape in plan view. The seat cushion 910 has a seat cushion frame 911 (FIG. 54) that forms the skeleton of the seat cushion 910. Detailed illustration is omitted, but the seat cushion frame 911 includes, for example, a pair of longitudinal frames 911a extending in the front-rear direction and a pair of transverse frames extending in the left-right direction, connecting the front ends and rear ends of the pair of longitudinal frames, respectively, and the whole has a substantially rectangular frame shape in plan view.

Inside the seat cushion frame 911, a substantially plate-shaped pressure receiving member (not shown) is arranged. Around the seat cushion frame 911, a cushion pad 912 having elasticity, made of, for example, urethane foam material, is provided, and the surface of the cushion pad 912 is covered with a skin 913. On the upper surface of the seat cushion 910, a seating surface 914 for the occupant to sit on is formed. As shown in FIG. 53, an ottoman 940 is provided at the front end of the seat cushion 910, pivotable in the upper-lower direction with a shaft portion 941 extending in the left-right direction as a fulcrum.

The seat back 920 has a seat back frame 921 (partially shown in FIG. 54) that forms the skeleton of the seat back 920. Detailed illustration is omitted, but the seat back frame 921 includes, for example, a pair of vertical frames extending in a substantially up-down direction and a pair of horizontal frames extending in the left-right direction, connecting the upper ends and lower ends of the pair of vertical frames, respectively, and the whole has a substantially rectangular frame shape in front view.

Inside the seat back frame 921, a substantially plate-shaped pressure receiving member (not shown) is arranged. Around the seat back frame 921, a back pad 922 having elasticity, made of, for example, urethane foam material, is provided, and the surface of the back pad 922 is covered with a skin 923. On the front surface of the seat back 920, a seating surface 924 for the occupant to sit on is formed. The lower end of the seat back 920 is pivotally supported on the rear end of the seat cushion frame 911 via a reclining mechanism 950, with a shaft portion 950a extending in the left-right direction as a fulcrum, allowing it to pivot in the front-rear direction.

The support part 90 comprises three members arranged stacked in the up-down direction, namely a lower member 91, an intermediate member 92, and an upper member 93. The lower member 91 is mounted on the upper surface of the floor 1 so as to be movable in the front-rear direction. The intermediate member 92 is mounted on the upper surface of the lower member 91 so as to be movable in the front-rear direction. The upper member 93 is mounted on the upper surface of the intermediate member 92 so as to be movable in the front-rear direction. The bottom surface 910a of the seat cushion 910 (seat cushion frame 911) is fixed to the upper surface of the upper member 93.

More specifically, as shown in FIG. 54, the lower member 91 includes a pair of left and right lower frames 916, 916 extending in the front-rear direction, and a connecting frame 917 extending in the left-right direction to connect the left and right lower frames 916, 916. The intermediate member 92 includes a pair of left and right intermediate frames 926, 926 extending in the front-rear direction, and a connecting frame 927 extending in the left-right direction to connect the left and right intermediate frames 926, 926. The upper member 93 includes a pair of left and right upper frames 936, 936 extending in the front-rear direction, and a connecting frame 937 extending in the left-right direction to connect the left and right upper frames 936, 936.

The pair of left and right upper frames 936, 936 are positioned more inward in the left-right direction than the pair of left and right lower frames 916, 916. The intermediate frame 926 extends in the left-right direction from the inner end surface of the upper frame 936 in the left-right direction to the outer end surface of the lower frame 916 in the left-right direction. As shown in FIG. 53, the length of the intermediate member 92 in the front-rear direction is shorter than the length of the lower member 91 in the front-rear direction and shorter than the length of the upper member 93 in the front-rear direction.

As shown in FIGS. 1 and 2, a pair of left and right lower rails 14, 14 extending in the front-rear direction are provided on the upper surface of the floor 1. On the bottom surface of the lower frame 916, upper rails 918 are provided corresponding to the lower rail 14 from the front end surface to the rear end surface. The lower rail 14 has a substantially U-shaped cross-section facing upward, and the upper rail 918 has a substantially U-shaped cross-section facing downward. The upper rail 918 is slidably engaged with the lower rail 14 in the front-rear direction. The lower rail 14 and the upper rail 918 constitute the lower slide mechanism 90A.

On the upper surface of the lower frame 916, a lower rail 919 extending in the front-rear direction is provided from the front end surface to the rear end surface. The lower rail 919 can also extend in the front-rear direction beyond the front end surface or the rear end surface of the lower frame 916. On the bottom surface of the intermediate frame 926, an upper rail 928 is provided corresponding to the lower rail 919 from the front end surface to the rear end surface. The lower rail 919 has a substantially U-shaped cross-section facing upward, and the upper rail 928 has a substantially U-shaped cross-section facing downward. The upper rail 928 is slidably engaged with the lower rail 919 in the front-rear direction. The lower rail 919 and the upper rail 928 constitute the intermediate slide mechanism 90B. The lower rail 919 is longer than the upper rail 928.

On the upper surface of the intermediate frame 926, a lower rail 929 extending in the front-rear direction is provided from the front end surface to the rear end surface. On the bottom surface of the upper frame 936, an upper rail 938 is provided corresponding to the lower rail 929 from the front end surface to the rear end surface. The lower rail 929 has a substantially U-shaped cross-section facing upward, and the upper rail 938 has a substantially U-shaped cross-section facing downward. The upper rail 938 is slidably engaged with the lower rail 929 in the front-rear direction. The lower rail 929 and the upper rail 938 constitute the upper slide mechanism 90C. The upper rail 938 is longer than the lower rail 929.

The lower slide mechanism 90A, the intermediate slide mechanism 90B, and the upper slide mechanism 90C include electric motors, and each part is slid in the front-rear direction by the drive of the electric motor. More specifically, as shown in FIG. 54, the lower slide mechanism 90A includes an electric motor 915 attached to the connecting frame 917 of the lower member 91. The intermediate slide mechanism 90B includes an electric motor 925 attached to the connecting frame 927 of the intermediate member 92. The upper slide mechanism 90C includes an electric motor 935 attached to the connecting frame 937 of the upper member 93.

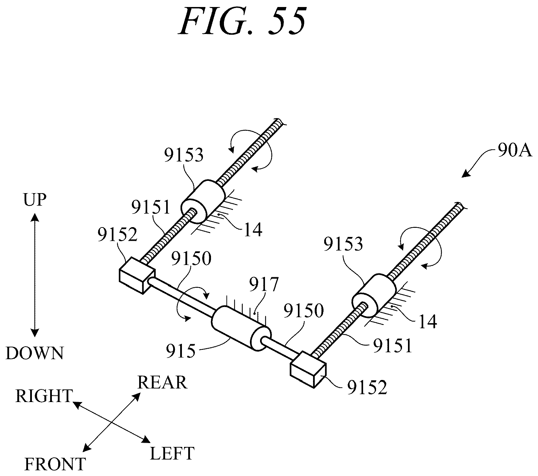

FIG. 55 is a perspective view schematically showing the main part configuration of the lower slide mechanism 90A. In FIG. 55, for convenience, the illustration of the lower rail 14 and the upper rail 918 is omitted. As shown in FIG. 55, a pair of left and right output shafts protruding from the electric motor 915 are each connected to shafts 9150 extending in the left-right direction. Inside the left and right upper rails 918 (not shown), a screw shaft 9151 extending in the front-rear direction is rotatably supported. The outer ends of the shafts 9150 in the left-right direction and the front ends of the screw shaft 9151 are connected to gearboxes 9152.

A worm gear is integrated in the gearbox 9152, and the rotation of the shaft 9150 is transmitted to the screw shaft 9151 via the worm gear. A nut 9153 is fixed to the lower rail 14. The screw shaft 9151 passes through the nut 9153 and is screwed into the nut 9153. The electric motor 915 is capable of forward and reverse rotation, and by driving the electric motor 915, the screw shaft 9151 rotates in one direction or the opposite direction, and the screw shaft 9151 moves in the front-rear direction relative to the nut 9153. That is, the screw shaft 9151 moves in the front-rear direction together with the upper rail 918 relative to the lower rail 14. As a result, the lower member 91 slides in the front-rear direction relative to the floor 1.

Although not shown, the intermediate slide mechanism 90B and the upper slide mechanism 90C are also configured similarly to the lower slide mechanism 90A. The electric motor 925 is capable of forward and reverse rotation, and by driving the electric motor 925, the intermediate member 92 slides in the front-rear direction relative to the lower member 91. Also, the electric motor 935 is capable of forward and reverse rotation, and by driving the electric motor 935, the upper member 93 slides in the front-rear direction together with the seat cushion 910 relative to the intermediate member 92.

As shown in FIG. 53, the intermediate slide mechanism 90B and the upper slide mechanism 90C are formed to be inclined at a predetermined angle with respect to the horizontal plane. More specifically, the lower rail 919 and the upper rail 928 of the intermediate slide mechanism 90B extend with a downward slope toward the rear. As a result, the intermediate member 92 moves forward and upward or backward and downward relative to the lower member 91. On the other hand, the lower rail 929 and the upper rail 938 of the upper slide mechanism 90C extend with an upward slope toward the rear. As a result, the upper member 93 moves forward and downward or backward and upward relative to the intermediate member 92.

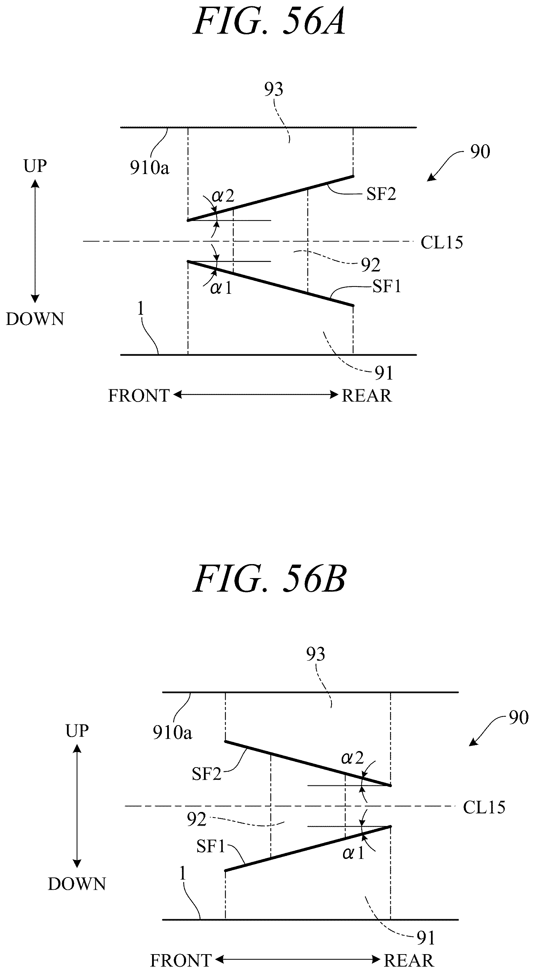

FIG. 56A is a side view schematically showing the configuration of the support part 90 between the floor 1 and the bottom surface 910a of the seat cushion 910. In FIG. 56A, the inclined surface SF1 extending along the intermediate slide mechanism 90B and the inclined surface SF2 extending along the upper slide mechanism 90C are emphasized. As shown in FIG. 56A, the inclined surface SF1 slopes downward toward the rear, and the inclined surface SF2 slopes upward toward the rear.

The directions in which the inclined surfaces SF1 and SF2 extend are different from each other, but the angle of the inclined surface SF1 with respect to the horizontal plane (inclination angle α1) and the angle of the inclined surface SF2 with respect to the horizontal plane (inclination angle α2) are the same or almost the same. Therefore, with respect to the reference line CL15 extending in the front-rear direction through the middle of the inclined surfaces SF1 and SF2, the inclined surfaces SF1 and SF2 have a symmetrical or almost symmetrical positional relationship (plane symmetrical positional relationship). The magnitude of the inclination angle α1 and the magnitude of the inclination angle α2 may be different. That is, α1 may be larger than α2, or α1 may be smaller than α2.

FIG. 56B is a diagram showing a modification of FIG. 56A. In FIG. 56B, contrary to FIG. 56A, the inclined surface SF1 extending along the intermediate slide mechanism 90B slopes upward toward the rear, and the inclined surface SF2 extending along the upper slide mechanism 90C slopes downward toward the rear. The directions in which the inclined surfaces SF1 and SF2 extend are different from each other, but the angle of the inclined surface SF1 with respect to the horizontal plane (inclination angle α1) and the angle of the inclined surface SF2 with respect to the horizontal plane (inclination angle α2) are the same or almost the same. Therefore, the inclined surfaces SF1 and SF2 have a symmetrical or almost symmetrical positional relationship (plane symmetrical positional relationship) with respect to the reference line CL15. The magnitude of the inclination angle α1 and the magnitude of the inclination angle α2 may be different. That is, α1 may be larger than α2, or α1 may be smaller than α2.

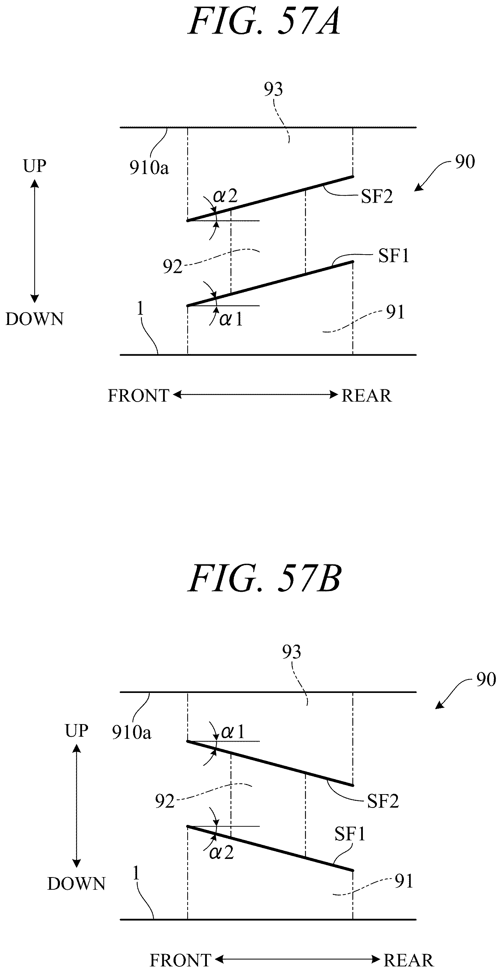

In FIGS. 56A and 56B, one and the other of the inclined surfaces SF1 and SF2 are made to have a downward slope and an upward slope, respectively, toward the rear. That is, the gradient forms of the inclined surfaces SF1 and SF2 are made to be opposite to each other, but the gradient forms of the inclined surfaces SF1 and SF2 may be the same as each other. FIGS. 57A and 57B are diagrams showing an example of this. In FIG. 57A, both inclined surfaces SF1 and SF2 extend with an upward slope toward the rear. In FIG. 57B, both inclined surfaces SF1 and SF2 extend with a downward slope toward the rear.

In FIG. 57A, the inclination angle α1 of the inclined surface SF1 with respect to the horizontal plane and the inclination angle α2 of the inclined surface SF2 are equal to each other, and the inclined surfaces SF1 and SF2 are parallel. Similarly, in FIG. 57B, the inclination angle α1 and the inclination angle α2 are equal to each other, and the inclined surfaces SF1 and SF2 are parallel. In FIGS. 57A and 57B, the inclination angle α1 and the inclination angle α2 may differ. That is, α1 may be greater than α2, or α1 may be smaller than α2.

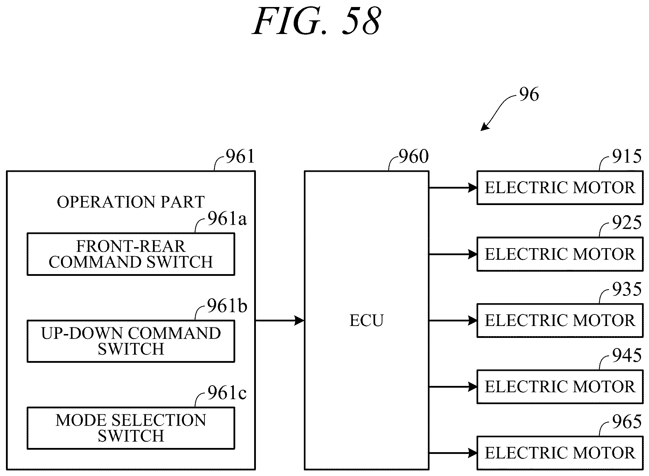

FIG. 58 is a block diagram showing the configuration of a seat control device 96 that controls the operation of the seat 900. As shown in FIG. 58, the seat control device 96 includes an ECU 960, an operation part 961 connected to the ECU 960, and electric motors 915, 925, 935, 945, and 965. Signals from the operation part 961 are input to the ECU 960. Although not shown, signals from position sensors that detect the current front-rear and up-down positions of the seat 900 are also input to the ECU 960.

Various types of position sensors can be used, such as linear encoders, magnetic sensors (Hall sensors), optical encoders, potentiometers (variable resistors), and limit switches, etc. Sensors that detect the rotation amount of electric motors 915, 925, and 935 can also be used as position sensors. The operation part 961 includes a front-rear command switch 961a for commanding the front-rear movement of the seat 900, an up-down command switch 961b for commanding the up-down movement, and a mode selection switch 961c for selecting the seat mode of the seat 900.

The seat mode includes a normal mode and a relax mode. FIG. 53 is an example of the normal mode, showing the state where the seat 900 is in the normal position (also referred to as the normal posture). The normal mode is a seat mode where the occupant is in a standard seating posture (normal posture). In the normal mode, the angle formed by the seat back 920 with respect to the horizontal line (seat back inclination angle) is greater than a predetermined angle, and the occupant's face is directed forward. Additionally, the ottoman 940 remains retracted, and the occupant's feet are placed on the upper surface of the floor 1. In the relax mode, the seat back inclination angle is smaller than a predetermined angle, and the occupant's face is directed obliquely upward. Furthermore, the ottoman 940 rotates upward, and the occupant's feet are lifted off the floor 1.

Although not shown, the length of the ottoman 940 in the left-right direction is shorter than the distance between the left and right lower frames 916, 916. For example, the right end surface of the ottoman 940 is positioned to the left of the left end surface of the right lower frame 916, and the left end surface of the ottoman 940 is positioned to the right of the right end surface of the left lower frame 916. This prevents the ottoman 940 and the lower frame 916 from coming into contact. Note that the length of the ottoman 940 in the left-right direction may be longer than the distance between the left and right lower frames 916, 916.

The electric motor 915 in FIG. 58 is a motor for driving the lower member constituting the lower slide mechanism 90A. The electric motor 925 is a motor for driving the intermediate member constituting the intermediate slide mechanism 90B. The electric motor 935 is a motor for driving the upper member constituting the upper slide mechanism 90C. The electric motor 945 is a motor for driving the ottoman provided on the shaft portion 941 of the ottoman 940, and the ottoman 940 is rotated in the up-down direction by the drive of the electric motor 945. The electric motor 965 is a motor for tilting the seat back provided on the shaft portion 950a of the reclining mechanism 950, and the seat back 920 is rotated in the front-rear direction by the drive of the electric motor 965. The ECU 960 controls the electric motors 915, 925, 935, 945, and 965 based on signals from the position sensors so that the seat position detected by the position sensors moves to the target position according to commands from the operation part 961.

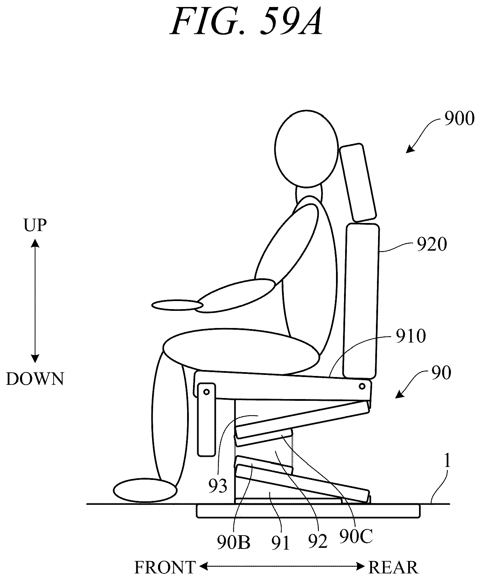

The seat 900 according to this embodiment can change its position from the normal position shown in FIG. 53 to various positions by driving the electric motors 915, 925, 935, 945, and 965. FIG. 59A is a side view showing an example of the seat 900 positioned at a raised position higher than the normal position. When the occupant operates the up-down command switch 961b to command the raising of the seat 900, the seat 900 rises to the raised position by driving the electric motors 925 and 935.

Specifically, as shown in FIG. 59A, the intermediate member 92 moves maximally forward relative to the lower member 91 along the intermediate slide mechanism 90B. Furthermore, the upper member 93 moves maximally backward relative to the intermediate member 92 along the upper slide mechanism 90C. As a result, the positions of the front end surfaces of the lower member 91, the intermediate member 92, and the upper member 93 coincide or nearly coincide. At this time, the ECU 960 simultaneously drives the electric motors 925 and 935 so that the seat 900 rises while maintaining its front-rear position unchanged. As a result, the seat cushion 910 rises to the maximum while the front-rear position of the seat 900 remains the same as the normal position.

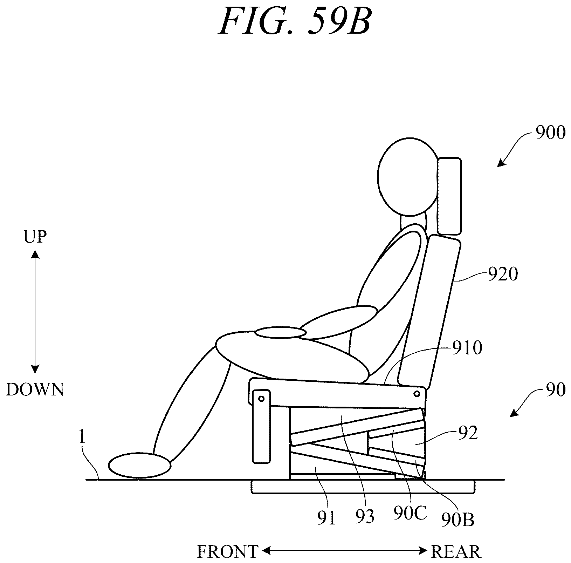

FIG. 59B is a side view showing an example of the seat 900 positioned at a lowered position lower than the normal position. When the occupant operates the up-down command switch 961b to command the lowering of the seat 900, the seat 900 lowers to the lowered position by driving the electric motors 925 and 935.

Specifically, as shown in FIG. 59B, the intermediate member 92 moves maximally backward relative to the lower member 91 along the intermediate slide mechanism 90B. Furthermore, the upper member 93 moves maximally forward relative to the intermediate member 92 along the upper slide mechanism 90C. As a result, the positions of the rear end surfaces of the lower member 91, the intermediate member 92, and the upper member 93 coincide or nearly coincide. At this time, the ECU 960 simultaneously drives the electric motors 925 and 935 so that the seat 900 rises while maintaining its front-rear position unchanged. As a result, the seat cushion 910 lowers to the maximum while the front-rear position of the seat 900 remains the same as the normal position.

In the lowered position, the front end of the lower member 91 and the front end of the upper member 93 approach each other maximally. However, as shown in FIG. 54, the upper member 93 is positioned inside the lower member 91 in the left-right direction. Therefore, in the lowered position, the lower member 91 and the upper member 93 do not interfere, and the lower end of the front end of the upper member 93 can be lowered below the upper end of the front end of the lower member 91.

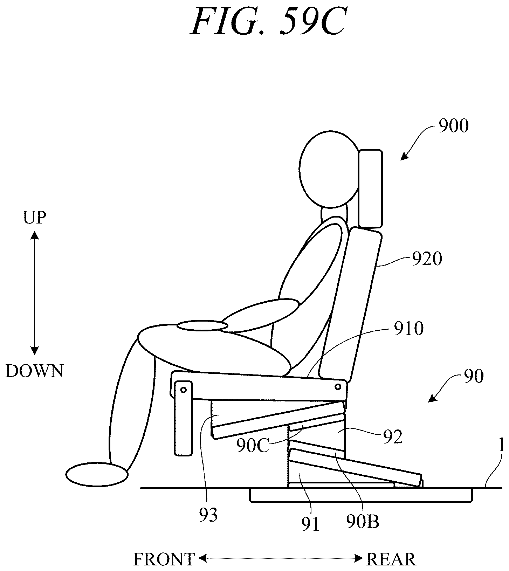

FIG. 59C is a side view showing an example of the seat 900 positioned at a forward position moved forward from the normal position. When the occupant operates the front-rear command switch 961a to command the forward movement of the seat 900, the seat 900 moves forward to the forward position by driving the electric motors 925 and 935.

Specifically, as shown in FIG. 59C, the intermediate member 92 moves maximally forward relative to the lower member 91 along the intermediate slide mechanism 90B. Furthermore, the upper member 93 moves maximally forward relative to the intermediate member 92 along the upper slide mechanism 90C. As a result, the positions of the front end surfaces of the lower member 91 and the intermediate member 92 coincide or nearly coincide, and the positions of the rear end surfaces of the intermediate member 92 and the upper member 93 coincide or nearly coincide. At this time, the ECU 960 simultaneously drives the electric motors 925 and 935 so that the seat 900 moves forward while maintaining its up-down position unchanged. As a result, the seat cushion 910 moves maximally forward while the up-down position of the seat 900 remains the same as the normal position.

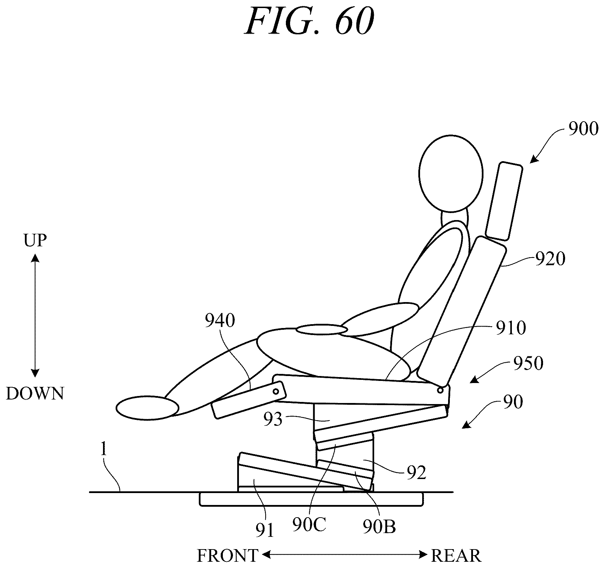

FIG. 60 is a side view showing an example of the seat 900 in the relax mode, that is, when the seat 900 is in the relax position (also referred to as the relax posture). When the occupant operates the mode selection switch 961c to command the relax mode, the seat 900 moves backward by driving the electric motors 925 and 935. Furthermore, the seat back 920 reclines backward by driving the electric motor 965, and the ottoman 940 rotates upward by driving the electric motor 945, moving the seat 900 to the relax position.

Specifically, as shown in FIG. 60, the intermediate member 92 moves maximally backward relative to the lower member 91 along the intermediate slide mechanism 90B. Furthermore, the upper member 93 moves maximally backward relative to the intermediate member 92 along the upper slide mechanism 90C. As a result, the positions of the rear end surfaces of the lower member 91 and the intermediate member 92 coincide or nearly coincide, and the positions of the front end surfaces of the intermediate member 92 and the upper member 93 coincide or nearly coincide. At this time, the ECU 960 simultaneously drives the electric motors 925 and 935 so that the seat 900 moves backward while maintaining its up-down position unchanged. As a result, the seat 900 moves to the maximum backward position while the up-down position of the seat cushion 910 remains the same as the normal position, resulting in a retreated position moved backward from the normal position.

Furthermore, in the relax position, the ECU drives the electric motors 945 and 965 so that the seat back 920 rotates backward via the reclining mechanism 950 and the ottoman 940 rotates upward. As a result, the occupant's feet are lifted off the floor 1, and the occupant's posture becomes a relaxed posture. At this time, the front end of the lower member 91 is positioned forward of the front end of the seat cushion 910, but the occupant's feet are supported by the ottoman 940 and positioned above the lower member 91. This prevents the occupant's feet from coming into contact with the lower member 91.

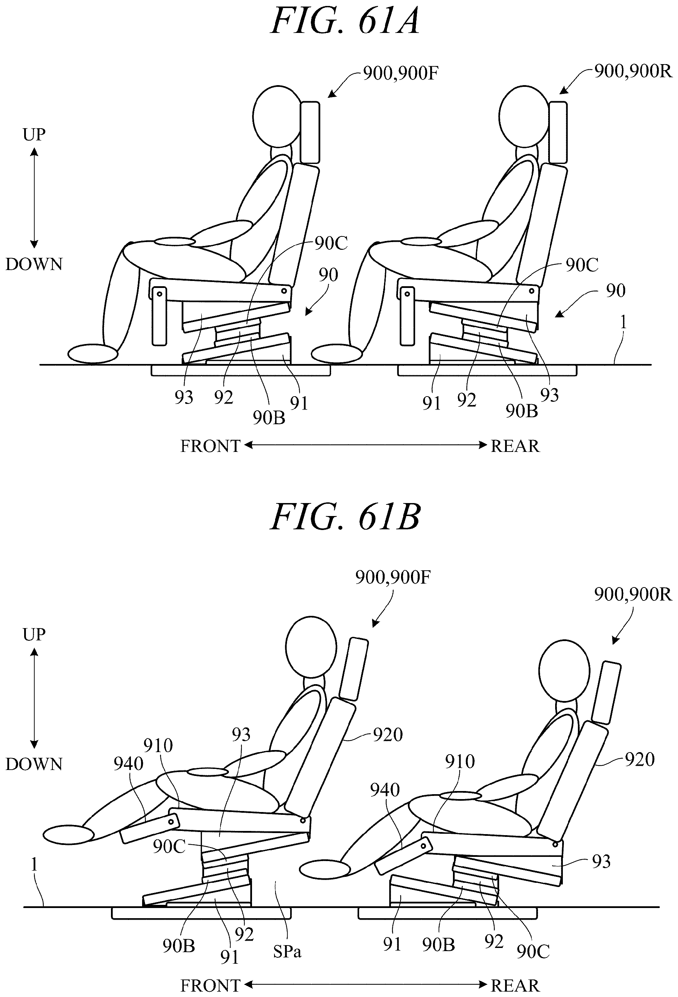

FIGS. 61A and 61B are side views showing an example where the seats 900 are arranged in two rows, namely the front row seat 900F and the rear row seat 900R. In FIG. 61A, the occupant's posture is the normal posture, and in FIG. 61B, relaxed posture. In FIGS. 61A and 61B, similar to FIG. 57A, the intermediate slide mechanism 90B (inclined surface SF1) and the upper slide mechanism 90C (inclined surface SF2) of the front row seat 900F are extended with an upward slope toward the rear. Also, similar to FIG. 57B, the intermediate slide mechanism 90B (inclined surface SF1) and the upper slide mechanism 90C (inclined surface SF2) of the rear row seat 900R are extended with a downward slope toward the rear.

When the occupants of each seat 900F, 900R operate the mode selection switch 961c to command the normal mode, the ECU960 controls each seat 900F, 900R to the normal posture (normal position). As shown in FIG. 61A, in the normal posture, the positions of the rear end surfaces of the lower member 91 and the upper member 93 are equal, and the rear end surface of the intermediate member 92 is positioned forward of the rear end surfaces of the lower member 91 and the upper member 93. In this state, the occupant's feet of the rear row seat 900R are positioned behind the rear end of the support part 90 of the front row seat 900F (the rear end of the lower member 91).

On the other hand, when the occupants of each seat 900F, 900R operate the mode selection switch 961c to command the relax mode, the ECU960 controls each seat 900F, 900R to the relax posture (relax position). As shown in FIG. 9B, in the relax posture, the intermediate member 92 of the front row seat 900F moves maximally backward along the intermediate slide mechanism 90B by the drive of the electric motor 925. The upper member 93 of the front row seat 900F moves maximally backward along the upper slide mechanism 90C by the drive of the electric motor 935. As a result, the front row seat 900F reaches a retreated position where the seat cushion 910 has moved maximally backward. At this time, a space SPa is formed behind the lower member 91 and the intermediate member 92 of the front row seat 900F and behind the seat cushion 910.

Furthermore, the seat back 920 of the front row seat 900F reclines backward by the drive of the electric motor 965, and the ottoman 940 rotates upward by the drive of the electric motor 945, resulting in the front row seat 900F being in a relax posture. When transitioning from the normal posture to the relax posture, the ECU960 simultaneously drives the electric motors 945, 965, 925, 935, moving the seat cushion 910 backward while reclining the seat back 920 backward and rotating the ottoman 940 upward. This allows the front row seat 900F to be moved to the relax posture in a short time.

Instead of driving the electric motors 945, 965, 925, 935 simultaneously, for example, the seat cushion 910 may be moved to the retracted position first, followed by reclining the seat back 920 and rotating the ottoman 940. That is, the electric motors 945, 965 may be driven after the drive of the electric motors 925, 935. The electric motor 945 may be driven first to lift the occupant's feet upward, followed by moving the seat cushion 910 backward by driving the electric motors 925, 935.

The rear row seat 900R also moves similarly to the front row seat 900F to move to a relax posture. That is, the intermediate member 92 of the rear row seat 900R moves maximally backward along the intermediate slide mechanism 90B by the drive of the electric motor 925. The upper member 93 of the rear row seat 900R moves maximally backward along the upper slide mechanism 90C by the drive of the electric motor 935. As a result, the rear row seat 900R reaches a retreated position where the seat cushion 910 has moved maximally backward.

Furthermore, the seat back 920 of the rear row seat 900R reclines backward by the drive of the electric motor 965, and the ottoman 940 rotates upward by the drive of the electric motor 945, resulting in the rear row seat 900R being in a relax posture. When transitioning from the normal posture to the relax posture, the ECU960 simultaneously drives the electric motors 945, 965, 925, 935, moving the seat cushion 910 backward while reclining the seat back 920 backward and rotating the ottoman 940 upward. Instead of driving the electric motors 945, 965, 925, 935 simultaneously, for example, the electric motor 945 may be driven first to lift the occupant's feet upward, followed by moving the seat cushion 910 backward by driving the electric motors 925, 935.

When the front row seat 900F and the rear row seat 900R move to the relax posture, the seat cushion 910 of the rear row seat 900R is positioned lower than the seat cushion 910 of the front row seat 900F. At this time, the occupant's feet of the rear row seat 900R are placed in the space SPa behind the front row seat 900F. As a result, the occupant of the rear row seat 900R can take an optimal relax posture without the feet contacting the front row seat 900F.

The ECU960 may perform a cooperative control of the front row seat 900F and the rear row seat 900R when transitioning from the normal posture to the relax posture. For example, the transition to the relax posture of the front row seat 900F may be started after the transition to the relax posture of the rear row seat 900R is completed. This prevents the occupant's feet of the rear row seat 900R from contacting the front row seat 900F during the movement of the front row seat 900F. Additionally, it can reduce the possibility of the occupant of the rear row seat 900R feeling pressure due to the movement of the front row seat 900F.

According to the present embodiment, the following functions and effects can be exerted.
(1) The vehicle seat (seat) 900 includes a seat cushion 910 extending approximately horizontally in the left-right direction (width direction) and the front-rear direction (length direction), a seat back 920 supported at the rear end (one end in the length direction) of the seat cushion 910 and extending in the up-down direction (height direction), and a support part 90 that supports the seat cushion 910 to be movable in the front-rear direction and the up-down direction relative to the floor 1 (FIGS. 53, 54). The support part 90 includes a lower member 91 supported on the floor 1, an intermediate member 92 movably supported on the lower member 91 along an inclined surface SF1 extending obliquely in the front-rear direction and the up-down direction, and an upper member 93 movably supported on the intermediate member 92 along an inclined surface SF2 extending obliquely in the front-rear direction and the up-down direction (FIGS. 56A, 56B, 57A, 57B). The seat cushion 910 is supported by the upper member 93 (FIG. 53).
   As a result, the intermediate member 92 can move in the front-rear direction and the up-down direction along the inclined surface SF1 relative to the lower member 91, and the upper member 93 can move in the front-rear direction and the up-down direction along the inclined surface SF2 relative to the intermediate member 92. Therefore, by combining the movement of the intermediate member 92 along the inclined surface SF1 and the movement of the upper member 93 along the inclined surface SF2, the position of the seat 900 can be changed to various positions in the front-rear direction and the up-down direction. A height mechanism (such as a link mechanism) for changing the seat height is unnecessary, and a simple configuration that allows the intermediate member 92 and the upper member 93 to be movable along a pair of inclined surfaces SF1, SF2 can change not only the front-rear position but also the height of the seat 900.
(2) The support part 90 includes an intermediate slide mechanism 90B that supports the intermediate member 92 to be slidable from the lower member 91 along the inclined surface SF1, and an upper slide mechanism 90C that supports the upper member 93 to be slidable from the intermediate member 92 along the inclined surface SF2 (FIGS. 53, 54). The intermediate slide mechanism 90B includes a lower rail 919 provided on the upper surface of the lower member 91 and an upper rail 928 provided on the lower surface of the intermediate member 92, which engages with the lower rail 919 (FIGS. 53,54). The upper slide mechanism 90C includes a lower rail 929 provided on the upper surface of the intermediate member 92 and an upper rail 938 provided on the lower surface of the upper member 93, which engages with the lower rail 929 (FIGS. 53, 54). As a result, the intermediate member 92 and the upper member 93 can be slid along the inclined surfaces SF1, SF2, allowing easy changes to the position of the seat 900 in the front-rear direction and the up-down direction.
(3) Either one of the inclined surfaces SF1 and SF2 slopes with an upward gradient toward the front, and the other slopes with an upward gradient toward the rear (FIGS. 56A, 56B). This allows the seat 900 to be moved in the front-rear direction while keeping the height of the seat 900 constant. Additionally, the seat 900 can be moved in the up-down direction while keeping the front-rear position of the seat 900 constant.
(4) Both inclined surfaces SF1 and SF2 slope with an upward gradient toward the front or rear (FIGS. 57A, 5B). Also in this case, the seat 900 can be moved in the front-rear direction while keeping the height of the seat 900 constant. Additionally, the seat 900 can be moved in the up-down direction while keeping the front-rear position of the seat 900 constant.
(5) The intermediate slide mechanism 90B and the upper slide mechanism 90C are arranged with their positions offset in the left-right direction (FIG. 54). This allows the lower end surface of the upper member 93 to be moved below the upper end surface of the lower member 91 without interference between the lower member 91 and the upper member 93, expanding the movement range of the seat 900.
(6) The intermediate slide mechanism 90B further includes an electric motor 925 for moving the intermediate member 92 along the inclined surface SF1 (FIG. 54). The upper slide mechanism 90C further includes an electric motor 935 that moves the upper member 93 along the inclined surface SF2 (FIG. 54). The seat 900 further includes an ECU (control unit) 960 that controls the electric motors 925, 935 so that the seat cushion 910 is positioned at a predetermined position in the front-rear direction and a predetermined position in the up-down direction (Fig. 58). Thus, by simply commanding the movement of the seat 900 in the front-rear direction and the up-down direction through switch operation, the occupant can move the seat 900 to the desired position. Furthermore, by simultaneously driving the electric motors 925 and 935 via the ECU 960, the seat 900 can be moved in the up-down direction while keeping its front-rear position fixed, or moved in the front-rear position while keeping its up-down position fixed.
(7) The seat 900 includes a front row seat 900F and a rear row seat 900R, which are arranged apart from each other in the front-rear direction (FIGS. 61A, 61B). The ECU 960 controls the respective electric motors 925, 935 of the front row seat 900F and the rear row seat 900R so that the up-down position of the seat cushion 910 of the front row seat 900F and the up-down position of the seat cushion 910 of the rear row seat 900R are different (Fig. 61B). This makes it easy to set the seat position so that the feet of the occupant of the rear row seat 900R do not contact the front row seat 900F.
(8) The support part 90 further includes a lower slide mechanism 90A that supports the lower member 91 to be slidable in the front-rear direction on the floor 1 (FIGS. 53, 54). This allows for a greater amount of movement of the seat 900.

In the above embodiment (FIGS. 53 to 61B), the lower member 91 (first member) is supported on the floor 1 as a base, but the first member may also be supported on the base via a height mechanism such as a four-bar link. In the above embodiment (FIGS. 53 to 61B), the seat cushion 910 is supported on the upper member 93 (third member), but the seat cushion may also be supported on the third member via a height mechanism such as a four-bar link. That is, the height mechanism may be retained rather than omitted. In the above embodiment (FIGS. 53 to 61B), the intermediate member 92 (second member) is configured in a substantially trapezoidal shape in side view, but the second member may be in a shape other than trapezoidal.

In the above embodiment (FIGS. 53 to 61B), an intermediate slide mechanism 90B is provided to support the intermediate member 92 to be slidable from the lower member 91 along the inclined surface SF1 (first inclined surface) extending obliquely in the front-rear direction (length direction) and the up-down direction (height direction), and an upper slide mechanism 90C is provided to support the upper member 93 to be slidable from the intermediate member 92 along the inclined surface SF2 (second inclined surface). That is, an intermediate slide mechanism 90B (first slide mechanism) is provided so that the lower rail 919 (first lower rail) on the upper surface of the lower member 91 and the upper rail 928 (first upper rail) on the lower surface of the intermediate member 92 engage, and an upper slide mechanism 90C (second slide mechanism) is provided so that the lower rail 929 (second lower rail) on the upper surface of the intermediate member 92 and the upper rail 938 (second upper rail) on the lower surface of the upper member 93 engage, but the configuration of the first slide mechanism and the second slide mechanism is not limited to the above.

In the above embodiment (FIGS. 53 to 61B), the intermediate member 92 is moved along the inclined surface SF1 by the electric motor 925 (first actuator), and the upper member 93 is moved along the inclined surface SF2 by the electric motor 935 (second actuator), but the configuration of the first actuator and the second actuator may be any. As long as the position of the seat 900 is changed in response to the operation of the operation part 961, the configuration of the ECU 960 as a control unit for controlling the electric motors 925, 935 may also be any.

In the above embodiment (FIGS. 61A, 61B), the front row seat 900F (first vehicle seat) and the rear row seat 900R (second vehicle seat) are each configured as a vehicle seat 900 having a support part 90, but either the front row seat 900F or the rear row seat 900R may be configured as a vehicle seat 900 having a support part 90. In the above embodiment (FIGS. 53 to 61B), the lower member 91 is supported to be slidable in the front-rear direction on the floor 1 via the lower slide mechanism 90A (third slide mechanism), but the third slide mechanism may be omitted.

In the above embodiment (FIGS. 53 to 61B), an ottoman 940 is provided to be rotatable at the front end of the seat cushion 910, but the tip of the ottoman 940 may be configured to be extendable. A folding mechanism may be provided in the seat back 920 so that the seat back 920 rotates in the front-rear direction between the upper end and the lower end of the seat back 920. A seat angle adjustment mechanism may be provided in the seat cushion 910 to adjust the angle of its seating surface 914.

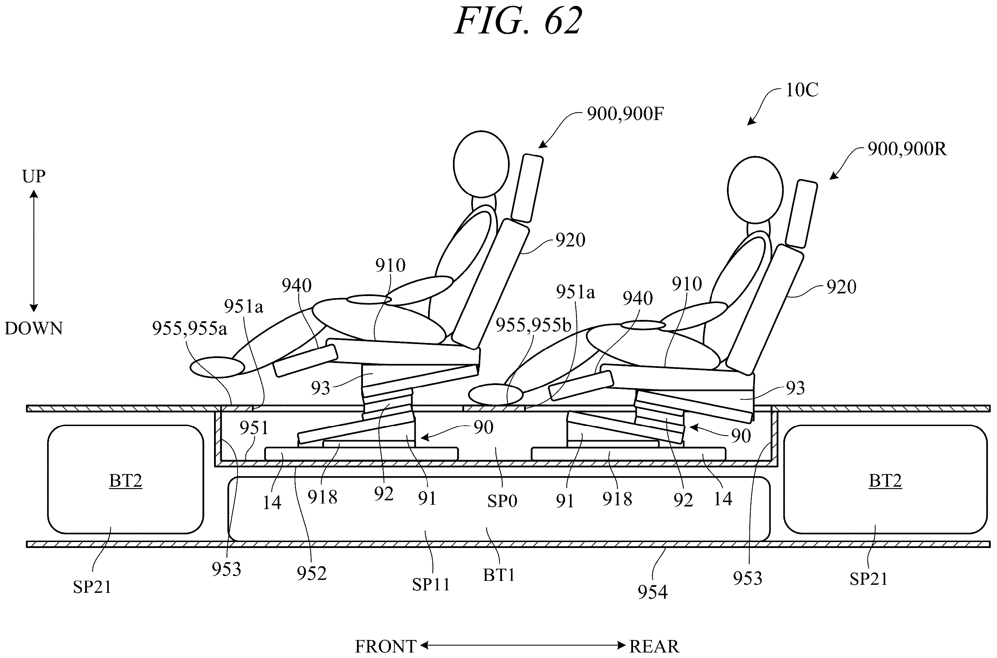

In the above embodiment (FIGS. 53 to 61B), the lower end of the support part 90 is supported by the floor 1, but if the support part 90 protrudes upward from the floor 1, it may hinder the movement of occupants within the vehicle. Therefore, to facilitate the movement of occupants within the vehicle, at least part of the support part 90 may be arranged below the floor 1. Hereinafter, such a vehicle will be described with reference to FIGS. 62 to 67.

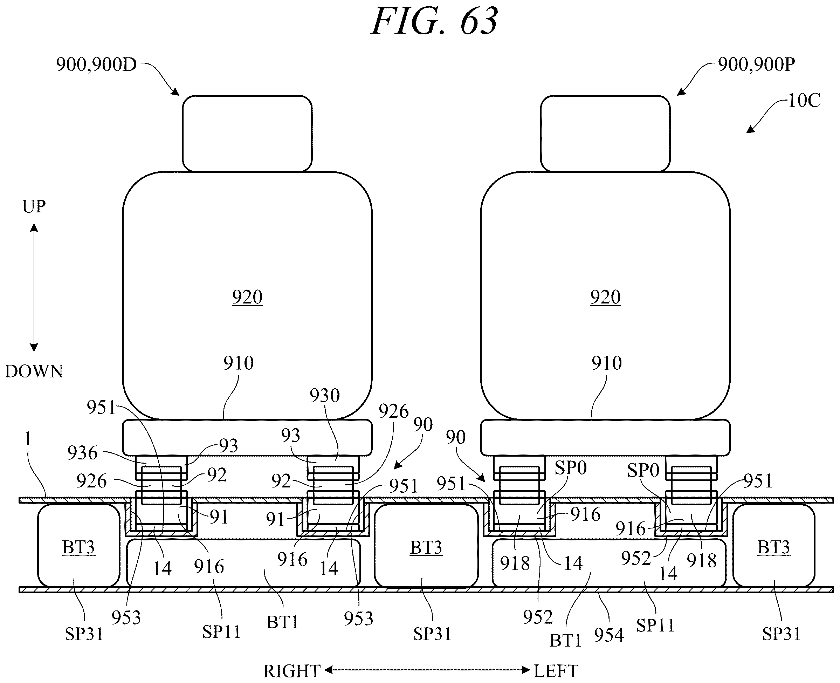

Fig. 62 is a side view schematically showing the main part configuration of a vehicle (vehicle) 10C, and Fig. 63 is a front view. In Fig. 62, as in Fig. 61B, the front row seat 900F and the rear row seat 900R are shown. The seat 900 is in a relaxing posture corresponding to the relaxation mode. Fig. 63 shows two seats 900 (driver's seat 900D and passenger seat 900P) arranged side by side.

As shown in FIGS. 62 and 63, a pair of left and right recesses 951, 951 (a total of 4 recesses 951) of predetermined depth are provided below the left and right seats 900 on the floor 1. The recess 951 is formed by the support frame 952 on the bottom surface and the front, rear, left, and right side walls 953 rising from the edge of the support frame 952, forming a substantially box-shaped storage space SP0. The lower rail 14 of the lower slide mechanism 90A is provided on the upper surface of the support frame 952. The lower frame 916 of the support part 90 is arranged in the storage space SP0. The upper rail 918 on the bottom surface of the lower frame 916 is slidably engaged with the lower rail 14.

As shown in Fig. 63, the width (left-right direction length) of the recess 951 is larger than the width of the lower frame 916. In Fig. 63, the left-right direction positions of the lower frame 916 and the upper frame 936 of the support part 90 are the same, but as in Fig. 54, the left-right direction positions of the lower frame 916 and the upper frame 936 may be different. As shown in Fig. 62, the length (front-rear direction length) of the recess 951 is longer than the length from the front end of the lower rail 14 of the front row seat 900F to the rear end of the lower rail 14 of the rear row seat 900R. More specifically, the length of the recess 951 is set in consideration of the maximum movement amount in the front-rear direction of the support part 90 so that the recess 951 does not interfere with the support part 90.

Part of the opening 951a above the recess 951, that is, part of the opening 951a above the front end of the recess 951 and above the intermediate part in the front-rear direction of the recess 951, is covered with a lid 955. The lid 955 is provided at a position that does not interfere with the support part 90. Specifically, a lid 955a is provided in front of the front row seat 900F, and a lid 955b is provided in front of the rear row seat 900R and behind the front row seat 900F. By covering part of the opening 951a with the lid 955, the occupant can place their feet on the upper surface of the lid 955.

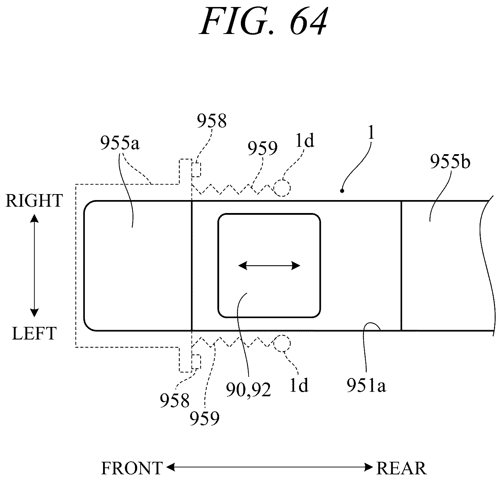

The lid 955 may be configured to be movable in the front-rear direction along the floor 1. For example, as shown in Fig. 64, which is a plan view of the lid 955, the front lid 955a may be elongated in the front-rear direction and supported to be movable in the front-rear direction along the floor 1, and the support part 1d provided on the bottom surface of the floor 1 and the rear end of the lid 955a may be connected by a spring 959, so that the lid 955a is always biased rearward. In this case, a stopper 958 may be provided on the bottom surface of the floor 1 to limit the rearward movement of the lid 955a. According to this configuration, when the support part 90 moves forward and the support part 90 (e.g., intermediate member 92) contacts the front end of the lid 955a, the lid 955a is pushed forward against the biasing force of the spring 959. This allows the lid 955a to be provided close to the support part 90, and the lid 955a can be enlarged to cover the opening 951a of the recess 951 widely with the lid 955. The lid 955b may also be configured to be movable in the front-rear direction.

As shown in FIGS. 62 and 63, a substantially box-shaped space SP11 is formed between the support frame 952 and the bottom frame 954 of the vehicle body below the seat 900. The space SP11 extends in the front-rear direction from the front end to the rear end of the recess 951, and extends in the left-right direction from the right end surface of the right recess 951 to the left end surface of the left recess 951 among the pair of left and right recesses 951, 951. A thin battery BT1, which is substantially rectangular in plan view, is housed in the space SP11.

As shown in Fig. 62, a substantially box-shaped elongated space SP21 is formed in the left-right direction between the floor 1 and the bottom frame 954 in front of and behind the seat 900, extending from the right end to the left end of the vehicle body. A battery BT2, which is substantially rectangular in plan view, is housed in each space SP21. Battery BT2 is longer in the up-down direction than battery BT1.

As shown in FIG. 63, on the left and right sides of seat 900, specifically to the right of the driver's seat 900D, to the left of the passenger seat 900P, and to the left of the driver's seat 900D and right of the passenger seat 900P, an approximately box-shaped elongated space SP31 is formed between the floor 1 and the bottom frame 954 in the front-rear direction. In each space SP31, a battery BT3, which is approximately rectangular in plan view, is housed. Battery BT3 is longer in the up-down direction than battery BT1.

In this way, since the lower end of the support part 90 is placed in the storage space SP0 of the recess 951 of the floor 1, the region of the support part 90 protruding from the floor 1 is reduced, and it is possible to prevent the movement of passengers in the cabin from being obstructed by the support part 90. Additionally, since batteries BT1, BT2, and BT3 are placed in the space SP11 below the recess 951 and in the spaces SP21, SP31 on the front, rear, left, and right sides of the recess 951, sufficient power can be supplied from these batteries when the vehicle 10C is, for example, an electric vehicle.

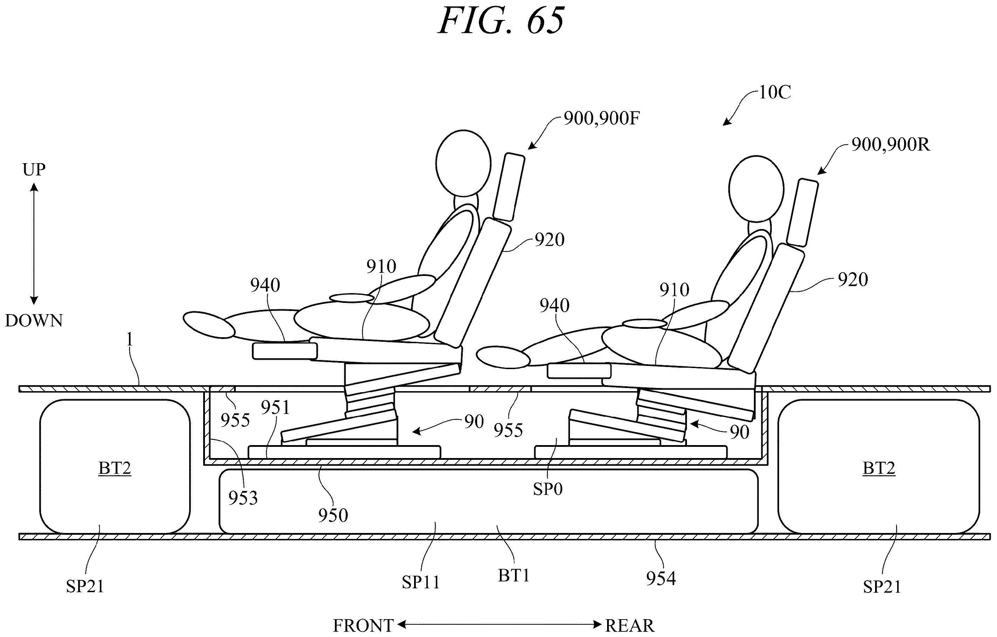

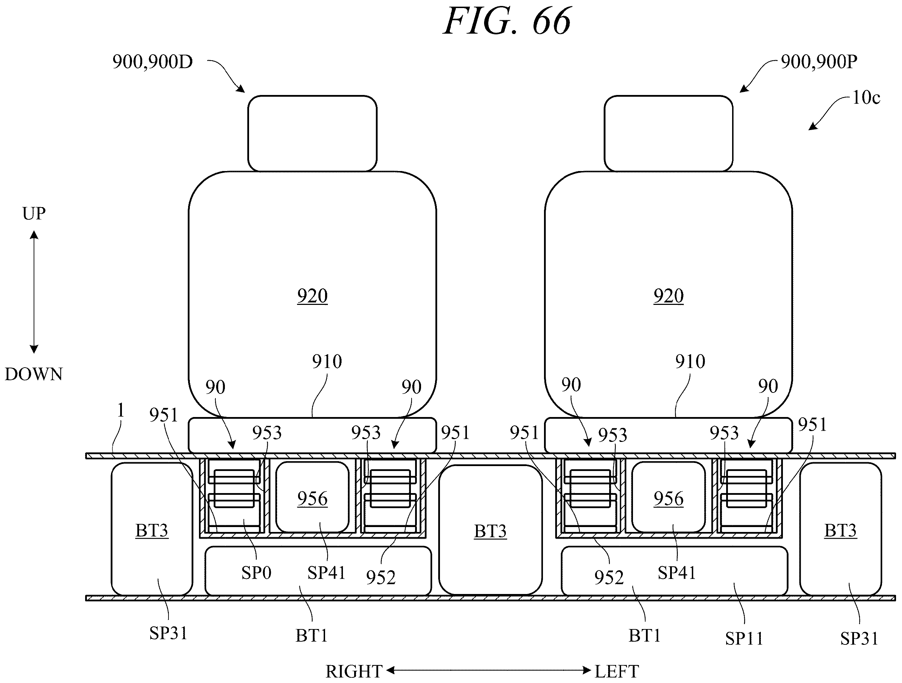

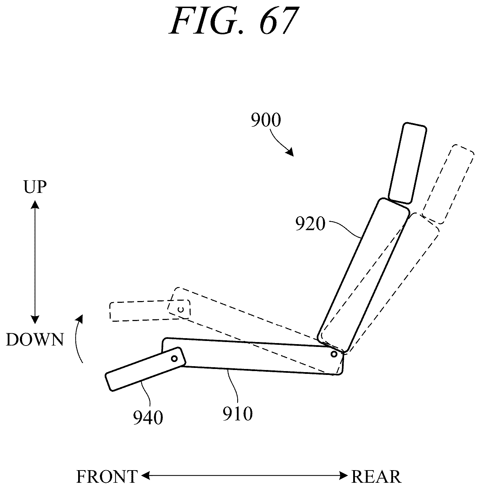

FIGS. 65 and 66 are side and front views of the vehicle 10C showing examplary modifications of FIGS. 62 and 63, respectively. In FIGS. 65 and 66, the depth of the recess 951 is deeper than that in FIGS. 62 and 63, and more areas of the support part 90 are accommodated in the recess 951. The entire support part 90 can also be accommodated in the recess 951. If the seat cushion 910 of seat 900 or the passenger's feet interfere with the floor 1, the thigh bar angle (the angle between the horizontal plane and the seat cushion 910) of seat 900 may be changed. For example, the seat cushion 910 may be tilted in the direction of the arrow in FIG. 67, and the thigh bar angle may be increased as shown by the dotted line.

In the examples of FIGS. 65 and 66, as shown in FIG. 66, an approximately box-shaped space SP41 surrounded by the support frame 952 and the side wall 953 is formed between the left and right recesses 951, 951 of each seat 900F, 900P. Space SP41 is elongated in the front-rear direction and can accommodate various items 956. For example, an insertion and removal entrance for item 956 can be provided at the front or rear of space SP41, allowing item 956 to be inserted into or removed from space SP41 through the entrance. The insertion and removal of item 956 may also be performed by moving seat 900 in the front-rear direction.

According to this embodiment, the following additional effects can be achieved.
(1) The vehicle (vehicle) 10C with seat 900 has a floor 1 that extends approximately horizontally, and the support part 90 is positioned below the floor 1 (FIGS. 62-65). This reduces the region of the support part 90 protruding from the floor 1, thereby preventing obstruction of passenger movement within the cabin.
(2) The upper end of the lower member 91 is positioned below the floor 1 (FIGS. 62-65). This prevents the feet of passengers seated on seat 900 from contacting the lower member 91.
(3) The vehicle 10C includes a support frame 952 and side wall 953 that form a recessed storage space SP0 for accommodating the support part 90 in the floor 1, and a lid 955 that extends along the floor 1 and covers part of the opening 951a of the upper surface of the storage space SP0 (FIGS. 62, 64). This prevents passengers' feet and luggage from falling into the storage space SP0.
(4) The vehicle 10C further includes a battery positioned below the floor 1. The battery includes battery BT1 positioned below seat 900 and batteries BT2, BT3 positioned on the sides of seat 900 (FIGS. 62-65). This allows for the installation of many batteries in vehicle 10C, providing sufficient power to the vehicle (e.g., an electric vehicle).
(5) The support part 90 includes a pair of frame parts spaced apart in the left-right direction, namely a pair of left and right lower frames 916, 916, a pair of left and right intermediate frames 926, 926, and a pair of left-and right upper frames 936, 936 (FIG. 63). Between these pairs of left and right frame parts, a space SP41 is formed to accommodate item 956 (FIG. 65). This allows for effective use of the space below seat 900.
(6) Seat 900 further includes an ottoman 940 pivotally supported at the front end of the seat cushion 910 to hold the passenger's feet above the floor 1 (FIGS. 62, 64). This prevents the passenger's feet from interfering with the floor 1.

In the above embodiment (FIGS. 62, 65), part of the opening 951a of the upper surface of the recess 951 is covered with a lid 955, but the position of the lid is not limited to the above as long as it does not obstruct the movement of the support part 90. The entire opening 951a may be covered with the lid. A cutout(s) corresponding to the outer shape of the support part 90 may be provided in the lid 955 (lid part). In the above embodiment (FIGS. 62, 63), the base which supports seat 900, namely the support frame 952, is provided on the bottom surface of the recess 951, and the height of the base is made the same for each seat 900F, 900R, 900D, 900P, but the height of the base may be different for each seat 900F, 900R, 900D, 900P.

In the above embodiment (FIG. 62), the support frame 952 and the side wall 953 form a storage space SP0 for accommodating the support part 90, but the configuration of the storage space forming part is not limited to the above. In the above embodiment (FIGS. 62, 63), the batteries are placed below the floor 1. More specifically, battery BT1 (first power storage device) is placed below seat 900, and batteries BT2, BT3 (second power storage devices) are placed on the sides (front, rear, left, and right) of seat 900, but the arrangement of the power storage devices is not limited to the above. In the above embodiment (FIG. 66), a storage space SP41 for item 956 is formed between the pair of left and right frame parts of the support part 90, namely between the pair of lower frames 916, 916, the pair of intermediate frames 926, 926, and the pair of upper frames 936, 936, but the storage space can also be formed in other locations.

The above describes an example of applying vehicle seat 900 to an automotive, but the vehicle seat can also be applied to other vehicles such as air vehicle or ships, not just automotives. The vehicle seat 900 described above can be modified for use as the vehicle seat 100 in FIG. 1A. That is, among the pair of left and right side end parts of the pair of left and right vehicle seats 900, 900, the end face of the side end part (first side end portion) on the other side in the left-right direction (e.g., left side) of the seat cushion 910 of the seat 900 on one side in the left-right direction (e.g., right side) is positioned on one side in the left-right direction (e.g., left side) relative to the end face of the side end portion (second side end portion) on one side in the left-right direction (e.g., right side) of the seat cushion 910 of the seat 800 on the other side in the left-right direction (e.g., left side), and a relief portion may be provided on at least one of the rear end portion of the first side end portion and the front end portion of the second side end portion to prevent interference between the first side end portion and the second side end portion.

The above description is merely an example, and the invention is not limited by the above embodiments and modifications as long as the features of the invention are not impaired. It is also possible to arbitrarily combine one or more of the above embodiments and modifications, and to combine the modifications with each other.

### REFERENCE SIGNS LIST

1 floor, 2 front windshield, 10 compact vehicle, 10b vehicle, 11 front wheel, 11b front end surface, 12a rear end surface, 20 support part, 21,22 link, 25f front upper rail, 25r rear upper rail, 50 air vehicle, 90 support part, 91 lower member, 92 intermediate member, 93 upper member, 100 vehicle seat, 101 driver's seat, 102 passenger seat, 103 auxiliary seat, 110 seat cushion, 114 notch, 1151 lower rail, 120 seat back, 135 recess, 161 side wall, 162 front wall, 163 upper wall, 200 vehicle seat, 210 seat cushion, 214 seating surface, 216 bottom surface, 220 seat back, 221 central frame, 222 split seat back, 224 seating surface, 226 rear surface, 300 vehicle seat, 320 seat back, 323 skin, 352 vibration actuator, 327 permanent magnet, 356 permanent magnet, 400 vehicle seat, 410 seat cushion, 420 seat back, 424 seating surface, 420f front surface portion, 420r rear surface portion, 421 seat back frame, 425 mesh member, 440 front plate, 450 rear plate, 500 air vehicle body, 500a cabin, 507 bottom, 510 vehicle seat, 515 floor, 700 seat, 710 seat cushion, 720 seat back, 721 front link, 800 vehicle seat, 900 vehicle seat, 910 seat cushion, 920 seat back

## Claims

1. A vehicle seat having a seat cushion and a seat back and mounted on a vehicle, comprising:
a first seat having a first seat cushion and a first seat back; and
a second seat having a second seat cushion and a second seat back, and arranged diagonally behind the first seat, wherein
a rear end portion of the first seat cushion is positioned behind a front end portion of the second seat cushion,
the first seat cushion and the second seat cushion each has a pair of left and right side end portions,
an end face of a first side end portion on one side in a left-right direction, the first side end portion being on a side of the second seat and being one of the pair of left and right side end portions of the first seat cushion, is positioned on the one side in the left-right direction relative to an end face of a second side end portion on the other side in the left-right direction, the second side end portion being on a side of the first seat and being one of the pair of left and right side end portions of the second seat cushion, and
at least one of a rear end portion of the first side end portion and a front end portion of the second side end portion includes a relief portion so as to prevent an interference between the first side end portion and the second side portion.

2. The vehicle seat according to claim 1, wherein
the relief portion has a notch provided in the at least one of the rear end portion of the first side end portion and the front end portion of the second side end portion.

3. The vehicle seat according to claim 1 or 2, further comprising
a third seat arranged behind the first seat and on the other side in the left-right direction of the second side end portion of the second seat.

4. The vehicle seat according to claim 3, wherein
a width in the left-right direction of the third seat is narrower than a width in the left-right direction of the first seat.

5. The vehicle seat according to claim 4, wherein
a floor of the vehicle in which the third seat is installed includes a storage portion formed in a concave shape, the storage portion being configured to accommodate the third seat when the third seat is not in use.

6. The vehicle seat according to claim 1 or 2, further comprising:
a plurality of first seat rails arranged in the left-right direction and extending in a front-rear direction on an upper surface of a floor of the vehicle to support the first seat movably in the front-rear direction; and
a plurality of second seat rails arranged in the left-right direction and extending in the front-rear direction on the upper surface of the floor to support the second seat movably in the front-rear direction, wherein
a part of the plurality of first seat rails is common to a part of the plurality of second seat rails.

7. The vehicle seat according to claim 1, wherein
the vehicle seat is deformable from a usable posture configured to seat a user to an unusable posture configured not to seat the user, and
the seat back is configured so that a width of the seat back in the unusable posture is narrower than a width of the seat back in the usable posture.

8. The vehicle seat according to claim 7, further comprising
a rotating device configured to support the seat cushion rotatably around an axis extending in a vertical direction.

9. The vehicle seat according to claim 1, comprising:
a vibration actuator driving a vibrator embedded in at least one of the seat cushion and the seat back;
a skin forming a seating surface on which a user sits;
a first permanent magnet arranged on a back side of the skin; and
a second permanent magnet attached to a surface of the vibrator so as to vibrate by a drive of the vibration actuator, wherein
the second permanent magnet is arranged within a range interacting with the first permanent magnet.

10. The vehicle seat according to claim 1, wherein
the vehicle seat is mounted in an air vehicle, the air vehicle including an air vehicle body having a cabin equipped with a plurality of vehicle seats configured to seat passengers and a propulsion device configured to generate a thrust,
the vehicle seat is rotatably supported at a bottom portion of the air vehicle body so that a posture of the vehicle seat is changeable between a first posture corresponding to a first mode in which the passengers are transported and a second posture corresponding to a second mode in which a cargo is transported, and
the vehicle seat is erected on an upper surface of a floor of the cabin in the first posture, and accommodated below the floor in the second posture.

11. The vehicle seat according to claim 1, wherein
at least one of the seat cushion and the seat back includes:
a surface portion having a seating surface on which an occupant sits;
a back surface portion on an opposite side of the seating surface; and
a support portion configured to support edge portions of the surface portion and the back surface portion so that the surface portion and the back surface portion face each other through an internal space,
the surface portion includes a surface member forming the seating surface and having a mesh structure, and
the back surface portion includes a movable member configured to operate to open or block a communication between the internal space and a space outside the back surface portion.

12. The vehicle seat according to claim 1, further comprising
a support part configured to support the seat cushion movably in a front-rear direction and an up-down direction from a base portion, wherein
the support part includes:
a first moving body provided slidably in the front-rear direction relative to the base portion;
a second moving body provided slidably in the front-rear direction relative to the base portion, and disposed behind the first moving body so as to be movable relative to the first moving body in the front-rear direction;
a first link member having one end portion and the other end portion respectively supported by the first moving body and the seat cushion so as to be rotatable forward and rearward; and
a second link member having one end portion and the other end portion respectively supported by the second moving body and the seat cushion so as to be rotatable forward and rearward, the second link member being supported behind the first link member.

13. The vehicle seat according to claim 1, wherein
the vehicle seat is mounted on an automotive vehicle so as to face a front windshield of the automotive vehicle, the automotive vehicle having front wheels on left and right sides, and
the automotive vehicle includes:
a space forming part configured to form a surplus space in which the vehicle seat is movable, the surplus space being formed in front of and below the front windshield and in front of the vehicle seat; and
a support part configured to movably support the vehicle seat from a first position where a front end portion of the vehicle seat is positioned behind a center of the front wheels to a second position where the front end portion is positioned in front of the center of the front wheels.

14. The vehicle seat according to claim 1, wherein
among a width direction, a length direction, and a height direction orthogonal to each other, the seat cushion extends substantially horizontally in the width direction and the length direction,
the seat back is supported by one end portion in the length direction of the seat cushion and extends in the height direction,
the vehicle seat further comprises a support part configured to movably support the seat cushion in the length direction and the height direction relative to a base portion,
the support part includes a first member supported by the base portion, a second member movably supported by the first member along a first inclined surface extending obliquely in the length direction and the height direction, and a third member movably supported by the second member along a second inclined surface extending obliquely in the length direction and the height direction, and
the seat cushion is supported by the third member.
